# EUROPÄISCHE PATENTSCHRIFT

(11) **EP 2 837 852 B1**
(45) Veröffentlichungstag und Bekanntmachung des Hinweises auf die Patenterteilung: **23.03.2016**
(21) Anmeldenummer: 14002257.5
(22) Anmeldetag: 01.07.2014
(51) Int. Cl.: F16H 63/18, F16H 63/30, F16D 28/00, F16H 3/00, F16H 3/093

(54) **Schaltanordnung mit einer Kupplungs- und Synchronisierungseinrichtung für ein Getriebe**
Shift assembly with a clutch and synchronisation device for a transmission
Dispositif de changement de vitesse avec un dispositif de couplage et de synchronisation pour une boîte de vitesses

(30) Priorität: 01.08.2013 DE 102013012856; 01.08.2013 DE 202013006944 U; 01.08.2013 DE 202013007983 U; 01.08.2013 DE 202013007987 U
(43) Veröffentlichungstag der Anmeldung: 18.02.2015
(73) Patentinhaber: GM Global Technology Operations LLC, Detroit, MI 48265-3000 (US)
(72) Erfinder: Remmler, Mathias, 67294 Mauchenheim (DE)
(74) Vertreter: Spitzfaden, Ralf

(56) Entgegenhaltungen:
- EP-A1- 0 206 734
- EP-A1- 2 182 247
- DE-A1- 10 160 026
- US-A- 4 138 006
- US-A- 4 485 687

## Beschreibung

Die Erfindung betrifft des Gebiet der Schaltgetriebe für ein Kraftfahrzeug.

Solche Schaltgetriebe werden beispielsweise im Antriebsstrang eines Kraftfahrzeugs vorgesehen, um die Antriebsleistung einer Antriebseinheit, beispielsweise ein Elektromotor oder ein Verbrennungsmotor, auf ein angetriebenes Laufrad zu übertragen.

Aus DE 101 60 026 A1 ist eine Schaltanordnung für ein schaltbares Getriebe bekannt, bei der eine Schaltmuffe zwischen einer ersten Stellung, in der ein erstes Losrad der Schaltanordnung gegen eine Welle drehbar ist, und einer zweiten Stellung bewegbar ist, in der sie das erste Losrad drehfest mit der Welle verbindet, eine Reibkupplungsbaugruppe zwischen einer ersten Stellung, in der zwei Teile der Reibkupplungsbaugruppe gegeneinander drehbar sind, und einer zweiten Stellung bewegbar ist, in der die zwei Teile reibschlüssig verbunden sind, und ein Betätigungselement in einem Freiheitsgrad zwischen einer Neutralstellung und einer ersten Schaltstellung über eine Zwischenstellung bewegbar ist, wobei in der Neutralstellung die Schaltmuffe und die Reibkupplungsbaugruppe jeweils in ihrer ersten Stellung sind, in der Zwischenstellung die Schaltmuffe in ihrer zweiten Stellung und die Reibkupplungsbaugruppe in ihrer ersten Stellung ist, und in der ersten Schaltstellung die Schaltmuffe und die Reibkupplungsbaugruppe jeweils in ihrer zweiten Stellung sind. Das Betätigungselement treibt die Bewegungen von Schaltmuffe und Reibkupplungsbaugruppe jeweils über Kugeln an, die in Rillen variabler Tiefe des Betätigungselements sowie von dem Betätigungselement gegenüberliegenden Scheiben abrollen.

Eine Aufgabe der Erfindung liegt darin, eine verbesserte und vereinfachte Schaltanordnung für ein Schaltgetriebe, ein Schaltgetriebe, einen Antriebsstrang für ein Kraftfahrzeug sowie ein damit ausgerüstetes Kraftfahrzeug anzugeben.

Die Aufgabe wird einer Ausgestaltung der Erfindung zufolge gelöst durch eine Schaltanordnung mit den Merkmalen des Anspruchs 1

So können in einer kontinuierlichen, mit einfachen Mitteln anzutreibenden Bewegung die Stadien des Einlegens eines Gangs sukzessive durchlaufen werden.

Einer ersten Ausgestaltung zufolge ist die oben erwähnte Welle eine Eingangswelle der Schaltanordnung, und von den zwei Teilen der Reibkupplungsbaugruppe ist das eine drehfest mit der Eingangswelle und das andere drehfest mit der Schaltmuffe verbunden.

Einer zweiten Ausgestaltung zufolge ist die besagte Welle eine Nebenwelle, und das erste Losrad kämmt mit einem Rad einer zweiten Welle, die über die Reibkupplungsbaugruppe lösbar reibschlüssig mit einer Eingangswelle verbindbar ist.

Bei dieser zweiten Welle kann es sich insbesondere um eine Hohlwelle handeln, die sich konzentrisch um die Eingangswelle erstreckt.

Bei beiden Ausgestaltungen kann eine Schaltmuffen-Axialbetätigungseinheit eine Schaltwalze sowie einen in einer Steuernut der Schaltwalze geführten Schaltpin aufweisen. Wenn die Steuernut sich wenigstens in einem Abschnitt schraubenlinienförmig um die Schaltwalze erstreckt, bewirkt eine Drehung von Schaltwalze und Schaltpin gegeneinander eine Axialbewegung, die zum Antreiben einer Bewegung der Schaltmuffe genutzt werden kann.

Im einfachsten Falle kann der Schaltpin fest mit dem Betätigungselement verbunden sein. Dies ist insbesondere dann zweckmäßig, wenn das Betätigungselement um dieselbe Welle drehbar ist, die auch die Schaltmuffe trägt.

Ein Aufbau, bei dem die Schaltmuffen-Axialbetätigungseinheit und das Betätigungselement über eine Verzahnung miteinander im Eingriff stehen, ist insbesondere dann sinnvoll, wenn das Betätigungselement um eine andere Achse drehbar ist als die Schaltmuffe.

Die Schaltwalze sollte relativ zur Schaltmuffe axial fest sein, um axiale Stellbewegungen auf die Schaltmuffe zu übertragen. Gleichzeitig sollte sie in Umfangsrichtung gegenüber der Schaltmuffe drehbar sein, um im Betrieb einer Drehung der Welle und der von ihr getragenen Schaltmuffe nicht folgen zu müssen.

Wenn die Schaltwalze gehäuseseitig drehfest fixiert und gleichzeitig axial beweglich ist, kann sie durch eine Drehung des Schaltpins um die Achse der Schaltwalze zu einer Axialbewegung angetrieben werden.

In einer Weiterbildung der vorstehenden Schaltanordnung ist das Betätigungselement aus der Neutralstellung ferner in eine zweite Schaltstellung bewegbar, und die Schaltmuffe ist zwischen der ersten Stellung und einer dritten Stellung axial bewegbar, wobei in der dritten Stellung ein zweites Losrad formschlüssig mit der Schaltmuffe verbunden ist. So können, je nachdem in welche Richtung das Betätigungselement aus der Neutralstellung ausgelenkt wird, zwei verschiedene Gänge eingelegt werden.

Bei dieser Weiterbildung kann die erste Stellung der Schaltmuffe einem Eingriff des Schaltpins in einen zentralen Bereich eines schraubenlinienförmigen Abschnitts der Steuernut entsprechen, so dass, je nachdem in welche Richtung das Betätigungselement aus der Neutralstellung ausgelenkt wird, die Schaltmuffe in entgegengesetzte Richtungen axial verlagert wird.

Einer alternativen Weiterbildung zufolge ist das Betätigungselement aus der Neutralstellung ebenfalls in eine zweite Schaltstellung bewegbar, allerdings ist hier eine zweite Schaltmuffe an das Betätigungselement gekoppelt, um, wenn das Betätigungselement in der Neutralstellung ist, eine erste Stellung einzunehmen, in der ein zweites Losrad gegen eine Welle drehbar ist, und, wenn es in der zweiten Schaltstellung ist, eine zweite Stellung einzunehmen, in der sie das zweite Losrad drehfest mit der Welle verbindet. Auch so können je nach Richtung der Auslenkung verschiedene Gänge eingelegt werden.

Bei dieser Weiterbildung kann jeder Schaltmuffe eine eigene Schaltmuffen-Axialbetätigungseinheit zugeordnet sein, und die erste Stellung der Schaltmuffe kann in den Schaltmuffen-Axialbetätigungseinheiten jeweils einem Eingriff des Schaltpins an der Grenze zwischen einem schraubenlinienförmigen Abschnitt und einem sich in Umfangsrichtung erstreckenden Abschnitt der Steuernut entsprechen. Wenn bei einer Drehung der Schaltpin in den sich in Umfangsrichtung erstreckenden Abschnitt einrückt, findet keine axiale Bewegung von Schaltpin und Schaltwalze gegeneinander statt. So kann bei geeigneter Anordnung der Schaltmuffen-Axialbetätigungseinheiten erreicht werden, dass bei einer Drehung des Betätigungselements zwischen der Neutralposition und der ersten Schaltstellung jeweils nur eine der Schaltmuffen-Axialbetätigungseinheiten betätigt wird und dass bei einer Drehung zwischen der Neutralposition und der zweiten Schaltstellung nur die andere Schaltmuffen-Axialbetätigungseinheit betätigt wird.

Die Wellen des ersten und des zweiten Losrades können voneinander verschieden sein, insbesondere kann die Welle, die das zweite Losrad trägt, ferner ein Rad tragen, das mit dem ersten Losrad kämmt, und/oder die Welle, die das erste Losrad trägt, kann ferner ein mit dem zweiten Losrad kämmendes Rad tragen.

An den schraubenlinienförmigen Abschnitt der Steuernut schließen sich jeweils Kupplungsbetätigungsabschnitte an, die in Umfangsrichtung der Schaltwalze verlaufen, so dass, wenn der Schaltpin sich durch diese Abschnitte bewegt, die Schaltmuffe und der Schaltpin nicht axial gegeneinander verschoben werden. So kann die Schaltmuffen-Axialbetätigungseinheit in Ruhe gehalten werden, während die Reibkupplungsbaugruppe von der ersten in die zweite Stellung übergeht.

Die Reibkupplungsbaugruppe kann eine Lamellenkupplung umfassen, deren eines Teil ein Paket von in einem ersten Lamellenträger aufgenommenen ersten Lamellen und deren anderes Teil ein Paket von in einem mit der Schaltmuffe in Verbindung stehenden zweiten Lamellenträger aufgenommenen zweiten Lamellen ist. Der Lamellenträger des einen Teils kann insbesondere ein mit der Eingangswelle in Verbindung stehender Kupplungstopf bzw. äußerer Lamellenträger sein. Der Lamellenträger des anderen Teils kann ein in den Kupplungstopf eingreifender innerer Lamellenträger sein. Dabei werden im Folgenden die Bezeichnungen erster bzw. zweiter Lamellenträger bevorzugt, damit die Beschreibung auch deren kinematische Umkehr von "innen" und "außen" umfasst.

Der Freiheitsgrad des Betätigungselements ist vorzugsweise ein Drehfreiheitsgrad. Um die Drehung des Betätigungselements in eine axiale Bewegung zum Bewegen der Reibkupplungsbaugruppe zwischen der ersten und der zweiten Stellung umzusetzen, kann die Kupplungs-Axialbetätigungseinheit wenigstens einen - vorzugsweise kugelförmigen - Betätigungskörper umfassen, der mit zusammen dem Betätigungselement um dessen Achse drehbar und durch Kontakt mit einer Betätigungskontur gekoppelt an die Drehung axial bewegbar ist.

Um ein Verkanten der Kupplungs-Axialbetätigungseinheit zu vermeiden, sollten mindestens zwei, vorzugsweise drei Betätigungskörper vorgesehen und vorzugsweise um die Achse des Betätigungselements herum verteilt sein.

Häufig wird dabei ein Axiallager zwischen dem Betätigungselement und der Reibkupplungsbaugruppe vorgesehen. Ein Lagerring des Wälzlagers kann als Druckplatte zum Verteilen der einer den Betätigungskörpern punktuell übertragenen Kraft auf den gesamten Umfang der Kupplungsbaugruppe dienen.

Die Betätigungskontur ist dabei in einer ersten Ausführungsform in einer der Druckplatte gegenüber liegenden Lauffläche des Axiallagers vorgesehen und dabei dem jeweiligen Betätigungsköper zugewandt, wobei die Betätigungskörper dann jeweils auf einer Achse drehbar gelagert sind, wobei die Achse ihrerseits wiederum fest mit dem Betätigungselement verbunden ist.In einer anderen Ausführungsform ist die Betätigungskontur im Getriebegehäuse oder daran befestigt vorgesehen, wobei die Betätigungskörper dann axial verschieblich im Betätigungselement angeordnet sind.

Die Schaltanordnung hat dabei mindestens zwei Betätigungskörper. In einer Ausführungsform sind z.B. drei Betätigungskörper vorgesehen. Es können auch mehrere Betätigungskörper vorgesehen sein, diese können dann gleichmäßig zueinander beabstandet angeordnet sein. Vorteilhafterweise sind dann benachbarte Betätigungskonturen vorgesehen, die auf die Betätigungskörper wirken, die in Umfangsrichtung z.B. voneinander um 120 Grad beabstandet sind.

Als Betätigungskörper bzw. Wälzkörper sind sowohl Kugeln als auch Walzen denkbar.

Wenn die Betätigungskörper axial fest im Betätigungselement sitzen, dann ist die Kontur bzw. die Betätigungskontur bzw. die Rampe oder Rille auf einer der Druckplatte gegenüberliegenden Seite des Axiallagers vorzusehen und dabei dem jeweiligen Betätigungsköper zugewandt, wobei die Betätigungskontur bzw. die Rampe als solche rotatorisch fixiert und axial frei beweglich ist. Umgekehrt, wenn die Betätigungskontur auf einer der Druckplatte gegenüberliegenden Seite des Betätigungselements vorgesehen wird, z.B. am Getriebegehäuse, dann sind die Betätigungskörper im Betätigungselement axial beweglich auszubilden, damit die Hubbewegung der Betätigungskörper auf die Druckplatte wirken kann. Wenn die Betätigungskontur in der der Druckplatte gegenüberliegenden Lauffläche des Axiallagers sitzt, dann ist diese Betätigungskontur axial beweglich auszuführen, aber rotatorisch gegenüber dem Getriebegehäuse festzulegen.

Die Betätigungskontur ist ferner so ausgebildet, daß sie in Umfangsrichtung eine axiale Erstreckung aufweist, so dass infolge des Abrollens der Betätigungskörper in Umfangsrichtung die Betätigungskörper eine axiale Verschiebung erfahren. Somit ist die axiale Erstreckung von Betätigungskontur und Betätigungskörper zusammen durch eine Bewegung der Betätigungskörper in Umfangsrichtung veränderbar. Dabei kann die Betätigungskontur in Umfangsrichtung gesehen symmetrisch zur einer Achse ausgebildet sein, die zu einer Neutralstellung der Kupplungsbetätigungseinheit korrespondiert. Unabhängig von einer Symmetrie der Betätigungskontur muss in jedem Fall sichergestellt sein, dass sich die Betätigungskontur in beiden Umfangsrichtungen von einer Mittelstellung bzw. Neutralstellung in dieselbe Richtung erstreckt.

Die Betätigungskontur kann sowohl im Bereich des Betätigungselements als auch im Bereich der Druckplatte ausgebildet sein.

In einer besonderen Ausführungsform sind das erste Losrad und das zweite Losrad koaxial oder konzentrisch als Hohlwellenanordnung zueinander angeordnet, wobei im letzteren Fall zwischen dem ersten Losrad und dem zweiten Losrad eine Lagerung vorgesehen ist. Eine solche Ausführungsform lässt sich einfach herstellen.

Die Schaltmuffe kann dazu eine innere Keilverzahnung aufweisen, und ein entsprechend korrespondierender Abschnitt des inneren Lamellenträgers der Lamellenkupplung kann eine äußere Keilverzahnung aufweisen, wobei die innere Keilverzahnung mit der äußeren Keilverzahnung im Eingriff steht. Dies ermöglicht eine Drehmomentübertragung auf die Schaltmuffe bei gleichzeitiger axialer Beweglichkeit.

Die Schaltanordnung kann als Antrieb für das Betätigungselement ein insbesondere hydraulisches oder elektrisches Stellglied aufweisen.

Die Anmeldung umfasst auch ein schaltbares Getriebe, das wenigstens eine Schaltanordnung wie oben beschrieben aufweist.

Das schaltbare Getriebe kann ein zweites Losrad aufweisen, das auf einer Hohlwelle angeordnet ist, die innerhalb des ersten Losrads angeordnet ist, wobei die Schaltmuffe der Schaltanordnung in einer dritten Stellung, d.h. "eingerückt" oder "formschlüssig verbunden", eine formschlüssige Verbindung zwischen dem zweiten Losrad und der Reibkupplungsbaugruppe herstellt.

Einer ersten Weiterbildung zufolge können an dem Getriebe eine erste und eine zweiten Schaltanordnung, jeweils wie oben beschrieben, vorgesehen sein, wobei die das erste Losrad tragende Welle beiden Schaltanordnungen gemeinsam ist, und wobei eine Nebenwelle des Getriebes ferner
- ein erstes Festrad, das mit dem ersten Losrad der ersten Schaltanordnung in Eingriff steht, und
- ein zweites Festrad, das mit einem zweiten Losrad der zweiten Schaltanordnung in Eingriff steht,
trägt. So kann wahlweise über die erste oder die zweite Schaltanordnung Drehmoment auf die Nebenwelle übertragen werden.

Die erste Schaltanordnung kann an einem ersten Ende der Eingangswelle und die zweite Schaltanordnung kann einem zweiten Ende der Eingangswelle angeordnet sein. Dadurch wird eine kompakte Bauform des Getriebes ermöglicht.

Zusätzlich kann eine zweite Nebenwelle mit einem dritten Festrad und einem vierten Festrad vorgesehen sein, wobei die erste Schaltanordnung und die zweite Schaltanordnung jeweils ein zweites Losrad aufweisen, das auf einer jeweils zugeordneten Hohlwelle angeordnet ist, die mit dem ersten Losrad entweder verbunden oder einstückig ausgebildet sein kann, wobei die Schaltmuffe der Schaltanordnung in einer dritten Stellung - d.h. "eingerückt" bzw. "form-schlüssig verbunden" - eine formschlüssige Verbindung zwischen dem zweiten Losrad und der Kupplungsbaugruppe herstellt.

Das erste Festrad kämmt dabei mit dem ersten Losrad der ersten Schaltanordnung, das dritte Festrad kämmt mit dem zweiten Losrad der ersten Schaltanordnung, das zweite Festrad kämmt mit dem ersten Losrad der zweiten Schaltanordnung, und das vierte Festrad kämmt mit dem zweiten Losrad der zweiten Schaltanordnung. Die einer Schaltanordnung zugeordneten Festräder kämmen also mit entsprechend zugeordneten Losrädern. Wenn sämtliche Festräder einer Schaltanordnung mit ungeraden Gängen kämmen und wenn sämtliche Festräder der anderen Schaltanordnung mit geraden Gängen kämmen, dann kann auf einfache Weise ein Lastschaltprinzip verwirklicht werden, wobei beim Schalten von einem sich bereits im Kraftfluss bzw. Momentenfluss befindenden Gang in einen benachbarten Gang ein diesem Gang zugeordnetes Losrad zunächst formschlüssig mit der zugeordneten Schaltmuffe verbunden wird und wobei anschließend durch entsprechendes Öffnen und Schließen der beiden Reibungskupplungen eine Momentenübergabe von dem ersteren Gang hin zum benachbarten Gang erfolgt.

Bei dem Getriebe ist die Betätigung der beiden Schaltanordnungen dann untereinander so synchronisiert, dass eine Lastschaltung stattfindet. Erst wird das Betätigungselement der Schaltanordnung des neuen Gangs soweit gedreht, dass das Losrad des neuen Gangs formschlüssig verbunden ist, dann wird die Reibungskupplung der Schaltanordnung des aktuellen Gangs gelöst und gleichzeitig die Reibungskupplung der Schaltanordnung des neuen Gangs geschlossen, dann wird die formschlüssige Kupplung des vorher eingelegten Gangs gelöst. Dabei kann die Synchronisation der Schaltanordnungen untereinander mechanisch oder auch elektronisch gesteuert sein. Eine Abnutzung der Reibkupplungen kann z.B. durch ein elektronisch gesteuertes Anpassen des Drehwinkels des Betätigungselements kompensiert werden.

Anstelle einer aufwändigen nach dem Stand der Technik bekannten DCT-Doppelkupplung werden zwei einfache Lamellenkupplungen verwendet, die zudem noch in einem Ölbad schwimmend angeordnet werden können. Dadurch wird eine hohe Leistungsdichte und eine gute Haltbarkeit erreicht. Die dafür verwendeten Reibkupplungen können modular innerhalb eines Baukastensystems verwendet werden, z.B. auch für Getriebe mit nur einem Kupplungspaket.

Ein weiteres Merkmal eines vorteilhaften Getriebes liegt in der Anordnung der Abtriebsritzel und des ersten Gangs auf der Antriebsseite, wodurch auf der gegenüberliegenden Seite der Eingangswelle ein kostengünstigeres Kugellager statt einem Zylinderrollenlager eingebaut werden kann.

Zur Verdeutlichung ist noch zu bemerken, daß bei dem Schaltgetriebe der Anmeldung ein Lastschaltprinzip auch mit einer einzigen Nebenwelle erreicht werden kann, wobei trotzdem zwei Schaltanordnungen benötigt werden, so dass im Bereich der beiden Enden der Eingangswelle je eine Schaltanordnung vorzusehen ist.

Einer zweiten Weiterbildung zufolge weist das Schaltgetriebe ebenfalls eine erste und eine zweite Schaltanordnung, jeweils wie oben beschrieben, auf, wobei die das erste Losrad tragende Welle beiden Schaltanordnungen gemeinsam und vorzugsweise eine Nebenwelle ist, eine Eingangswelle zwei zu ihr konzentrische Hohlwellen trägt und die ersten Losräder der beiden Schaltanordnungen mit jeweils einem Rad einer der Hohlwellen kämmen.

Die Weiterbildungen sind insofern miteinander kombinierbar, als eine Schaltanordnung gleichzeitig zwei Losräder, die mit Festrädern derselben Nebenwelle in Eingriff stehen, als auch ein Losrad auf der Nebenwelle aufweisen kann, das mit einem Rad einer der Hohlwellen kämmt.

Um die Anzahl der schaltbaren Gänge zu erhöhen kann eine zweite Schaltmuffe vorgesehen sein, wobei die Schaltanordnung eine Schaltgabelvorwahl-Betätigungsvorrichtung aufweist, die entweder die erste Schaltmuffe oder die zweite Schaltmuffe mit der Schaltmuffen-Axialbetätigungseinheit Verbindet. Dabei kann die Schaltvorwahl-Betätigungseinheit einen ersten Bereich zur Verbindung mit einer ersten Schaltgabel aufweisen, die in die erste Schaltmuffe eingreift, und zusätzlich einen zweiten Bereich zur Verbindung mit einer zweiten Schaltgabel. Die Schaltgabelvorwahl-Betätigungseinheit hat dann eine erste Stellung, in der die Schaltmuffen-Axialbetätigungseinheit mit der ersten Schaltgabel verbunden ist, und eine zweite Stellung, in der die Schaltmuffen-Axialbetätigungseinheit mit der zweiten Schaltgabel verbunden ist.

Die Anzahl der Stellungen der Schaltgabelvorwahl-Betätigungseinheiten entspricht dabei der Anzahl der Schaltmuffen, die durch die Schaltmuffen-Axialbetätigung betätigt werden.

Indem der zweiten Ausgestaltung der Schaltanordnung zufolge das erste Losrad auf einer anderen Welle als die Reibkupplungsbaugruppe angeordnet ist, kann ein sehr kompaktes Getriebe geschaffen werden, bei dem eine Eingangswelle eine Hohlwelle mit einem ersten Festrad aufweist, eine Nebenwelle ein erste Losrad und die Schaltanordnung wie obenstehend beschrieben aufweist und die Reibkupplungsbaugruppe über den äußeren Lamellenträger mit der Eingangswelle verbunden ist. Die Schaltmuffen-Axialbetätigungseinheit ist über eine mechanische Verbindung, wie zum Beispiel ein Gestänge, mit einer Schaltgabel in Verbindung, die die Schaltmuffe betätigt. Ein beispielsweise elektrischer oder hydraulischer Aktuator oder Antrieb, insbesondere ein Elektromotor, ist zur Betätigung der Kupplungs-Axialbetätigungseinheit und der Schaltmuffen-Axialbetätigungseinheit der Schaltanordnung vorgesehen.

Das Getriebe gemäß den vorstehenden Ausführungen kann Teil eines Antriebsstrangs sein, wobei eine Antriebswelle des Antriebsstrangs mit einer Abtriebswelle des Getriebes verbunden ist. Oft erfolgt dies auch über ein zwischengeschaltetes Differentialgetriebe.

Bei einem Kraftfahrzeug ist dann der Antriebsstrang so angeordnet, daß ein Laufrad des Kraftfahrzeugs mit der Antriebswelle des Antriebsstrangs verbunden ist.

Die Erfindung wird nun anhand der beigefügten Figuren näher erläutert. Dabei behandelt eine erste Gruppe von Figuren eine erste Ausgestaltung der Erfindung:
- Figur 1: zeigt eine Ansicht eines Schaltgetriebes mit mechanisch gekoppelter Kupplungs- und Synchronisierungseinrichtung einer Schaltanordnung gemäß einer Ausführungsform der Erfindung,
- Figur 2: zeigt eine Teilansicht der mechanisch gekoppelten Kupplungs- und Synchronisierungseinrichtung gemäß Figur 1,
- Figur 3: zeigt einen vergrößerten Ausschnitt der mechanisch gekoppelten Kupplungsund Synchronisierungseinrichtung gemäß Figur 2,
- Figur 4: zeigt eine Steuernut in einem Umfangsabschnitt einer Schaltwalze einer Schaltmuffen-Axialbetätigungseinheit,
- Figur 5: zeigt eine Draufsicht auf eine Rampenstruktur einer KupplungsAxialbetätigungseinheit mit quergeschnittener Schaltwalze,
- Figur 6: zeigt einen Querschnitt durch die Schaltmuffen- und KupplungsAxialbetätigungseinheitgemäß Figur 5,
- Figur 7: zeigt eine neutrale Schaltposition "1" eines Schaltpins in einem ersten Abschnitt der Steuernut der Schaltwalze,
- Figur 8: zeigt Schaltpositionen der Betätigungskörper auf Betätigungskonturen des Betätigungsringes für die in Figur 7 gezeigte Schaltposition "1",
- Figur 9: zeigt einen Querschnitt durch die Schaltmuffen- und KupplungsAxialbetätigungseinheit für die in Figur 7 gezeigte Schaltposition "1",
- Figur 10: zeigt eine Schaltposition "2" des Schaltpins an einem Übergang von dem ersten Abschnitt auf einen zweiten Abschnitt Steuernut der Schaltwalze,
- Figur 11: zeigt Schaltpositionen der Betätigungskörper des Betätigungsringes auf der Rampenstruktur für die in Figur 10 gezeigte Schaltposition "2",
- Figur 12: zeigt einen Querschnitt durch die Schaltmuffen- und KupplungsAxialbetätigungseinheit für die in Figur 10 gezeigte Schaltposition "2",
- Figur 13: zeigt eine Schaltposition "3" des Schaltpins in der Steuernut,
- Figur 14: zeigte Schaltpositionen der Betätigungskörper des Betätigungsringes auf der Rampenstruktur für die in Figur 13 gezeigte Schaltposition "3",
- Figur 15: zeigt einen Querschnitt durch die Schaltmuffen- und KupplungsAxialbetätigungseinheit für die in Figur 13 gezeigte Schaltposition "3",
- Figur 16: zeigt einen vergrößerten Ausschnitt einer mechanisch gekoppelten Kupplungs- und Synchronisierungseinrichtung einer Schaltanordnung gemäß einer weiteren Ausführungsform der Erfindung,
- Figur 17: zeigt einen vergrößerten Ausschnitt einer mechanisch gekoppelten Kupplungs- und Synchronisierungseinrichtung einer Schaltanordnung gemäß einer weiteren Ausführungsform der Erfindung,
- Figur 18: zeigt ein Diagramm mit dem Verlauf der Axialbewegung einer Schaltmuffe im Vergleich zum Verlauf einer auf ein Betätigungselement wirkenden Axialkraft beim Einlegen eines Gangs, und
- Figur 19: zeigt ein Diagramm der Drehmomentübertragung beim Wechseln von einer ersten Reibkupplungsbaugruppe auf eine zweite Reibkupplungsbaugruppe und den Verlauf des Lösens und Einlegens von den ersten und zweiten Reibkupplungsbaugruppen zugeordneten Gängen;

eine zweite Gruppe von Figuren betrifft eine zweite Ausgestaltung:
- Figur 20: zeigt eine Ansicht eines Schaltgetriebes mit mechanisch gekoppelter Kupplungs- und Synchronisierungseinrichtung einer Schaltanordnung gemäß einer Ausführungsform der Erfindung,
- Figur 21: zeigt eine Teilansicht der mechanisch gekoppelten Kupplungs- und Synchronisierungseinrichtung gemäß Figur 20,
- Figur 22: zeigt eine Steuernut in einem Umfangsabschnitt in einer Schaltwalze einer Schaltmuffen-Axialbetätigungseinheit,
- Figur 23: zeigt eine Draufsicht auf eine Rampenstruktur einer KupplungsAxialbetätigungseinheit,
- Figur 24: zeigt einen Querschnitt durch die Kupplungs-Axialbetätigungseinheit gemäß Figur 23,
- Figur 25: zeigt eine neutrale Schaltposition "1" eines Schaltpins in einem ersten Abschnitt der Steuernut der Schaltwalze,
- Figur 26: zeigt Schaltpositionen von Betätigungskugeln auf Betätigungskonturen der Schaltstruktur für die in Figur 25 gezeigte Schaltposition "1 ",
- Figur 27: zeigt einen Querschnitt durch die Kupplungs-Axialbetätigungseinheit für die in Figur 26 gezeigte Schaltposition "1",
- Figur 28: zeigt eine Schaltposition "2" des Schaltpins an einem Übergang von dem ersten Abschnitt auf einen zweiten Abschnitt der Steuernut der Schaltwalze,
- Figur 29: zeigt Schaltpositionen der Betätigungskugeln des Betätigungselements auf der Rampenstruktur für die in Figur 28 gezeigte Schaltposition "2",
- Figur 30: zeigt einen Querschnitt durch Kupptungs-Axialbetätigungseinheit für die in Figur 29 gezeigte Schaltposition "2",
- Figur 31: zeigt eine Schaltposition "3" des Schaltpins in der Steuernut,
- Figur 32: zeigt Schaltpositionen der Betätigungskugeln des Betätigungselements auf der Rampenstruktur für die in Figur 31 gezeigte Schaltposition 'V',
- Figur 33: zeigt einen Querschnitt durch die Kupplungs-Axialbetätigungseinheit für die in Figur 32 gezeigte Schaltposition 'V',
- Figur 34: zeigt ein Diagramm mit dem Verlauf der Axialbewegung einer Schaltmuffe im Vergleich zum Verlauf einer auf ein Betätigungselement wirkenden Axialkraft beim Einlegen von einem Gang, und
- Figur 35: zeigt ein Diagramm der Drehmomentübertragung beim Wechseln von einer ersten Reibkupplungsbaugruppe auf eine zweite Reibkupplungsbaugruppe und den Verlauf des Lösens und Einlegens von den ersten und zweiten Reibkupplungsbaugruppen zugeordneten Gängen,
eine dritte Gruppe von Figuren betrifft eine Weiterbildung der beiden Ausgestaltungen:
- Figur 36: zeigt eine Ansicht eines Getriebes mit mechanisch gekoppelten Kupplungsund Synchronisierungseinrichtungen einer Schaltanordnung gemäß einer Ausführungsform der Erfindung,
- Figur 37: zeigt eine Teilansicht einer mechanisch gekoppelten Kupplungs- und Synchronisierungseinrichtung gemäß Figur 36,
- Figur 38: zeigt Schaltpositionen "1" bis "5" eines externen Schaltpins in einer externen Steuernut eines Umfangsabschnitts einer externen Schaltwalze einer externen Schaltmuffen-Axialbetätigungseinheit,
- Figur 39: zeigt Schaltpositionen "1" bis "5" eines internen Schaltpins in einer internen Steuernut eines Umfangsabschnitts einer internen Schaltwalze einer internen Schaltmuffen-Axialbetätigungseinheit,
- Figur 40: zeigt eine Draufsicht auf eine Rampenstruktur einer KupplungsAxialbetätigungseinheit,
- Figur 41: zeigt einen Querschnitt durch die Kupplungs-Axialbetätigungseinheit gemäß Figur 40,
- Figur 42: zeigt die Schaltposition "1" des externen Schaltpins in der externen Steuernut des Umfangsabschnitts der externen Schaltwalze der externen SchaltmuffenAxialbetätigungseinheit,
- Figur 43: zeigt die Schaltposition "1" des internen Schaltpins in der internen Steuernut des Umfangsabschnitts der internen Schaltwalze der internen SchaltmuffenAxialbetätigungseinheit,
- Figur 44: zeigt die Draufsicht auf die Rampenstruktur der KupplungsAxialbetätigungseinheit in der Schaltposition "1",
- Figur 45: zeigt den Querschnitt durch die Kupplungs-Axialbetätigungseinheit in der Schaltposition "1" gemäß Figur 43,
- Figur 46: zeigt die Schaltposition "2" des externen Schaltpins in der Steuernut des Umfangsabschnitts der externen Schaltwalze der externen SchaltmuffenAxialbetätigungseinheit,
- Figur 47: zeigt die Schaltposition "2" des internen Schaltpins in der Steuernut des Umfangsabschnitts der internen Schaltwalze der internen SchaltmuffenAxialbetätigungseinheit,
- Figur 48: zeigt die Draufsicht auf die Rampenstruktur der KupplungsAxialbetätigungseinheit in der Schaltposition "2",
- Figur 49: zeigt den Querschnitt durch die Kupplungs-Axialbetätigungseinheit in der Schaltposition "2" gemäß Figur 47,
- Figur 50: zeigt die Schaltposition "3" des externen Schaltpins in der Steuernut des Umfangsabschnitts der externen Schaltwalze der externen SchaltmuffenAxialbetätigungseinheit,
- Figur 51: zeigt die Schaltposition "3" des internen Schaltpins in der Steuernut des Umfangsabschnitts der internen Schaltwalze der internen SchaltmuffenAxialbetätigungseinheit,
- Figur 52: zeigt die Draufsicht auf die Rampenstruktur der KupplungsAxialbetätigungseinheit in der Schaltposition 'V',
- Figur 53: zeigt den Querschnitt durch die Kupplungs-Axialbetätigungseinheit in der Schaltposition "3" gemäß Figur 51,
- Figur 54: zeigt die Schaltposition "4" des externen Schaltpins in der Steuernut des Umfangsabschnitts der externen Schaltwalze der externen SchaltmuffenAxialbetätigungseinheit,
- Figur 55: zeigt die Schaltposition "4" des internen Schaltpins in der Steuernut des Umfangsabschnitts der internen Schaltwalze der internen SchaltmuffenAxialbetätigungseinheit,
- Figur 56: zeigt die Draufsicht auf die Rampenstruktur der KupplungsAxialbetätigungseinheit in der Schaltposition "4",
- Figur 57: zeigt den Querschnitt durch die Kupplungs-Axialbetätigungseinheit in der Schaltposition "4" gemäß Figur 55,
- Figur 58: zeigt die Schaltposition "5" des externen Schaltpins in der Steuernut des Umfangsabschnitts der externen Schaltwalze der externen SchaltmuffenAxialbetätigungseinheit,
- Figur 59: zeigt die Schaltposition "5" des internen Schaltpins in der Steuernut des Umfangsabschnitts der internen Schaltwalze der internen SchaltmuffenAxialbetätigungseinheit,
- Figur 60: zeigt die Draufsicht auf die Rampenstruktur der KupplungsAxialbetätigungseinheit in der Schaltposition "5",
- Figur 61: zeigt den Querschnitt durch die Kupplungs-Axialbetätigungseinheit in der Schaltposition "5" gemäß Figur 55,
- Figur 62: zeigt ein Diagramm mit dem Verlauf der Axialbewegung einer externen oder internen Schaltmuffe im Vergleich zum Verlauf einer auf ein Betätigungselement wirkenden Axialkraft beim Einlegen von einem Gang,
- Figur 63: zeigt ein Diagramm der Drehmomentübertragung beim Wechseln von einer ersten Reibkupplungsbaugruppe auf eine zweite Reibkupplungsbaugruppe und den Verlauf des Lösens und Einlegens von den ersten und zweiten Reibkupplungsbaugruppen zugeordneten Gängen, und
- Figur 64: zeigt eine Schaltanordnung gemäß einer weiteren Ausführungsform der Erfindung; und
- Figur 65: zeigt ein Kraftfahrzeug mit einem Motor und einem Antriebsstrang, der mit einem Differentialgetriebe zusammenwirkt.

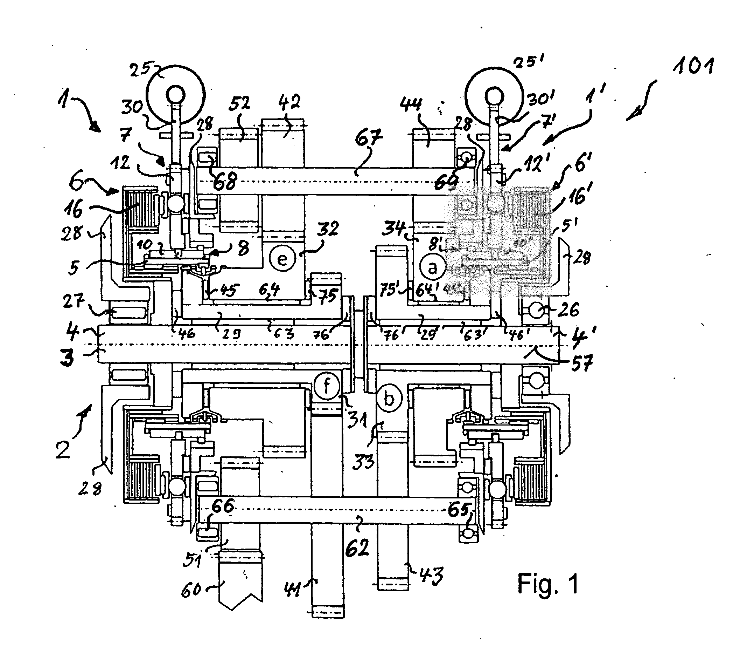

Figur 1 zeigt eine Schaltanordnung 101 eines Schaltgetriebes 2 mit einer ersten mechanisch gekoppelten Kupplungs- und Synchronisierungseinrichtung 1 und einer zweiten mechanisch gekoppelten Kupplungs- und Synchronisierungseinrichtung 1'gemäß einer Ausführungsform der Erfindung. Das Schaltgetriebe 2 ist in einem Getriebegehäuse 28 angeordnet und weist eine Eingangswelle 3 auf. Die Eingangswelle 3 weist einen ersten Endbereich 4 und einen zweiten Endbereich 4' auf. Gleiche Komponenten der Figur 1, die auf dem ersten Endbereich 4 und auf dem zweiten Endbereich 4' angeordnet sind, werden mit gleichen Bezugszeichen gekennzeichnet, jedoch werden in dem zweiten Endbereich 4' der Eingangswelle 3 die Bezugszeichen zusätzlich mit einem Apostroph versehen.

Das Schaltgetriebe 2 weist neben der Eingangswelle 3 eine erste Nebenwelle 62 und eine zweite Nebenwelle 67 auf, die parallel zur Eingangswelle 3 angeordnet sind. Die Lagerung der ersten Nebenwelle 62 weist ein Kugelwälzlager 65 als Festlager und ein Rollenwälzlager 66 als Loslager auf. Die Lagerung der zweiten Nebenwelle 67 weist ein Kugelwälzlager 69 als Festlager und ein Rollenwälzlager 68 als Loslager auf.

Auf der ersten Nebenwelle 62 sind ein erstes Festrad 41 und ein drittes Festrad 43 angeordnet. Außerdem ist auf der ersten Nebenwelle 62 ein Abtriebsritzel 51 angeordnet, das mit einem Ringrad 60 eines nicht gezeigten Differentials in Eingriff steht.

Auf der zweiten Nebenwelle 67 sind ein zweites Festrad 42 und ein viertes Festrad 44 angeordnet. Außerdem befindet sich auf der zweiten Nebenwelle 67 ein zweites Abtriebsritzel 52, das ebenfalls mit dem Ringrad 60 des Differentials zusammenwirkt.

Die Eingangswelle 3 ist in dem Getriebegehäuse 28 mit einem Kugelwälzlager 26 als Festlager und einem Rollenwälzlager 27 als Loslager gelagert.

Ferner ist eine erste Reibkupplungsbaugruppe 6 auf dem ersten Endbereich 4 angeordnet. Die erste Reibkupplungsbaugruppe 6 weist eine erste Lamellenkupplung 16 auf.

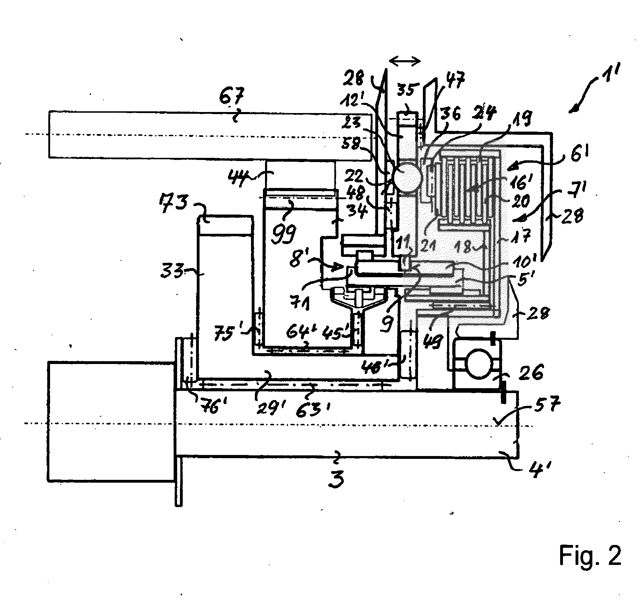

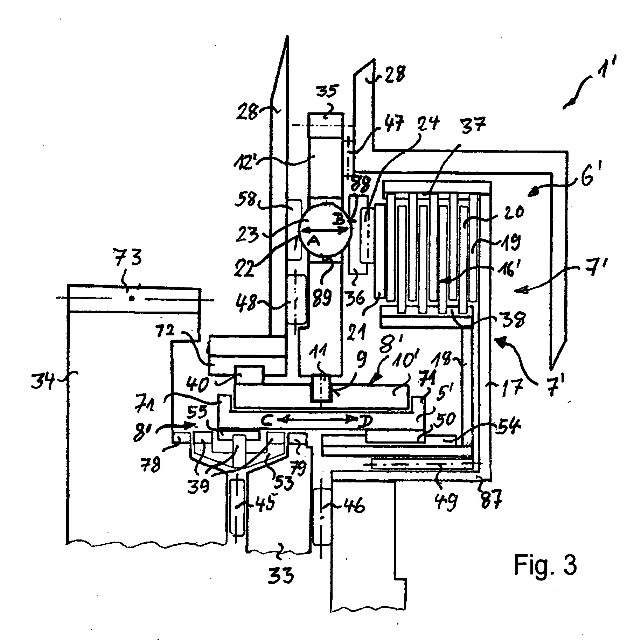

In dem ersten Endbereich 4 ist auf der Eingangswelle 3 ein erstes Losrad 31 angeordnet. Die Nabe des ersten Losrads 31 bildet eine erste Hohlwelle 29 auf der Eingangswelle 3. Die erste Hohlwelle 29 ist mittels eines Radiallagers 63 und zweier Axiallager 46 und 76 gelagert. Auf der ersten Hohlwelle 29 des ersten Losrads 31 ist ein zweites Losrad 32 mittels eines Radiallagers 64 und zweier Axiallager 45 und 75 gelagert. Die Losräder 31, 32, 33 und 34 weisen Schrägverzahnungen 73 auf und sind in der Lage, mit entsprechenden Schrägverzahnungen 99 der Festräder 41, 42, 43 und 44 zu kämmen, wie man gut in den Figuren 2 und 3 erkennen kann.

Die Schaltanordnung 101 ist in dem zweiten Endbereich 4' der Eingangswelle 3 analog zu dem ersten Endbereich 4 aufgebaut. Der zweite Endbereich 4' weist eine zweite Reibkupplungsbaugruppe 6' auf, die mit der Eingangswelle 3 drehfest verbunden ist. Die zweite Reibkupplungsbaugruppe 6' weist eine zweite Lamellenkupplung 16' auf.

Ein drittes Losrad 33 ist auf der Eingangswelle 3 mittels eines Radiallagers 63' und Axiallagern 46' und 76' gelagert. Die Nabe des drittes Losrads 33 bildet eine zweite Hohlwelle 29'. Auf der zweiten Hohlwelle 29' ist ein viertes Losrad 34 mittels eines Radiallagers 64' und zweier Axiallager 45' und 75' gelagert.

Die erste Reibkupplungsbaugruppe 6 wirkt mit einer ersten Kupplungs-Axialbetätigungseinheit 7 zusammen. Diese erste Kupplungs-Axialbetätigungseinheit 7 steht mechanisch mit einer ersten Schaltmuffen-Axialbetätigungseinheit 8 in Wirkverbindung bzw. ist mit dieser mechanisch gekoppelt. Entsprechend ist auf dem zweiten Endbereich 4' der Eingangswelle 3 eine zweite Kupplungs-Axialbetätigungseinheit 7' mit einer zweiten Schaltmuffen-Axialbetätigungseinheit 8' angeordnet.

Die mechanisch gekoppelte erste Kupplungs- und Synchronisierungseinrichtung 1 hat ein erstes Betätigungselement 12, das auch als Betätigungsring bezeichnet wird. Das erste Betätigungselement 12 ist über ein erstes Zwischenrad 30 mit einem ersten Antrieb 25 verbunden. Die zweite mechanisch gekoppelte Kupptungs- und Synchronisierungseinrichtung 1' hat ein zweites Betätigungselement 12'. Das zweite Betätigungselement 12' ist über ein zweites Zwischenrad 30' mit einem zweiten Antrieb 25' verbunden. In der in Figur 1 gezeigten Ausführungsform der Schaltungsanordnung 101 sind der erste Antrieb 25 und der zweite Antrieb 25' Elektromotoren, die mit jeweils einem Schneckentrieb ausgebildet sind.

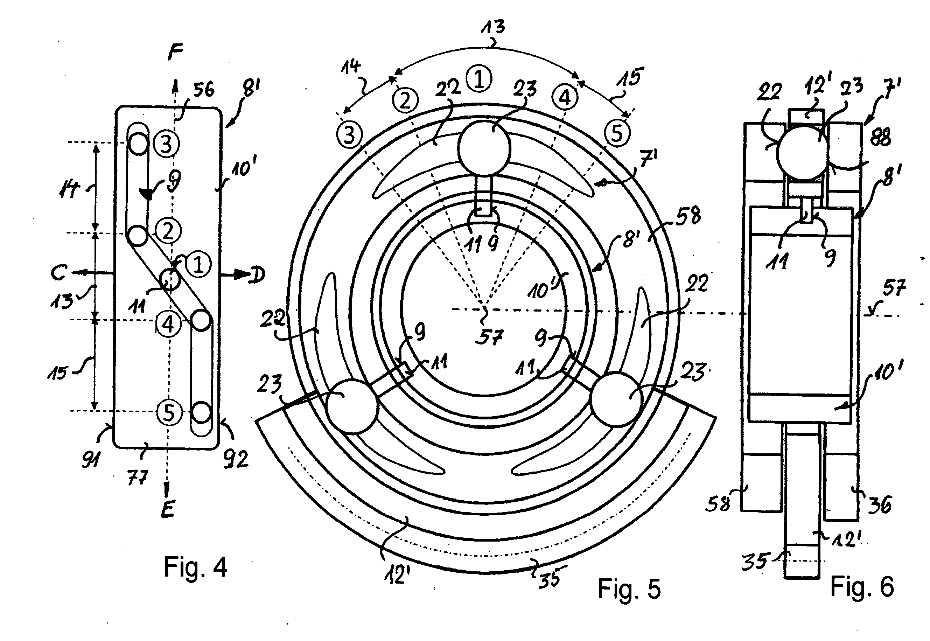

Eine erste Schaltmuffe 5 ist in dem ersten Endbereich 4 der Eingangswelle 3 angeordnet und steht in Figur 1 auf einer neutralen Schaltposition zwischen einer Schaltverzahnung des ersten Losrades 31 und einer Schaltverzahnung des zweiten Losrades 32. Eine zweite Schaltmuffe 5' ist in dem zweiten Endbereich 4'der Eingangswelle 3 und steht in Figur 3 auf einer neutralen Schaltposition zwischen einer Schaltverzahnung des dritten Losrades 33 und einer Schaltverzahnung des vierten Losrades 34. Die in Figur 4 gezeigten Ränder 91 und 92 der Schaltwalze 10 und analog auch die Ränder 91' und 92' der anderen Schaltwalze 10', werden von der jeweils zugeordneten Schaltmuffe 5, 5' seitlich eingefasst (vgl. z.B. Figur 1, 2 und 3), wobei die Einfassungen 71 als Mitnehmer bezüglich der Schaltwalzen fungieren. Die erste Schaltwalze 10 umschließt die erste Schaltmuffe 5 und die zweite Schaltwalze 10' umschließt die zweite Schaltmuffe 5'.

Ein Gang a wird mit dem vierten Losrad 34 und dem vierten Festrad 44 gebildet. Ein Gang b wird mit dem dritten Losrad 33 und dem dritten Festrad 43 gebildet. Ein Gang e wird mit dem zweiten Losrad 32 und dem zweiten Festrad 42 gebildet. Ein Gang f wird mit dem ersten Losrad 31 und dem ersten Festrad 41 gebildet.

Wie man in Figur 2 und Figur 3 sieht, weist die zweite mechanisch gekoppelte Kupplungs- und Synchronisierungseinrichtung 1' einen äußeren Lamellenträger 17 auf, der ein äußeres Lamellenpaket 19 von Kupplungslamellen aufnimmt. Ferner weist die zweite Reibkupplungsbaugruppe 6' einen inneren Lamellenträger 18 auf, der ein inneres Lamellenpaket 20 von Kupplungslamellen hat. Die Kupplungslamellen des inneren Lamellenpakets 20 werden durch innere Lamellenverzahnungen 38 axialverschieblich gehalten und rotatorisch fixiert, wie man am besten in Figur 3 sieht. Gleiches gilt für das äußere Lamellenpaket 19, dessen Lamellen mittels einer äußeren Lamellenverzahnung 37 axialverschieblich gehalten und rotatorisch fixiert sind. Ein Ringabschnitt 87 des äußeren Lamellenträgers 17 ist an der Eingangswelle 3 fixiert. Der innere Lamellenträger 18 ist auf dem Ringabschnitt 87 des äußeren Lamellenträgers 17 durch ein Radiallager 49 gelagert. Der innere Lamellenträger 18 weist im Bereich des Radiallagers 49 eine axiale Außenverzahnung 54 auf.

Darüber hinaus weist die zweite Reibkupplungsbaugruppe 6' eine Druckplatte 21 auf, die über ein Axiallager 24 mit einem Axiallagerring 36 mit dem zweiten Betätigungselement 12' in Wirkverbindung steht. Dazu ist in dem zweiten Betätigungselement 12' ein Betätigungskörper 23, der auch als Betätigungskugel bezeichnet wird, in einer Führungsbohrung 89 angeordnet

Das zweite Betätigungselement 12' weist auf seinem äußeren Umfang ferner eine Antriebsverzahnung 35 auf, die wie in Figur 1 gezeigt über ein zweites Zwischenrad 30' mit dem zweiten Antrieb 25' zusammenwirkt. Das zweite Betätigungselement 12' ist in dem Getriebegehäuse 28 zwischen zwei Axiallagern 47 und 48 gelagert.

Der Betätigungskörper 23 ist im Bereich des Axiallagers 24 angeordnet. Der zur rechten Seite des Betätigungskörpers 23 angeordnete Axiallagerring 36 weist eine Ringnut 88 auf, in der der Betätigungskörper 23 radial geführt ist. Axial gegenüber der Ringnut 88, d.h. zur linken Seite des Betätigungskörpers 23, rollt der Betätigungskörper 23 in der Betätigungskontur 22 der Rampenstruktur 58 ab, die fest an dem Getriebegehäuse 28 vorgesehen ist.

Aus dem zweiten Betätigungselement 12' ragt radial nach innen ein Schaltpin 11 heraus, der in einer Steuernut 9 der zweiten Schaltwalze 10' gleitverschieblich angeordnet ist. Die zweite Schaltwalze 10' ist gegenüber dem Getriebegehäuse 28 axial verschieblich und drehfest zum Gehäuse auf der zweiten Schaltmuffe 5' angeordnet. Die zweite Schaltwalze 10' hat dafür eine Außenverzahnung 40, die mit einer Innenverzahnung 72 des Getriebegehäuses 28 in Eingriff steht. Die zweite Schaltwalze 10' umgibt die zweite Schaltmuffe 5'.

Die zweite Schaltmuffe 5' weist axiale Mitnehmerränder 71 auf, die mit der Schaltwalze 10' in Eingriff stehen, um eine axiale Bewegung der Schaltwalze 10' auf die Schaltmuffe 5' zu übertragen und gleichzeitig eine Drehung der Schaltmuffe 5' im Getriebegehäuse 28 zuzulassen. Die zweite Schaltmuffe 5' weist eine erste Schaltmuffen-Innenverzahnung 50 und eine zweite Schaltmuffen-Innenverzahnung 55 auf. Die erste Schaltmuffen-Innenverzahnung 50 steht stets mit der Außenverzahnung 54 des inneren Lamellenträgers 18 der zweiten Kupplungs-Axialbetätigungseinheit 7' in Eingriff und ist auf dieser axial verschieblich. Zwischen der ersten Schaltmuffen-Innenverzahnung 50 und der zweiten Schaltmuffen-Innenverzahnung 55 ist ein axialer Abstand in Form einer ringförmigen Aussparung vorgesehen. Die zweite Schaltmuffen-Innenverzahnung 55 steht in einer neutralen Schaltposition der Schaltmuffe 5' mit einer der Verzahnungen 39 eines Synchronrings 53 in Eingriff, der zwischen dem dritten Losrad 33 und dem vierten Losrad 34 vorgesehen ist. Das dritte Losrad 33 weist eine Schaltverzahnung 79 auf, und das vierte Losrad 34 weist eine Schaltverzahnung 78 auf, die auf dem axialen Schaltweg der Schaltmuffe 5' angeordnet sind.

Figur 4 zeigt eine Draufsicht auf einen Umfangsabschnitt 77 der zweiten Schaltwalze 10' aus den Figuren 1 bis 3, mit der Steuernut 9 der zweiten Schaltmuffen-Axialbetätigungseinheit 8'. Die Steuernut 9 weist drei Abschnitte auf, nämlich einen schräg (bzw. schraubenlinienförmig in Bezug auf eine in Figur 5 mit 57 bezeichnete Achse der Eingansgwelle 3) verlaufenden ersten Abschnitt 13, einen gerade (bzw. in Umfangsrichtung bezogen auf die Achse 57) verlaufenden zweiten Abschnitt 14 sowie einen gerade (bzw. in Umfangsrichtung bezogen auf die Achse 57) verlaufenden dritten Abschnitt 15. Die gerade verlaufenden Abschnitte 14 und 15 der Steuernut 9 sind parallel zu Rändern 91 und 92 des Umfangsabschnitts 77 angeordnet

Eine Spur bzw. Trajektorie 56 des Schaltpins 11 ist mit gestrichelter Linie markiert, und Richtungspfeile E und F zeigen mögliche axial feste Bewegungsrichtungen des Schaltpins, die der Schaltpin 11 entlang der Spur 56 einnehmen kann. Diese Spur kennzeichnet dabei eine Bewegung des Schaltpins 11 in Umfangrichtung. Der Schaltpin 11 folgt somit nicht der Steuernut 9, sondern die Schaltwalze 10' mit der Steuernut 9 folgt den axial festen Bewegungen des Schaltpins 11 entlang der Spur 56.

Entlang der Spur 56 sind fünf Schaltpositionen "1", "2", "3", "4" und "5" markiert. Eine erste neutrale Schaltposition "1" ist in der Mitte des schrägverlaufenden ersten Abschnitts 13 vorgesehen. Die zweite Schaltposition "2" liegt am Übergang des ersten Abschnitts 13 zu dem zweiten Abschnitt 14. Die dritte Schaltposition "3" liegt im Bereich des Endes des zweiten Abschnitts 14. Die vierte Schaltposition "4" ist an einem Übergang von dem ersten Abschnitt 13 zu dem dritten Abschnitt 15 vorgesehen, und die fünfte Schaltposition "5" liegt wiederum im Bereich des Endes des dritten Abschnitts 15. Die zweite Schaltwalze 10' ist rotatorisch festgelegt und dabei axial verschieblich und kann sich in Pfeilrichtung C oder D bewegen.

Figur 5 zeigt eine Draufsicht auf die Rampenstruktur 58 der zweiten Kupplungs-Axialbetätigungseinheit 7' mit einem Querschnitt der Schaltwalze 10'. Den drei Abschnitten 13, 14 und 15 der Steuernut 9 in Figur 4 entsprechen in dieser Draufsicht auf das zweite Betätigungselement 12' mit der darunter angeordneten ortsfesten Rampenstruktur 58 Schwenkwinkelbereiche des zweiten Betätigungselements 12'. Die fünf Schaltpositionen "1", "2", "3", "4" und "5" entsprechen fünf Winkelpositionen, welche das zweite Betätigungselement 12' mit den insgesamt drei auf dessen Umfang verteilten Betätigungskörpern 23 einnehmen kann.

Die Betätigungskörper 23 werden jeweils in zwei Richtungen auf rampenförmigen Betätigungskonturen 22 der Rampenstruktur 58 geführt. In der hier gezeigten neutralen Schaltposition "1" weisen die Betätigungskonturen 22 jeweils die tiefste Position der jeweiligen Rampenstruktur 58 in Bezug auf die Zeichenebene auf. Diese tiefste Position erstreckt sich zwischen den Schaltpositionen "2" und "4". In Richtung auf die Schaltposition "3" in dem zweiten Abschnitt 14 oder in Richtung auf die Schaltposition "5" in dem dritten Abschnitt 15 werden die Betätigungskörper auf der Rampenstruktur 58 in Richtung aus der Zeichenebene heraus geführt. Die axiale Erstreckung der Betätigungskontur 22 zeigt demnach unabhängig von der Verschwenkrichtung, also unabhängig davon ob von "1" nach "2" oder von "1" nach "4" verschwenkt wird, in die gleiche Richtung.

Das Betätigungselement 12' weist in einem begrenzten Umfangsbereich eine Antriebsverzahnung 35 auf. Die Antriebsverzahnung 35 erstreckt sich mindestens über einen Umfangsbereich, der dem Winkel zwischen den Schaltpositionen "3" und "5" entspricht.

Figur 6 zeigt die zweite Schaltmuffen-Axialbetätigungseinheit 8' und die Kupplungs-Axialbetätigungseinheit 7' im Querschnitt. Diese Ansicht entspricht nicht der Darstellung in den Figuren 1 bis 3.

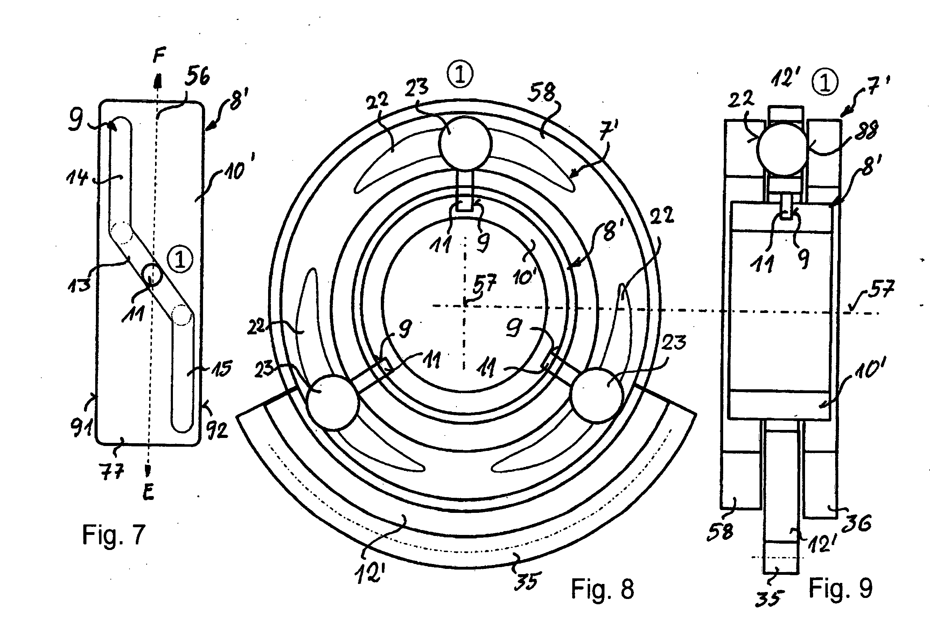

Figur 7, Figur 8 und Figur 9 zeigen Ansichten der Schaltmuffen-Axialbetätigungseinheit 8' und der Kupplungs-Axialbetätigungseinheit 7' in der neutralen Schaltposition "1", in welcher die Schaltpins 11 mittig in dem ersten Abschnitt 13 der Steuernut 9 der zweiten Schaltwalze 10' angeordnet sind. Die Schaltwalze 10' befindet sich in einer Mittelstellung.

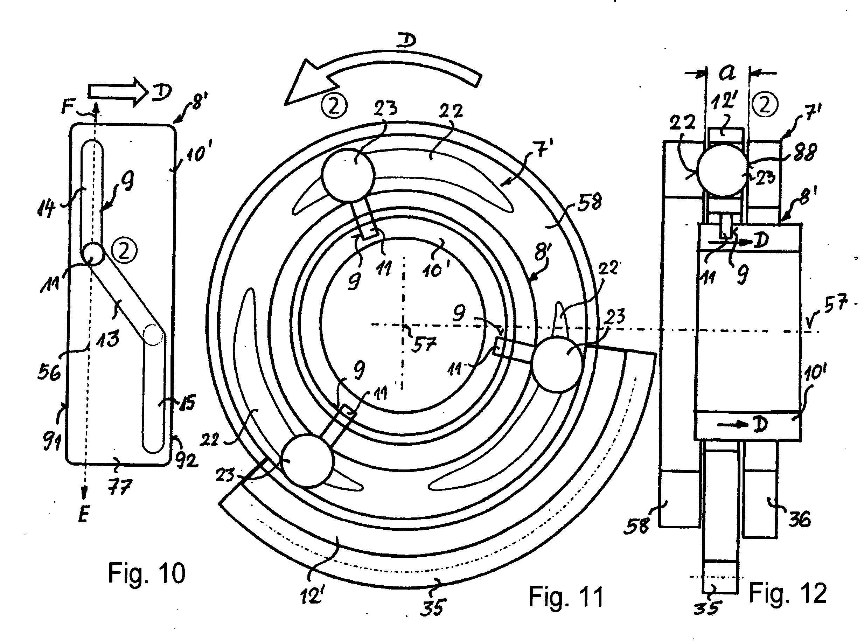

Figur 10, Figur 11 und Figur 12 zeigen Ansichten der Schaltmuffen-Axialbetätigungseinheit 8' und der Kupplungs-Axialbetätigungseinheit 7' in der Schaltposition "2", in welcher die Schaltpins 11 an dem Übergang von dem schrägverlaufenden ersten Abschnitt 13 zu dem gerade verlaufenden Abschnitt 14 der Steuernut 9 angeordnet sind. Die Schaltwalze 10' ist gegenüber der Mittelstellung nach rechts verschoben.

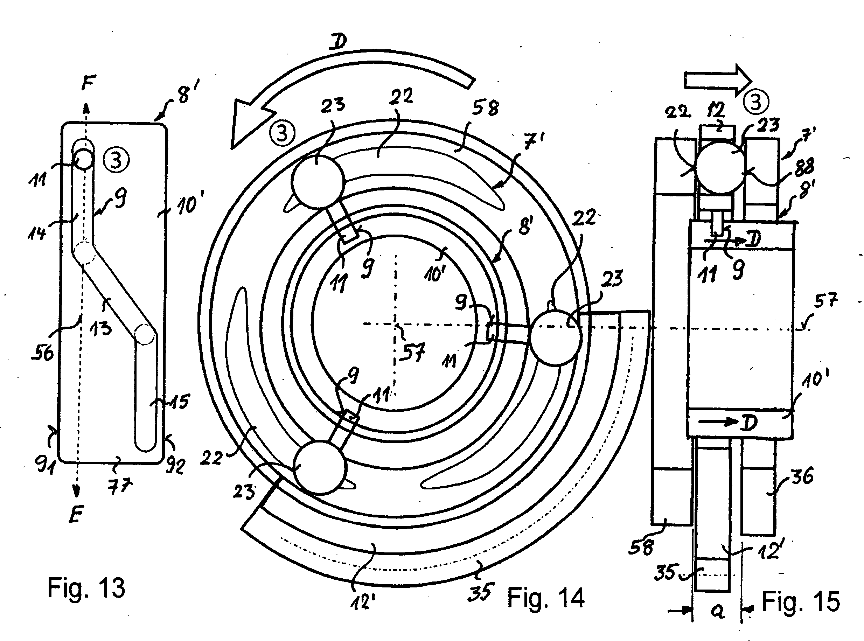

Figur 13, Figur 14 und Figur 15 zeigen Ansichten der Schaltmuffen-Axialbetätigungseinheit 8' und der Kupplungs-Axialbetätigungseinheit 7' in der Schaltposition "3", in welcher die Schaltpins 11 in der Nähe des Endes des gerade verlaufenden zweiten Abschnitts 14 in der Steuernut 9 angeordnet sind. Die Schaltwalze 10' ist gegenüber der Mittelstellung nach rechts verschoben.

In der in den Figuren 1 bis 15 gezeigten Schaltungsanordnung 101 mit der ersten Reibkupplungsbaugruppe 6 und der zweiten Reibkupplungsbaugruppe 6' können über die erste Kupplungs-Axialbetätigungseinheit 7 und über die zweite Kupplungs-Axialbetätigungseinheit 7' in Zusammenwirken mit der ersten Schaltmuffen-Axialbetätigungseinheit 8 und mit der zweiten Schaltmuffen-Axialbetätigungseinheit 8' vier Drehmoment-Übersetzungsverhältnisse mit den Gängen a, b, e und f geschaltet werden.

Im Folgenden wird der Kraftfluss beim Schalten der in Figur 1 gezeigten Gänge a, b e und f beschrieben.

Zum Einlegen von Gang a wird zunächst das zweite Betätigungselement 12' um die Achse 57 verschwenkt. Dazu kämmt die Antriebsverzahnung 35 des zweiten Betätigungselements 12' mit dem zweiten Zwischenrad 30', das von dem zweiten Antrieb 25' angetrieben wird.

Der Schaltpin 11 verschiebt die zweite Schaltwalze 10' und über den Mitnehmer 71 die zweite Schaltmuffe 5' in Pfeilrichtung C, bis die Synchronisierung abgeschlossen ist und die zweite Axialverzahnung 55 der zweiten Schaltmuffe 5' mit der Schaltverzahnung 78 des vierten Losrads 34 in Eingriff steht.

Durch Weiterschwenken des zweiten Betätigungselements 12' wird nun der Betätigungskörper 23 auf der Betätigungskontur 22 in Richtung auf die Druckplatte der zweiten Lamellenkupplung 16' gepresst und damit die zweite Lamellenkupplung 16' geschlossen.

Der Kraftfluss verläuft nach dem Schließen der zweiten Lamellenkupplung 16' von der Eingangswelle 3 über den äußeren Lamellenträger 17, über das äußere Lamellenpaket 19 und das innere Lamellenpaket 20 auf den inneren Lamellenträger 18 und von dort über die zweite Schaltmuffe 5' auf die Schaltverzahnung 78 des vierten Losrads 34. Das vierte Losrad 34 leitet den Kraftfluss über seine mit dem vierten Festrad 44 kämmende Schrägverzahnung 73 zu der zweiten Nebenwelle 67, die den Kraftfluss dem zweiten Abtriebsritzel 52 zuführt, das mit dem Ringrad 60 des Differentials kämmt.

Zum Einlegen von Gang b wird zunächst das zweite Betätigungselement 12' in die andere Umfangsrichtung verschwenkt. Dazu kämmt die Antriebsverzahnung 35 des zweiten Betätigungselements 12' mit dem zweiten Zwischenrad 30', das von dem zweiten Antrieb 25' angetrieben wird.

Der Schaltpin 11, der in der Steuernut 9 der zweiten Schaltwalze 10' gleitverschieblich angeordnet ist, verschiebt die zweite Schaltwalze 10' und über den Mitnehmer 71 die zweite Schaltmuffe 5' in Pfeilrichtung D bis die Synchronisierung abgeschlossen ist und die zweite Axialverzahnung 55 der zweiten Schaltmuffe 5' mit der Schaltverzahnung 79 des dritten Losrads 33 in Eingriff steht.

Durch Weiterschwenken des zweiten Betätigungselements 12' wird dann die Betätigungskugel 23 auf der Betätigungskontur 22 in Pfeilrichtung B gepresst und die zweite Lamellenkupplung 16' geschlossen.

Der Kraftfluss verläuft nach dem Schließen der zweiten Lamellenkupplung 16' von der Eingangswelle 3 über den äußeren Lamellenträger 17, über das äußere Lamellenpaket 19 auf das innere Lamellenpaket 20, und von dort auf den inneren Lamellenträger 18 sowie von dort über die zweite Schaltmuffe 5' auf die Schaltverzahnung 79 des dritten Losrads 33. Von der Schaltverzahnung 79 wird der Kraftfluss über die als zweite Hohlwelle 29' ausgebildete Nabe dem dritten Losrad 33 zugeführt. Das dritte Losrad 33 leitet den Kraftfluss über seine mit dem dritten Festrad 43 kämmende Schrägverzahnung zu der ersten Nebenwelle 62, die den Kraftfluss dem ersten Abtriebsritzel 51 zuführt, das mit dem Ringrad 60 des Differentials kämmt.

Zum Einlegen von Gang e wird zunächst das erste Betätigungselement 12 um die Achse 57 geschwenkt. Dazu kämmt die Antriebsverzahnung 35 des ersten Betätigungselements 12 mit dem ersten Zwischenrad 30, das von dem ersten Antrieb 25 angetrieben wird.

Der Schaltpin 11, der in der Steuernut 9 der ersten Schaltwalze 10 gleitverschieblich angeordnet ist, verschiebt die erste Schaltwalze 10 und über den Mitnehmer 71 die erste Schaltmuffe 5, bis die Synchronisierung abgeschlossen ist, in der die zweite Axialverzahnung der ersten Schaltmuffe 5 mit der Schaltverzahnung des zweiten Losrads 32 in Eingriff steht.

Durch Weiterschwenken des ersten Betätigungselements 12 wird nun der Betätigungskörper 23 auf der Betätigungskontur 22 in Richtung auf die Druckplatte der ersten Lamellenkupplung 16 gepresst und damit die erste Lamellenkupplung 16 geschlossen.

Der Kraftfluss verläuft nach dem Schließen der ersten Lamellenkupplung 16 von der Eingangswelle 3 über den äußeren Lamellenträger 17, über das äußere Lammellenpaket 19 und das innere Lamellenpaket 20 auf den inneren Lamellenträger 18, und von dort über die erste Schaltmuffe 5 auf die Schaltverzahnung des zweiten Losrads 32. Das zweite Losrad 32 leitet den Kraftfluss über seine mit dem zweiten Festrad 42 kämmende Schrägverzahnung zu der zweiten Nebenwelle 67, die den Kraftfluss dem zweiten Abtriebsritzel 52 zuführt, das mit dem Ringrad 60 des Differentials kämmt.

Zum Einlegen von Gang f wird zunächst das erste Betätigungselement 12' um die Achse 57. Dazu kämmt die Antriebsverzahnung 35 des ersten Betätigungselements 12 mit dem ersten Zwischenrad 30, das von dem ersten Antrieb 25 angetrieben wird.

Der Schaltpin 11 verschiebt die erste Schaltwalze 10 und über den Mitnehmer 71 die erste Schaltmuffe 5, bis die Synchronisierung abgeschlossen ist und die zweite Axialverzahnung 55 der ersten Schaltmuffe 5 mit der Schaltverzahnung des zweiten Losrads 32 in Eingriff steht.

Durch Weiterschwenken des ersten Betätigungselements 12 wird dann die Betätigungskugel 23 auf der Betätigungskontur 22 in Richtung auf die Druckplatte der ersten Lamellenkupplung 16 gepresst und die erste Lamellenkupplung 16 betätigt.

Der Kraftfluss verläuft nach dem Schließen der ersten Lamellenkupplung 16 von der Eingangswelle 3 über den äußeren Lamellenträger 17, und über das äußere Lamellenpaket 19 auf das innere Lamellenpaket 20, von dort weiter auf den inneren Lamellenträger 18 und von dort über die erste Schaltmuffe 5 auf die Schaltverzahnung des ersten Losrads 31. Von der Schaltverzahnung wird der Kraftfluss über die als erste Hohlwelle 29 ausgebildete Nabe dem ersten Losrad 31 zugeführt. Das erste Losrad 31 leitet den Kraftfluss über seine mit dem ersten Festrad 41 kämmende Schrägverzahnung zu der ersten Nebenwelle 62, die den Kraftfluss dem ersten Abtriebsritzel 51 zuführt, das mit dem Ringrad 60 des Differentials kämmt.

Die Betätigung der Schaltmuffe 5, 5' sowie der Reibkupplungsbaugruppe 6, 6' erfolgt dabei im Einzelnen wie nachfolgend anhand der Figuren 5 bis 15 dargelegt ist.

Wie in Figur 5 gut zu sehen ist, werden beim Verschwenken des zweiten Betätigungselements 12' zum Verschieben der zweiten Schaltwalze 10' gleichzeitig die Betätigungskörper 23 um die Achse 57 bewegt. Dabei rollen die Betätigungskörper 23 auf der mit dem Geriebegehäuse 28 verbundenen Rampenstruktur 58 ab. Die drei Betätigungskonturen 22 weisen dabei zwischen Schaltpositionen "1" und "2" bzw. "4" eine tiefste Position in der Rampenstruktur 58 auf, so dass die Betätigungskörper 23 in diesem Bereich keinen oder nur einen geringen Druck auf den Axiallagerring 36 ausüben. Somit sind das innere Lamellenpaket 20 und das äußere Lamellenpaket 19, wie in den Figuren 1 bis 3 gezeigt, voneinander gelöst.

Der Schaltpin 11 bewegt sich dabei von einer mittleren neutralen Schaltposition "1" aus, wie es Figur 4 zeigt, auf einer geraden Spur bzw. Trajektorie 56 in Richtung E oder in Richtung F. Diese Spur kennzeichnet dabei eine Bewegung des Schaltpins 11 in Umfangrichtung. Wenn der Schaltpin 11 in dem ersten schrägverlaufenden Abschnitt 13 entweder nach E oder nach F bewegt wird, bewegt sich aufgrund der geneigten Ausbildung der Steuernut 9 die zweite Schaltwalze 10' axial in Pfeilrichtung C oder axial in Pfeilrichtung D. Bewegt sich der Schaltpin 11 auf seiner Spur 56 in Richtung auf die Schaltposition "2" zu, wird die zweite Schaltwalze 10' axial in Richtung D verschoben und sie nimmt die zweite Schaltmuffe 5' mit, so dass nach Synchronisieren der Drehzahlen des inneren Lamellenträgers 18 und des zugehörigen Lamellenpakets 20 mit dem viertem Losrad 34 eine formschlüssige Verbindung zwischen der Eingangswelle 3 und dem viertem Losrad 34 hergestellt ist. Dabei ist die zweite Innenverzahnung 55 der zweiten Schaltmuffe 5' über die Verzahnung des Synchronringes 39 auf die Schaltverzahnung 79 des dritten Losrads 33 geschoben. Während dieses Schaltvorgangs steht die zweite Schaltwalze 10' durch eine Axialverzahnung 40 mit einer Innenverzahnung 72 des Getriebegehäuses 28 in Eingriff und ist so rotatorisch fixiert und dabei trotzdem axial verschieblich.

Eine weitere Verschwenkung des zweiten Betätigungselements 12' durch die Antriebsverzahnung 35 in die Stellung "3" in Figur 4 und Figur 5 bewirkt aufgrund der Ausgestaltung der Steuernut 9 keine axiale Verschiebung der zweiten Schaltwalze 10' mehr, sondern nur noch eine Betätigung der Reibkupplungsbaugruppe 6'.

Die Reibkupplungsbaugruppe 6 wird dabei wie folgt betätigt. Um ein Drehmoment zu übertragen, werden die Lamellenpakete 19 und 20 der zweiten Lamellenkupplung 16' durch die Druckplatte 21 zusammengepresst. Dazu wird das zweite Betätigungselement 12' durch die Antriebsverzahnung 35 derart in die Stellung "3" verschwenkt, daß der Betätigungskörper 23 auf der Betätigungskontur 22 der mit dem Getriebegehäuse 28 fest verbundenen Rampenstruktur 58 abrollt. Beim Rollen auf der Betätigungskontur 22 der Rampenstruktur 58 wird der Betätigungskörper 23 in Pfeilrichtung bewegt, wie man am besten in Fig. 3 sieht. Dabei übt der Betätigungskörper 23 über den Axiallagerring 36, das Axiallager 24 und über die Druckplatte 21 einen Anpressdruck auf die Lamellen des inneren Lamellenpakets 20 und auf die Lamellen des äußeren Lamellenpakets 19 aus. Zum Lösen der Reibschlußverbindung zwischen den Lamellen des inneren Lamellenpakets 20 und den Lamellen des äußeren Lamellenpakets 19 wird das zweite Betätigungselement 12' durch die Antriebsverzahnung 35 derart zurück in seine Ausgangslage "2" verschwenkt, dass sich der Betätigungskörper 23 in Pfeilrichtung A bewegen kann. Die zuvor wirkende Axialkraft wird im Zuge der Rückstellung des Betätigungselements auf ein Minimum abgebaut.

In der anderen Richtung funktioniert die Kupplungs- und Synchronisierungseinrichtung 1'genauso. Wird der Schaltpin 11 aufgrund einer Betätigung des zweiten Betätigungselements 12' von seiner neutralen Schaltposition "1" in Richtung auf die Schaltposition "4" zu bewegt, dann bewegt sich die zweite Schaltwalze 10' umgekehrt in Pfeilrichtung C. Bei der Schaltposition "4" ist ein Synchronisationsvorgang abgeschlossen und eine formschlüssige Verbindung zwischen dem dritten Losrad 33 und dem inneren Lamellenträger 18 hergestellt. Eine Verschwenkung des zweiten Betätigungselements 12' in die Stellung "5" bewirkt anschließend ein Schließen der Reibkupplungsbaugruppe 6'.

Die fünf in Figur 5 gezeigten Schaltpositionen "1", "2", "3", "4", und "5" können dadurch erreicht werden, dass ein wie in Figur 1 gezeigtes zweites Zwischenrad 30, das von einem Elektromotor mit Schneckentrieb angetrieben wird, in die Antriebsverzahnung 35 eingreift und das zweite Betätigungselement 12' um die Achse 57 verstellt. Die Antriebsverzahnung 35 kann dazu einen Teilbereich des Außenumfangs des zweiten Betätigungselements 12' umfassen.

Figur 7 zeigt eine neutrale Schaltposition "1" des Schaltpins 11 in dem ersten Abschnitt 13 der Steuernut 9 in näherem Detail. Ausgehend von der neutralen Schaltposition "1" des Schaltpins 11 kann je nach Bewegung des Schaltpins 11 in Pfeilrichtung F oder in Pfeilrichtung E das vierte Losrad 34 oder das dritte Losrad 33 an den inneren Lamellenträger 18 angekoppelt werden.

Durch ein axiales Verschieben in Pfeilrichtung D wird die zweite Innenverzahnung 55 der zweiten Schaltmuffe 5' mit der Schaltverzahnung 79 des dritten Losrads 33 in Eingriff gebracht. Bei einem axialen Verschieben der zweiten Schaltmuffe 5' in Pfeilrichtung D wird die zweite Innenverzahnung 55 der zweiten Schaltmuffe 5' mit der Schaltverzahnung 78 des vierten Losrads 34 in Eingriff gebracht.

Figur 10 zeigt eine Schaltposition "2" des Schaltpins 11 in der Steuernut 9 bei einer axialen Verschiebung der zweiten Schaltwalze 10' in Pfeilrichtung D. In dieser Stellung ist die Synchronisation zwischen dem innerem Lamellenträger 18 und dritten Losrad 33 abgeschlossen und ein formschlüssiger Eingriff hergestellt. Aufgrund der Gestaltung der Steuernut 9 wird eine axiale Bewegung der zweiten Schaltwalze 10' entlang dem zweiten Abschnitt 14 blockiert. Anschließend kann durch ein Aufwärtsrollen der Betätigungskörper 23 in der rampenförmigen Betätigungskontur 22 eine zunehmende Kraft über den Axiallagerring 36 und das Axiallager 24 auf die Druckplatte 21 der zweiten Lamellenkupplung 16 ausgeübt werden, was zum Schließen der Reibkupplungsbaugruppe 6' führt.

Dazu ist gut in Figur 11 zu sehen, dass die Rampenstruktur 58 mit dem Getriebegehäuse 28 fest und unbeweglich verbunden ist und ihre Schaltposition nicht ändert, während durch die Antriebsverzahnung 35 die Betätigungskörper 23 sich aus der Zeichenebene heraus bewegen, solange die Drehrichtung um die Achse 57 in Pfeilrichtung D fortgesetzt wird. Figur 12 zeigt die Schaltwalze 10', die sich axial aus ihrer neutralen Schaltposition in Pfeilrichtung D herausbewegt.

Figur 13 zeigt eine Schaltposition "3" des Schaltpins 11 in der Steuernut 9 in näherem Detail, wobei der Schaltpin 11 nahezu das Ende des zweiten Abschnitts 14 der Steuernut 9 erreicht hat. Im Abschnitt 14 erfolgt keine axiale Verschiebung der Schaltwalze 10'. Wie in Figur 14 und in besonders in Figur 15 im Vergleich zu der Figur 12 zu sehen ist, sind die Betätigungskörper 13 gegenüber der Position "2" angehoben.

In dieser Position üben die Betätigungskugeln 23 eine Kraft auf die Druckplatte 21 der zweiten Lamellenkupplung 16' aus. Diese Erhöhung der Kraft setzt erst ein, wenn die Synchronisierungsphase der Innenverzahnung 55 der zweiten Schaltmuffe 5' mit der Axialverzahnung 79 des dritten Losrads 33 abgeschlossen ist. In der Schaltposition "3" befinden sich die Betätigungskörper 23 durch die Drehung des zweiten Betätigungselements 12' in einer Position, in der die gewünschte Kupplungskraft erreicht ist und in Pfeilrichtung wirkt. Dies wird auch in Figur 15 gezeigt, in der ein Abstand a zwischen dem Axiallagerring 36 und der an dem Getriebegehäuse 28 fixierten Rampenstruktur 58 gegenüber der Darstellung in den Figuren 9 und 12 vergrößert dargestellt ist.

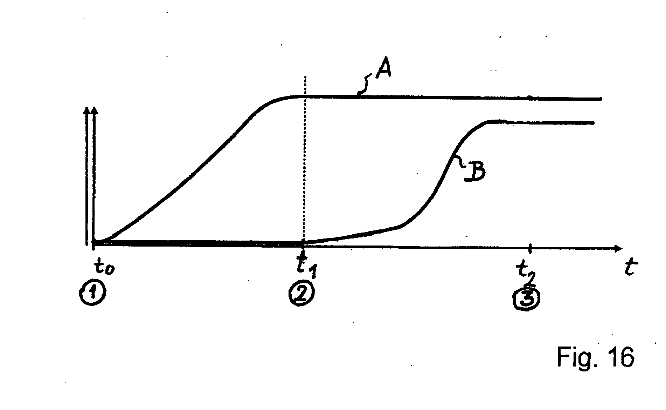

Figur 16 zeigt ein Diagramm mit dem Verlauf der Axialbewegung der zweiten Schaltmuffe 5' wie es die Figuren 9, 12 und 15 zeigen im Vergleich zum Verlauf einer auf einen Betätigungskörper 23 des zweiten Betätigungselements 12' wirkenden Axialkraft beim Schalten eines Gangs. Der Graph A stellt den Ablauf der Axialbewegung der zweiten Schaltmuffe 5' dar, während der Graph B die Axialkraft die auf die Betätigungskörper 23 zeigt. In Richtung der Ordinate ist die jeweilige Kraft bzw. der jeweilige Weg aufgetragen und in Richtung der Abszisse die Zeit t.

Zum Zeitpunkt t = t₀ befindet sich der Schaltpin 11 in der neutralen Schaltposition "1". Vom Zeitpunkt t₀ an nimmt die axiale Verschiebung der zweiten Schaltmuffe 5' aufgrund der Bewegung der zweiten Schaltwalze 10' zu, wie der Graph A zeigt. Die Axialkraft, die mittels der Betätigungskontur 22 auf die Betätigungskugel 23 wirkt, bleibt in diesem Zeitintervall von t₀ bis t₁ Null, d.h. es gibt keine Krafteinwirkung auf den Betätigungskörper 23.

Mit Erreichen des Zeitpunktes t₁ in der Schaltposition "2" endet die axiale Verschiebung der zweiten Schaltmuffe 5', wie es der Graph A zeigt. Die Axialkraft auf die Betätigungskörper 23 hingegen wächst an, weil mit der Schaltposition "2" im Zeitpunkt t₁ ein Rampenbereich der Betätigungskontur 22 erreicht wird. Die Axialkraft der Betätigungskörper 23 auf die Druckplatte 21 nimmt zu, bis in der Schaltposition "3" zum Zeitpunkt t₂ eine gewünschte Kraft bzw. ein Zielwert für die Kraft erreicht ist.

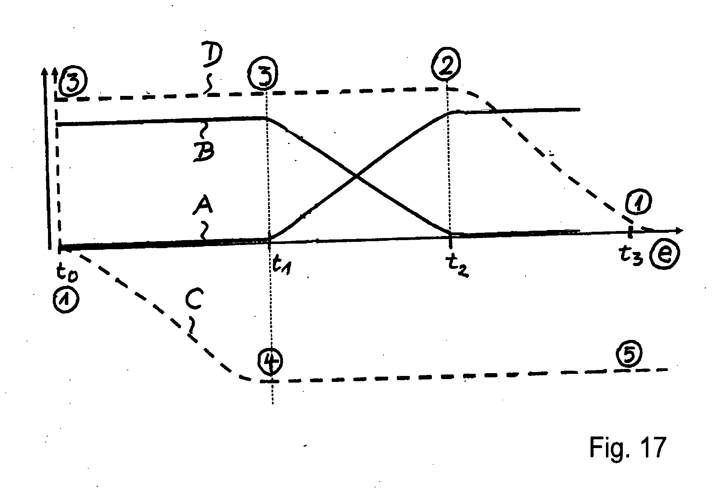

Figur 17 zeigt ein Diagramm der Drehmomentübertragung beim Lastwechseln von der ersten Reibkupplungsbaugruppe 6 auf die zweite Reibkupplungsbaugruppe 6' und den Verlauf des Lösens und Einlegens von Gängen "a" und "e", die der ersten und der zweiten Reibkupplungsbaugruppe 6 bzw. 6' zugeordnet sind. Die Drehmomentübertragung der ersten Reibkupplungsbaugruppe 6 wird in Abhängigkeit von der Zeit t mit dem Graphen A mit durchgezogener Linie gezeigt, und die Drehmomentübertragung der zweiten Reibkupplungsbaugruppe 6' wird in Abhängigkeit von der Zeit t mit dem Graphen B mit durchgezogener Linie gezeigt. Die Bewegung der ersten Schaltmuffe 5 wird in Abhängigkeit von der Zeit t mit den Graphen C mit gestrichelter Linie gezeigt, und die Bewegung der zweiten Schaltmuffe 5' wird in Abhängigkeit von der Zeit t mit den Graphen D mit gestrichelter Linie gezeigt.

Im Zeitpunkt t₀ ist die erste Reibkupplungsbaugruppe 6 gelöst d.h. nicht im Reibschluss und sie überträgt kein Drehmoment, wie der Graph A zeigt, da keine Kraft durch die Betätigungskörper 23 auf die erste Druckplatte 21 ausgeübt wird. Die erste Schaltwalze 10 mit der ersten Schaltmuffe 5 befindet sich zu diesem Zeitpunkt t₀ in der neutralen Schaltposition "1". Der Vorgang des Einlegens eines Gangs a beginnt, wie der Graph C zeigt, und er ist zum Zeitpunkt t₁ abgeschlossen, wenn die erste Schaltmuffe 5 die Schaltposition "4" erreicht hat.

Zum Zeitpunkt t₀ ist die zweite Reibkupplungsbaugruppe 6' geschlossen und überträgt das volle Drehmoment, wie Graph D zeigt. Die zweite Schaltmuffe 5' befinden sich während des gesamten Zeitintervalls von t₀ bis t₁ in der Schaltposition "3", so dass das volle Drehmoment über das zweite Festrad 42 übertragen wird.

Im Zeitpunkt t₁ beginnt eine Verminderung der Drehmomentübertragung der zweiten Reibkupplungsbaugruppe 6', während die Drehmomentübertragung der ersten Reibkupplungsbaugruppe 6 bereits ansteigt, wie es die Graphen A und B im Zeitintervall zwischen t₁ und t₂ zeigen. Gleichzeitig geht die zweite Schaltwalze mit der zweiten Schaltmuffe 5' von der Schaltposition "3" in die Schaltposition "2" über, allerdings ohne den Gang e auszulegen. Erst wenn die Schaltposition "2" im Zeitpunkt t₂ verlassen wird, beginnt das Auslegen des Gangs e in die Schaltposition "1". Dies ermöglicht ein stufenloses Schalten und Kuppeln zwischen den Gängen e und a.

Die beschriebene Schaltanordnung funktioniert grundsätzlich auch mit nur einer einzigen Nebenwelle, wenngleich hier ein Getriebe mit zwei Nebenwellen gezeigt ist.

Die Betätigungskugel 23 in den Figuren 1 bis 15 ist radial und tangential spielarm im Betätigungselement 12 zu führen, um eine gute Funktion zu gewährleisten. Die Betätigungskugel 23 läuft ferner in einer umlaufenden Kontur im Axiallagerring 36, die als Umfangsnut ausgebildet ist.

Zur rotatorischen Kopplung von Schaltmuffe und innerem Lamellenträger ist eine Axialverzahnung zu bevorzugen.

Bei dem vorstehend beschriebenen Ausführungsbeispiel ist hervorzuheben, daß die Schaltwalze axial fest bezüglich der Schaltmuffe angeordnet ist, aber zu dieser drehbar.

Wenn die Gänge geschaltet sind, dann dreht das jeweils geschaltete Losrad mit der Eingangswelle mit, und zwar mit der selben Drehzahl. Das nicht geschaltete Losrad wird entsprechend seiner Übersetzung "von hinten" angetrieben, nämlich über das andere Festrad der betreffenden Nebenwelle.

Die Synchronisierung ist in den vorhergehenden Figuren nur schematisch dargestellt, weil diese für die Funktion der Anordnung nicht im Vordergrund steht. Es kommt darauf an, daß bei eingerasteter Schaltmuffenverzahnung in der Schaltverzahnung das jeweilige Losrad fest mit der Eingangswelle verbunden ist.

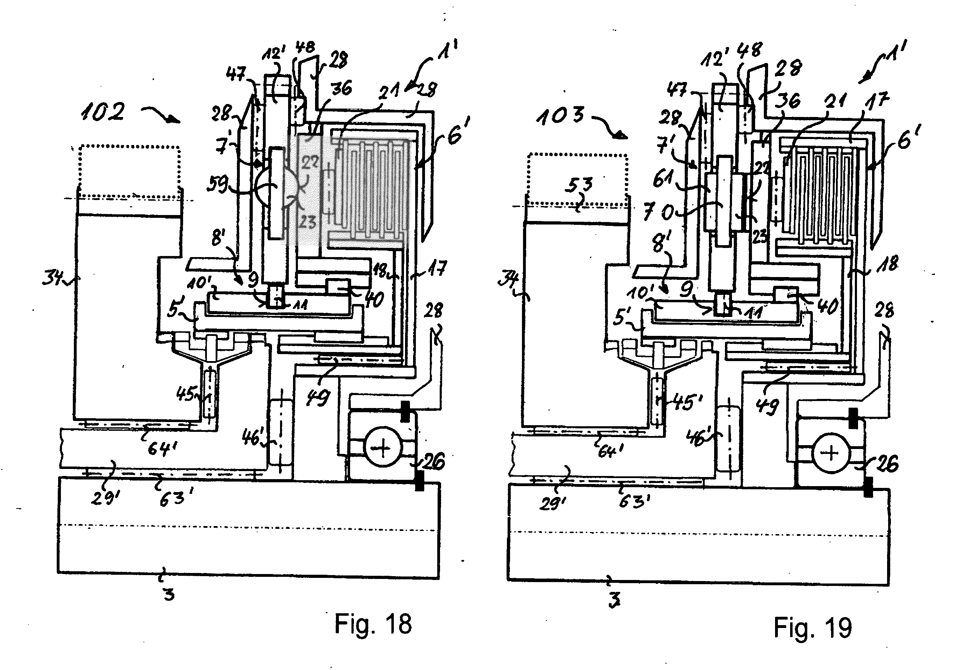

Figur 18 zeigt einen vergrößerten Ausschnitt einer zweiten mechanisch gekoppelten Kupplungs- und Synchronisierungseinrichtung 1' einer Schaltanordnung 102 gemäß einer zweiten Ausführungsform der Erfindung. Auch in dieser zweiten Ausführungsform der Erfindung ist als zweites Betätigungselement 12' ein Betätigungsring vorgesehen, wobei dieser Betätigungsring gegenüber dem Getriebegehäuse 28 mit Axiallagern 47 und 48 gelagert ist. Der Betätigungskörper 23 rollt auf einem Rampenring ab, der eine Betätigungskontur 22 aufweist. Dabei ist in dieser Ausführungsform der Rampenring gleichzeitig der Axiallagerring 36 des Axiallagers 24, das zwischen dem zweiten Betätigungselement 12' und einer Druckplatte 21 der zweiten Reibkupplungsbaugruppe 6' angeordnet ist. Der Betätigungskörper 23 ist mit einer Betätigungskörperachse 59 axial fest aber um sich selbst drehbar im zweiten Betätigungselement 12' geführt.

Die Betätigungskontur 22 ist dabei in der der Druckplatte 21 gegenüberliegenden Lauffläche des Axiallagers 24 vorgesehen, die hier als Oberfläche des Axiallagerrings ausgebildet ist, der als solcher gegenüber dem Getriebegehäuse 28 rotatorisch fixiert aber axial verschieblich ist. Dies kann durch eine Verzahnung gewährleistet werden, oder auch durch einen radialen Pin im Axiallageraußenring 36, der in einer Axialnut im Gehäuse 28 verläuft.

Figur 19 zeigt einen vergrößerten Ausschnitt einer zweiten mechanisch gekoppelten Kupplungs- und Synchronisierungseinrichtung 1' einer Schaltanordnung 103 gemäß einer weiteren Ausführungsform der Erfindung. Bei dieser Ausführungsform der Erfindung sind die Komponenten der mechanisch gekoppelten zweiten Kupplungs- und Synchronisierungseinrichtung 1' die gleichen wie in Figur 18, jedoch ist als Betätigungskörper 23 eine zylindrische Betätigungsrolle 61 vorgesehen.

Die Betätigungsrolle 61 ist drehbar in das zweite Betätigungselement 12' integriert und weist eine Achse 70 auf. Der Betätigungskörper 23 rollt auf einem Rampenring mit flacher Oberfläche ab, die eine rampenförmige Betätigungskontur 22 aufweist.

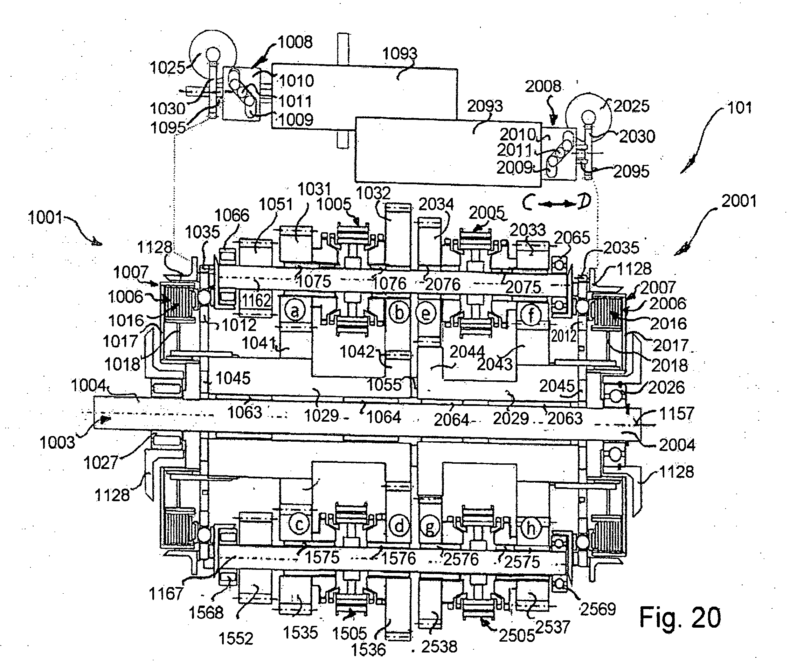

Die Figuren 20-35 behandeln eine zweite Ausgestaltung der Erfindung. Figur 20 zeigt eine Schaltanordnung 101 für ein Schaltgetriebe, mit einer ersten mechanisch gekoppelten Kupplungs- und Synchronisierungseinrichtung 1001 und einer zweiten mechanisch gekoppelten Kupplungs- und Synchronisierungseinrichtung 2001.

Die Schaltanordnung 101 ist in einem Getriebegehäuse 1128 angeordnet und weist eine Eingangswelle 1003 auf. Die Eingangswelle 1003 ist in dem Gehäuse 1128 in einem Rillenwälzlager 1126 als Festlager und einem Rollenwälzlager 1027 als Loslager gelagert. Die Eingangswelle 1003 weist auf der linken Seite der Zeichnung einen ersten Endbereich 1004 und auf der rechten Hälfe der Zeichnung einen zweiten Endbereich 2004 auf.

Das Getriebe weist weiterhin eine erste Nebenwelle 1162 und eine zweite Nebenwelle 1167 auf, die parallel zur Eingangswelle 1003 angeordnet sind. Bezugszeichen von gleichen Komponenten der Figur 20, die im Bereich des ersten Endbereichs 1004 und im Bereich des zweiten Endbereichs 2004 angeordnet sind, unterscheiden sich durch eine Systematik, die einer Symmetrie in der Anordnung folgt. Die erste Stelle des vierstelligen Bezugszeichens weist eine "1" auf, wenn die betreffende Komponente im Bereich des ersten Endbereiches 1004 vorgesehen ist, während die erste Stelle des vierstelligen Bezugszeichens eine "2" aufweist, wenn die betreffende Komponente im Bereich des zweiten Endbereichs 2004 vorgesehen ist. Die dritte und vierte Stelle der Bezugszeichen dieser Komponenten stimmt überein.

Bezugszeichen von gleichen Komponenten der Figur 20, die im Bereich der ersten Nebenwelle 1162 und im Bereich der zweiten Nebenwelle 1167 angeordnet sind, unterscheiden sich ebenfalls durch eine Systematik, die einer weiteren Symmetrie in der Anordnung folgt. Die zweite Stelle des vierstelligen Bezugszeichens weist eine "0" auf, wenn die betreffende Komponente im Bereich der ersten Nebenwelle 1162 vorgesehen ist, während die zweite Stelle des vierstelligen Bezugszeichens eine "5" aufweist, wenn die betreffende Komponente im Bereich der zweiten Nebenwelle 1167 vorgesehen ist. Die dritte und vierte Stelle der Bezugszeichen dieser Komponenten stimmt überein.

Die Lagerung der ersten Nebenwelle 1162 weist ein Kugelwälzlager 2065 als Festlager und ein Rollenwälzlager 1066 als Loslager auf. Die Lagerung der zweiten Nebenwelle 1167 weist ein Kugelwälzlager 2569 als Festlager und ein Rollenwälzlager 1568 als Loslager auf.

Auf der Eingangswelle 1003 ist in dem ersten Endbereich 1004 eine erste Hohlwelle 1029 vorgesehen. Die erste Hohlwelle 1029 ist auf der Eingangswelle 1003 mit Radiallagern 1063 und 1064 sowie zwischen einem ersten Axiallager 1045 und einem zweiten Axiallager 1055 gelagert. Auf der ersten Hohlwelle 1029 ist ein erstes Festrad 1041 und ein zweites Festrad 1042 angeordnet.

Im zweiten Endbereich 2004 ist eine zweite Hohlwelle 2029 angeordnet. Die zweite Hohlwelle 2029 ist auf der Eingangswelle 1003 mit Radiallagern 2063 und 2064 sowie axial zwischen einem dritten Axiallager 2045 und dem zweiten Axiallager 1055 gelagert. Auf der zweiten Hohlwelle 2029 ist ein drittes Festrad 2043 und ein viertes Festrad 2044 angeordnet.

Auf der ersten Nebenwelle 1162 sind ein erstes Losrad 1031 auf einem Radiallager 1075, ein zweites Losrad 1032 auf einem Radiallager 1076, ein drittes Losrad 2033 auf einem Radiallager 2075 und ein viertes Losrad 2034 auf einem vierten Radiallager 2076 angeordnet. Zwischen dem ersten Losrad 1031 und dem zweiten Losrad 1032 ist eine beidseitig wirkende erste Schaltmuffe 1005 auf der ersten Nebenwelle 1162 angeordnet. Zwischen dem dritten Losrad 2033 und dem vierten Losrad 2034 ist auf der ersten Nebenwelle 1162 eine beidseitig wirkende zweite Schaltmuffe 2005 angeordnet. Ferner ist mit der ersten Nebenwelle 1162 ein erstes Abtriebsritzel 1051 fest verbunden.

Auf der zweiten Nebenwelle 1167 ist ein fünftes Losrad 1535 auf einem Radiallager 1575, ein sechstes Losrad 1536 auf einem Radiallager 1576, ein siebtes Losrad 2537 auf einem Radiallager 2575 und ein achtes Losrad 2538 auf einem Radiallager 2576 gelagert. Zwischen dem fünften Losrad 1535 und dem sechsten Losrad 1536 ist eine beidseitig wirkende dritte Schaltmuffe 1505 angeordnet. Zwischen dem siebten Losrad 2537 und dem achten Losrad 2538 ist eine beidseitig wirkende vierte Schaltmuffe 2505 angeordnet. Ein zweites Abtriebsritzel 1552 ist mit der zweiten Nebenwelle 1167 fest verbunden. Das zweite Abtriebsritzel 1552 und das erste Abtriebsritzel 1051 kämmen mit einer hier nicht gezeigten Verzahnung eines Ringrads eines Differentials.

Ein Gang a wird mit dem ersten Losrad 1031 und dem ersten Festrad 1041 gebildet. Ein Gang b wird mit dem zweiten Losrad 1032 und dem zweiten Festrad 1042 gebildet. Ein Gang c wird mit dem fünften Losrad 1535 und dem ersten Festrad 1041 gebildet. Ein Gang d wird mit dem sechsten Losrad 1536 und dem zweiten Festrad 1042 gebildet. Ein Gang e wird mit dem vierten Losrad 2034 und dem vierten Festrad 2044 gebildet. Ein Gang f wird mit dem dritten Losrad 2033 und dem dritten Festrad 2043 gebildet. Ein Gang g wird mit dem achten Losrad 2538 und dem vierten Festrad 2044 gebildet. Ein Gang h wird mit dem siebten Losrad 2537 und dem dritten Festrad 2043 gebildet.

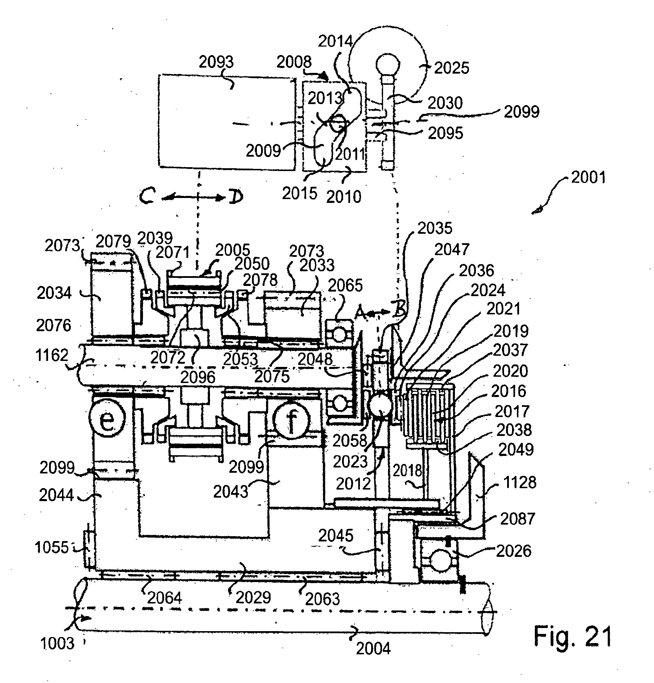

Die Losräder weisen Schrägverzahnungen 2073 auf, die mit Schrägverzahnungen 2099 der Festräder kämmen, wie in Figur 21 gezeigt.

Auf dem ersten Endbereich 1004 der Eingangswelle 1003 ist eine erste Reibkupplungsbaugruppe 1006 mit einer ersten Lamellenkupplung 1016 angeordnet. Ein äußerer Lamellenträger 1017 der ersten Lamellenkupplung 1016 ist mit der Eingangswelle 1003 fest verbunden. Ein innerer Lamellenträger 1018 ist mit der ersten Hohlwelle 1029 drehfest verbunden.

Zur Betätigung der ersten Reibkupplungsbaugruppe 1006 ist eine erste KupplungsAxialbetätigungseinheit 1007 vorgesehen. Die erste KupplungsAxialbetätigungseinheit 1007 weist ein erstes Betätigungselement 1012 mit einer ersten Antriebsverzahnung 1035 auf. Die erste Antriebsverzahnung 1035 steht über ein erstes Zwischenrad 1030 einer ersten Schaltmuffen-Axialbetätigungseinheit 1008 in Wirkverbindung mit einem ersten Antrieb 1025.

Das erste Zwischenrad 1030 ist auf einer ersten Betätigungswelle 1095 mit einer Symmetrieachse 1099 vorgesehen, auf der eine erste Schaltwalze 1010 axial fest und rotatorisch beweglich angeordnet ist. Die erste Schaltwalze 1010 hat eine erste Steuernut 1009, in der ein bezüglich dem Getriebegehäuse 1128 rotatorisch gehäusefester erster Schaltpin 1011 gleitverschieblich angeordnet ist. Der erste Schaltpin 1011 steht in Wirkverbindung mit einer Schaltgabel-Vorwahl-Betätigungsvorrichtung 1093, die ihrerseits in selektiver Wirkverbindung mit der ersten Schaltmuffe 1005 und der dritten Schaltmuffe 1505 steht.

Auf dem zweiten Endbereich 2004 der Eingangswelle 1003 ist eine zweite Reibkupplungsbaugruppe 2006 mit einer zweiten Lamellenkupplung 2016 angeordnet. Ein äußerer Lamellenträger 2017 der ersten Lamellenkupplung 2016 ist mit der Eingangswelle 1003 fest verbunden. Ein innerer Lamellenträger 2018 ist mit der zweiten Hohlwelle 2029 drehfest verbunden.

Zur Betätigung der zweiten Reibkupplungsbaugruppe 2006 ist eine zweite Kupplungs-Axialbetätigungseinheit 2007 vorgesehen. Die zweite KupplungsAxialbetätigungseinheit 2007 weist ein zweites Betätigungselement 2012 mit einer zweiten Antriebsverzahnung 2035 auf. Die zweite Antriebsverzahnung 2035 steht über ein zweites Zwischenrad 2030 einer zweites Schaltmuffen-Axialbetätigungseinheit 2008 in Wirkverbindung mit einem zweiten Antrieb 2025.

Das zweite Zwischenrad 2030 ist auf einer zweiten Betätigungswelle mit einer Symmetrieachse 2099 vorgesehen, auf der eine zweite Schaltwalze 2010 axial fest und rotatorisch beweglich angeordnet ist. Die zweite Schaltwalze 2010 hat eine erste Steuernut 2009, in der ein bezüglich dem Getriebegehäuse 1128 axial beweglicher und rotatorisch festgelegterzweiter Schaltpin 2011 gleitverschieblich angeordnet ist. Die zweite Schaltwalze 2010 steht in Wirkverbindung mit einer SchaltgabelWählbetätigungsvorrichtung 2093, die ihrerseits in selektiver Wirkverbindung mit der zweiten Schaltmuffe 2005 und der vierten Schaltmuffe 2505 steht.

Figur 21 zeigt die zweite Kupplungs- und Synchronisierungseinrichtung 2001 aus Figur 20 in vergrößerter Darstellung.

Die zweite Kupplungs- und Synchronisierungseinrichtung 2001 wirkt über eine zweite Schaltgabelvorwahl-Betätigungsvorrichtung 2093 mit der zweiten Schaltmuffe 2005 über eine hier und in Figur 20 nicht gezeigte Schaltgabel zusammen.

Wie man hier besonders gut sieht, hat die zweite Schaltmuffe 2005 eine Innenverzahnung 2050, die axial verschieblich mit einer Außenverzahnung 2072 einer zweiten Nabe 2096 in Eingriff steht, die fest mit der ersten Nebenwelle 1162 verbunden ist. Die zweite Schaltmuffe 2005 kann ausgehend von der hier gezeigten Neutralstellung über zweite Synchronringe 2053 mit Verzahnungen 2039 entweder mit einer Schaltverzahnung 2078 des dritten Losrades 2033 oder mit einer Schaltverzahnung 2079 des vierten Losrades 2034 verbunden werden.

In der hier gezeigten Neutralstellung steht die zweite Schaltmuffe 2005 weder mit der Schaltverzahnung 2078 des dritten Losrades 2033 noch mit der Schaltverzahnung 2079 des vierten Losrades 2034 in Eingriff.

Der zweite Antrieb 2025 ist als Elektromotor mit einem Schneckentrieb ausgebildet. Wie man hier gut sieht, gliedert sich die zweite Steuernut 2009 in drei Abschnitte 2013, 2014 und 2015.

Figur 21 zeigt auch die zweite Lamellenkupplung 2016 in näherem Detail. Der innere Lamellenträger 2018 ist auf einem Ringabsatz 2087 über ein Radiallager 2049 gelagert. Lamellen eines äußeren Lamellenpakets 2019 sind in einer äußeren Lamellenverzahnung 2037 im äußeren Lamellenträger 2017 axialverschieblich geführt. Die Lamellen eines inneren Lamellenpakets 2018 sind axialverschieblich in einer inneren Lamellenverzahnung 2038 im inneren Lamellenträger 2018 geführt. Die Lamellen des äußeren Lamellenpakets 2019 und die Lamellen des inneren Lamellenpakets 2018 liegen aneinander an und werden von einer Druckplatte 2021 beaufschlagt. Die Druckplatte 2021 steht über ein Axiallager 2024 und einen Axiallagerring 2036 mit einem als Betätigungskugel ausgebildeten Betätigungskörper 2023 in Wirkverbindung.

Der Betätigungskörper 2023 ist zwischen einer am Getriebegehäuse 1128 angeordeneten Rampenstruktur 2058 und einem Axiallagerring 2036 eines Axiallagers 2024 angeordnet.

Wie man hier gut sieht, kämmt die zweite Antriebsverzahnung 2035 des zweiten Betätigungselements 2012 mit der Verzahnung des zweiten Zwischenrades 2030. Dabei ist das zweite Betätigungselement 2012 mittels eines Axiallagers 2048 und eines Axiallagers 2047 in dem Getriebegehäuse 1128 verschwenkbar gelagert.

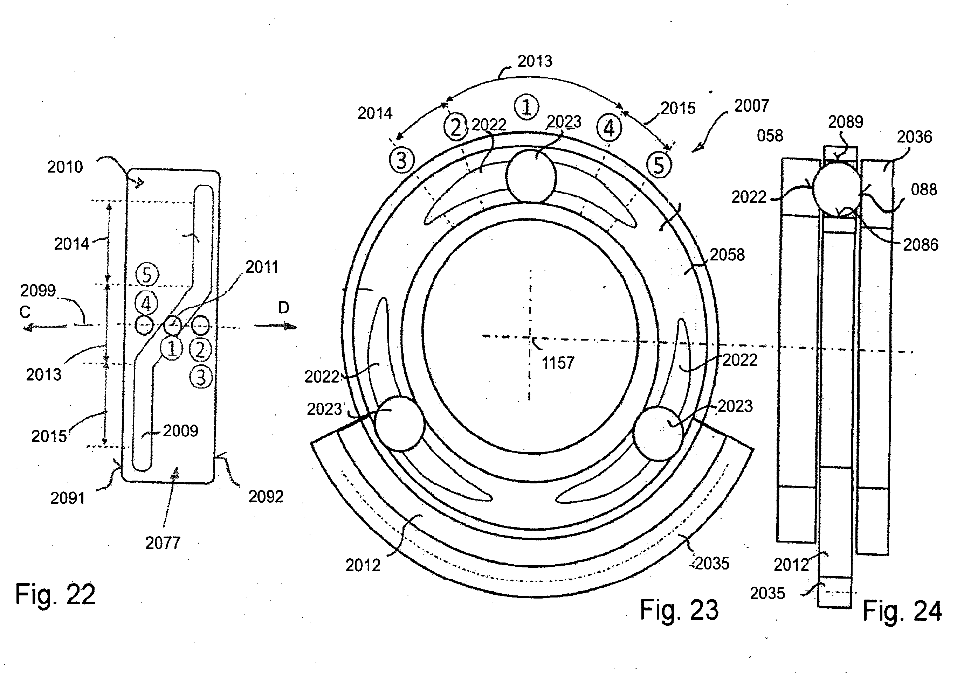

Figur 22 zeigt eine Draufsicht auf einen Umfangsabschnitt 2077 der zweiten Schaltwalze 2010 aus den Figuren 20 und 21, mit der Steuernut 2009 der zweiten Schaltmuffen-Axialbetätigungseinheit 2008. Die Steuernut 2009 weist drei Abschnitte auf, nämlich einen schrägverlaufenden ersten Abschnitt 2013, einen gerade verlaufenden zweiten Abschnitt 2014 sowie einen gerade verlaufenden dritten Abschnitt 2015. Die gerade verlaufenden Abschnitte 2014 und 2015 der Steuernut 2009 sind parallel zu Rändern 2091 und 2092 des Umfangsabschnitts 2077 angeordnet und weisen keine oder nur geringe axiale Ausdehnung auf.

Eine Spur des Schaltpins 2011 ist mit gestrichelter Linie markiert, und Richtungspfeile C und D zeigen mögliche axiale Bewegungsrichtungen an, die der Schaltpin 2011 entlang der Spur einnehmen kann. Der Schaltpin 2011 folgt somit der Steuernut 2009 nur in axialer Richtung und die rotatorische Bewegung der axial feststehenden Schaltwalze 2010 mit der Steuernut 2009 bewirkt die axialen Bewegungen des Schaltpins 2011.

Entlang der Spur sind fünf Schaltpositionen "1", "2", "3", "4" und "5" markiert. Eine erste neutrale Schaltposition "1" ist in der Mitte des schrägverlaufenden ersten Abschnitts 2013 vorgesehen. Die zweite Schaltposition "2" stellt sich am Übergang des ersten Abschnitts 2013 zu dem zweiten Abschnitt 2014 ein. Die dritte Schaltposition "3" stellt sich in der Nähe des Endes des zweiten Abschnitts 2014 ein. Die vierte Schaltposition "4" stellt sich an einem Übergang von dem ersten Abschnitt 2013 zu dem dritten Abschnitt 2015 vorgesehen ein, und die fünfte Schaltposition "5" stellt sich in der Nähe des Endes des dritten Abschnitts 2015 ein. Die zweite Schaltwalze 2010 ist rotatorisch beweglich und dabei axial festgelegt, der Schaltpin 2011 kann sich in Pfeilrichtung C oder D bewegen.

Wie man hier gut sieht, fällt die Symmetrieachse der zweiten Schaltwalze 2010 mit der Symmetrieachse 2099 des zweiten Zwischenrads 2030 und der zweiten Betätigungswelle 2095 zusammen.

Figur 23 zeigt eine Draufsicht auf eine Rampenstruktur 2058 der zweiten Kupplungs-Axialbetätigungseinheit 2007. Wie man hier gut sieht, fällt die Symmetrieachse des zweiten Betätigungselements 2012 mit der Symmetrieachse der Eingangswelle 2003 zusammen.

Den drei Abschnitten 2013, 2014 und 2015 der Steuernut 2009 in Figur 22 entsprechen in dieser Draufsicht auf das zweite Betätigungselement 2012 mit der darunter angeordneten gehäusefesten Rampenstruktur 2058 Schwenkwinkelbereiche des zweiten Betätigungselements 2012. Die fünf Schaltpositionen "1", "2", "3", "4" und "5" entsprechen fünf Winkelpositionen welche das zweite Betätigungselement 2012 mit den insgesamt drei auf dessen Umfang verteilten Betätigungskörpern 2023 einnehmen kann.

Die Betätigungskörper 2023 werden jeweils in axialen Richtungen auf rampenförmigen Betätigungskonturen 2022 der Rampenstruktur 2058 geführt. In der hier gezeigten neutralen Schaltposition "1" weisen die Betätigungskonturen 2022 jeweils die gleiche axiale Position wie in "2" und "3" auf der jeweiligen Rampenstruktur 2058 in Bezug auf die Zeichenebene auf, die der tiefsten Position der Betätigungskontur 2022 entspricht. Diese tiefste Position erstreckt sich zwischen den Schaltpositionen "2" und "4". In Richtung auf die Schaltposition "3" in dem zweiten Abschnitt 2014 oder in Richtung auf die Schaltposition "5" in dem dritten Abschnitt 2015 werden die Betätigungskörper auf der Rampenstruktur 2058 in Richtung aus der Zeichenebene heraus geführt.

Das Betätigungselement weist in einem begrenzten Umfangsbereich eine Antriebsverzahnung 2035 auf. Die Antriebsverzahnung 2035 erstreckt sich mindestens über einen Umfangsbereich, der dem Winkel zwischen Schaltposition "3" und "5" entspricht.

Wie in Figur 23 gut zu sehen ist, werden beim Verschwenken des zweiten Betätigungselements 2012 zum Verdrehen der zweiten Schaltwalze 2010 aufgrund einer mechanischen Kopplung gleichzeitig die Betätigungskörper 2023 um die Achse 1157 bewegt. Dabei rollen die Betätigungskörper 2023 auf der mit dem Getriebegehäuse 1128 verbundenen Rampenstruktur 1058 ab. Die drei Betätigungskonturen 2022 weisen dabei zwischen Schaltpositionen "1" und "2" bzw. "4" eine tiefste Position in der Rampenstruktur 2058 auf, so dass die Betätigungskörper 2023 in diesem Bereich keine oder nur eine geringe Kraft auf den Axiallagerring 2036 ausüben. Somit sind das innere Lamellenpaket 2020 und das äußere Lamellenpaket 2019, wie in den Figuren 20 und 21 gezeigt, voneinander gelöst.

Aufgrund der Rotation der Schaltwalze 2010 bewegt sich der Schaltpin 2011 dabei von einer mittleren neutralen Schaltposition "1" aus, wie es Figur 22 zeigt in Richtung C oder in Richtung D. Wenn sich die Schaltwalze 2010 verdreht und sich somit die Steuernut 2009 in Umfangsrichtung bewegt, dann bewegt sich der Schaltpin 2011 in dem ersten schrägverlaufenden Abschnitt 2013 entweder nach C oder nach D. Bewegt sich der Schaltpin 2011 auf seiner Spur in Richtung auf die Schaltposition "2" zu, wird der Schaltpin 2011 axial z.B. in Richtung D verschoben und er nimmt, z.B. die zweite Schaltmuffe 2005 mit, so dass beispielsweise nach Synchronisieren der Drehzahlen der Hohlwelle 2029 mit dem drittem Losrad 2033 eine formschlüssige Verbindung zwischen der Hohlwelle 2029 und dem dritten Losrad 2033 hergestellt ist. Dabei ist die Innenverzahnung der zweiten Schaltmuffe 2005 über die Verzahnung des Synchronringes auf die Schaltverzahnung des dritten Losrads 2033 geschoben. Während dieses Schaltvorgangs steht der Schaltpin 2011 durch eine Axialverzahnung mit einer Innenverzahnung des Getriebegehäuses 1128 in Eingriff und ist so rotatorisch fixiert und dabei trotzdem axial verschieblich.

Eine weitere Verschwenkung des zweiten Betätigungselements 2012 durch die Antriebsverzahnung 2035 in die Stellung "3" in Figur 22 und Figur 23 bewirkt aufgrund der Ausgestaltung der Steuernut 2009 keine Axialbewegung des Schaltpins 2011 mehr, sondern nur noch eine Betätigung der Reibkupplungsbaugruppe 2006.

Die Reibkupplungsbaugruppe 2006 wird dabei wie folgt betätigt. Um ein Drehmoment zu übertragen, werden die Lamellenpakete 2019 und 2020 der zweiten Lamellenkupplung 2016 durch die Druckplatte 2021 zusammengepresst. Dazu wird das zweite Betätigungselement 2012 durch die Antriebsverzahnung 2035 derart in die Stellung "3" verschwenkt, daß der Betätigungskörper 2023 auf der Betätigungskontur 2022 der mit dem Getriebegehäuse 1128 fest verbundenen Rampenstruktur 2058 abrollt. Beim Rollen auf der Betätigungskontur 2022 der Rampenstruktur 2058 wird der Betätigungskörper 2023 derart bewegt, daß der Betätigungskörper 2023 über den Axiallagerring 2036, das Axiallager 2024 und über die Druckplatte 2021 eine Anpresskraft auf die inneren Lamellen des inneren Lamellenpakets 2020 und auf die Lamellen des äußeren Lamellenpakets 2019 ausübt. Zum Lösen der Reibschlußverbindung zwischen den Lamellen des inneren Lamellenpakets 2020 und den Lamellen des äußeren Lamellenpakets 2019 wird das zweite Betätigungselement 2012 durch die Antriebsverzahnung 2035 zurück in seine Ausgangslage "2" verschwenkt, wodurch der Betätigungskörper 2023 keine oder wenig Kraft auf die zweite Reibkupplungsbaugruppe 2006 ausüben.

In der anderen Richtung funktioniert die Kupplungs- und Synchronisierungseinrichtung 101 genauso. Der Schaltpin 2011 wird aufgrund einer Betätigung des zweiten Betätigungselements 2012 und der Schaltwalze 2010 von der neutralen Schaltposition "1" in Richtung auf die Schaltposition "4", und zwar aufgrund der Drehung der zweiten Schaltwalze 2010 bewegt. Bei der Schaltposition "4" ist ein Synchronisationsvorgang abgeschlossen und eine formschlüssige Verbindung zwischen dem vierten Losrad 2034 und der Hohlwelle 2029 hergestellt. Eine Verschwenkung des zweiten Betätigungselements 2012 in die Stellung "5" bewirkt anschließend ein Schließen der Reibkupplungsbaugruppe 2006.

Die fünf in Figur 23 gezeigten Schaltpositionen "1", "2", I'31', "4", und "5" können dadurch erreicht werden, dass ein wie in Figur 21 gezeigtes zweites Zwischenrad 2030, das von einem Elektromotor mit Schneckentrieb angetrieben wird, in die Antriebsverzahnung 2035 eingreift und das zweite Betätigungselement 2012 um die Achse 1157 verstellt.

Figur 24 zeigt die Kupplungs-Axialbetätigungseinheit 2007 im Querschnitt. Diese Ansicht ist nur schematischer Art und sie entspricht nicht genau der Darstellung in den Figuren 20 und 21.

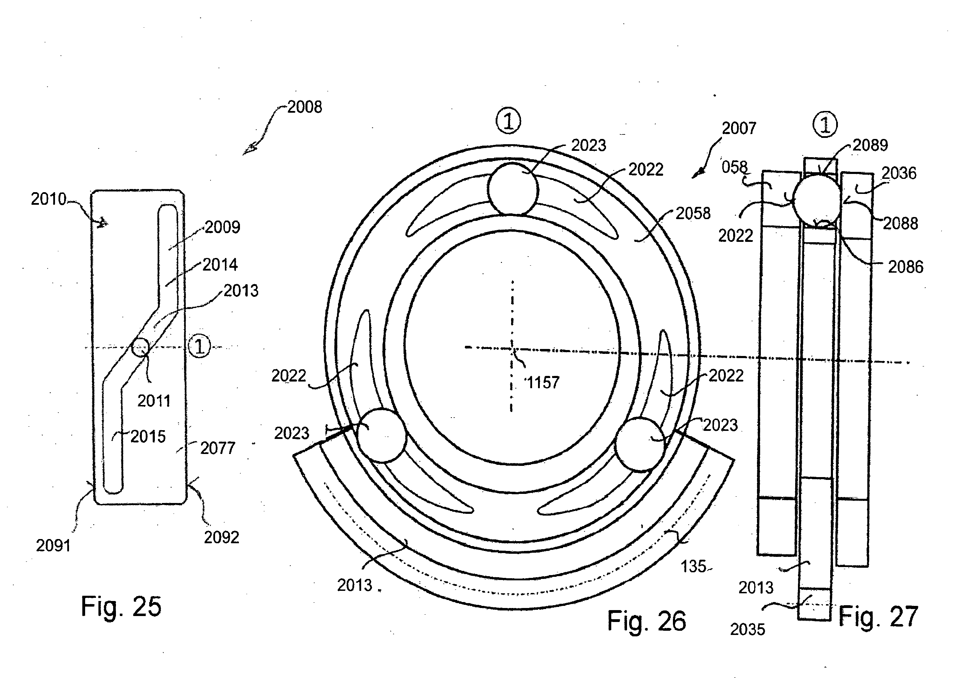

Figur 25, Figur 26 und Figur 27 zeigen korrespondierende Ansichten der SchaltmuffenAxialbetätigungseinheit 2008 und der Kupplungs-Axialbetätigungseinheit 2007 in der neutralen Schaltposition "1", in welcher die Schaltpins 2011 mittig in dem ersten Abschnitt 2013 der Steuernut 2009 der zweiten Schaltwalze 2010 angeordnet sind. Der Schaltpin 2011 befindet sich in einer Mittelstellung.

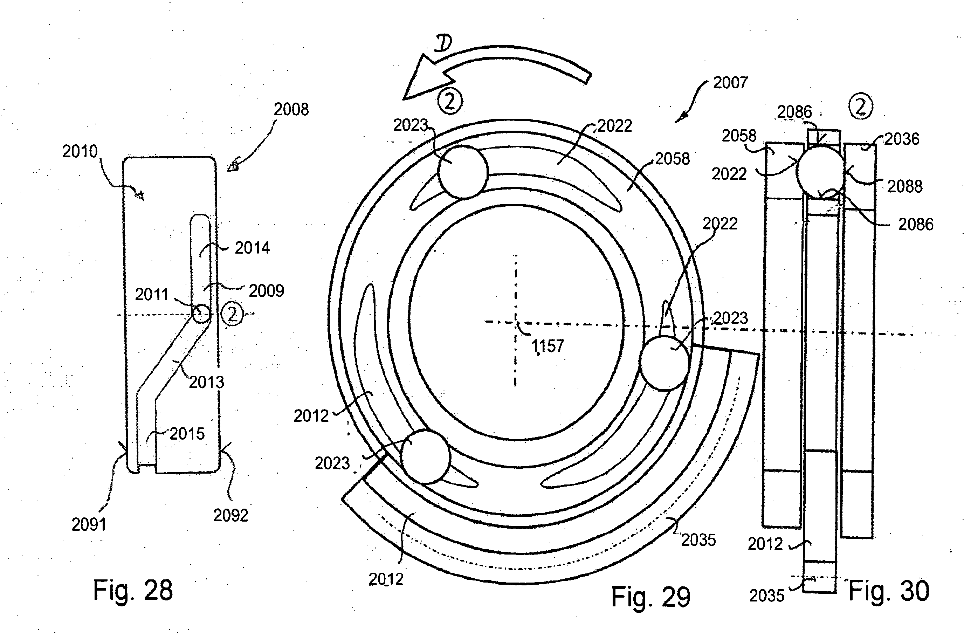

Figur 28, Figur 29 und Figur 30 zeigen korrespondierende Ansichten der Schaltmuffen-Axialbetätigungseinheit 2008 und der Kupplungs-Axialbetätigungseinheit 2007 in der Schaltposition "2" in welcher der Schaltpin 2011 an dem Übergang von dem schrägverlaufenden ersten Abschnitt 2013 zu dem gerade verlaufenden Abschnitt 2014 der Steuernut 2009 angeordnet sind. Der Schaltpin 2011 ist gegenüber der Mittelstellung nach rechts verschoben.

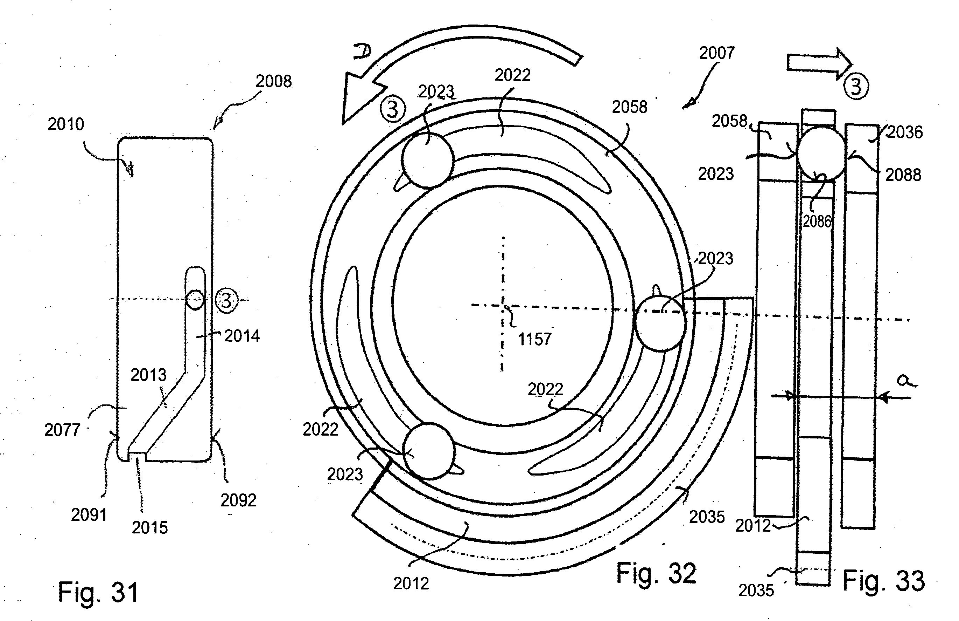

Figur 31, Figur 32 und Figur 33 zeigen korrespondierende Ansichten der Schaltmuffen-Axialbetätigungseinheit 2008 und der Kupplungs-Axialbetätigungseinheit 2007 in der Schaltposition "3" in welcher die Schaltpins 2011 in der Nähe des Endes des gerade verlaufenden zweiten Abschnitts 2014 in der Steuernut 2009 angeordnet sind. Der Schaltpin 2011 ist gegenüber der Mittelstellung nach rechts verschoben. Figur 31 zeigt dabei eine Schaltposition "3" des Schaltpins 2011 in der Steuernut 2009 in näherem Detail, wobei der Schaltpin 2011 nahezu das Ende des zweiten Abschnitts 2014 der Steuernut 2009 erreicht hat. Im Abschnitt 2014 erfolgt keine axiale Verschiebung des Schaltpins 2011. Wie in Figur 32 und insbesondere in Figur 33 im Vergleich zu der Figur 30 zu sehen ist, sind die Betätigungskörper 2023 gegenüber der Position "2" angehoben bzw. nach rechts verschoben.

In dieser Position üben die Betätigungskugeln 2023 eine Kraft auf die Druckplatte 2021 der zweiten Lamellenkupplung 2016 aus. Diese Erhöhung der Kraft setzt erst ein, wenn die Synchronisierungsphase der Innenverzahnung der zweiten Schaltmuffe 2005 oder 2505 mit der Axialverzahnung des dritten Losrads 2033 abgeschlossen ist. In der Schaltposition "3" befinden sich die Betätigungskörper 2023 durch die vorherige Drehung des zweiten Betätigungselements 2012 in einer Schaltposition. Weiterhin wird über die Rampenstruktur 2058 und deren Rampengeometrie durch Ver schwenken des Betätigungselements 2012 eine Kraftübertragung der Betätigungskörper 2023 auf die zweite Reibkupplungsbaugruppe 2006 ausgeübt. Dies wird auch in Figur 33 gezeigt, in der ein Abstand a zwischen dem Axiallagerring 2036 und der an dem Getriebegehäuse 1128 fixierten Rampenstruktur 2058 gegenüber der Darstellung in den Figuren 27 und 30 vergrößert dargestellt ist.

Über das abgegebene Drehmoment des Antriebs 2025 läßt sich hierbei über die Übersetzungen von Schnecke zum Schneckenrad sowie der Übersetung vom Zwischenrad 2030 zum Betätigungselement 2012, über den Winkel der Betätigungskontur 2022 im Kontaktpunkt mit dem Betätigungskörper 2023 die Kraft auf die Kupplung ermitteln. Über die Reibverhältnisse der Kupplung und deren Geometrie kann das übertragbare Kupplungsmoment ermittelt werden

In der in den Figuren 20 bis 33 gezeigten Schaltungsanordnung 101 mit der ersten Reibkupplungsbaugruppe 1006 und der zweiten Reibkupplungsbaugruppe 2006 können über die erste Kupplungs-Axialbetätigungseinheit 1007 und über die zweite KupplungsAxialbetätigungseinheit 2007 in Zusammenwirken mit der ersten Schaltmuffen-Axialbetätigungseinheit 1008 und mit der zweiten Schaltmuffen-Axialbetätigungseinheit 2008 acht Drehmoment-Übersetzungsverhältnisse mit den Gängen a, b, c, d, e, f, g und h geschaltet werden.

Zum Einlegen von Gang a wird zunächst das erste Betätigungselement 1012 um die Achse 1157 verschwenkt. Dazu kämmt die Antriebsverzahnung 1035 des ersten Betätigungselements 1012 mit dem ersten Zwischenrad 1030, das von dem ersten Antrieb 1025 angetrieben wird. Das erste Zwischenrad 1030 verdreht dazu die erste Schaltwalze 1010, was aufgrund des Zusammenwirkens der ersten Steuernut 1009 mit dem ersten Schaltpin 1011 zu einer axialen Verschiebung des ersten Schaltpins 1011 führt.

Die axial feststehende Schaltwalze 1010 verschiebt also den axial beweglichen ersten Schaltpin 1011 und - ausgewählt durch die erste Schaltgabelvorwahl-Betätigungsvorrichtung 1093 - mit einer hier nicht gezeigten Schaltgabel die erste Schaltmuffe 1005 in Pfeilrichtung C, bis die Synchronisierung abgeschlossen ist und die Axialverzahnung der ersten Schaltmuffe 1005 mit der Schaltverzahnung des ersten Losrads 1031 in Eingriff steht.

Durch Weiterschwenken des ersten Betätigungselements 1012 wird nun die erste Lamellenkupplung 1016 geschlossen.

Der Kraftfluss verläuft nach dem Schließen der ersten Lamellenkupplung 1016 von der Eingangswelle 1003 über den äußeren Lamellenträger 1017, über das äußere Lammellenpaket 1019 und das innere Lamellenpaket 1020 auf den inneren Lamellenträger 1018 und von dort über die erste Hohlwelle 1029 auf das erste Festrad 1041. Das erste Festrad 1041 leitet den Kraftfluss über seine mit dem ersten Losrad 1031 kämmende Schrägverzahnung zu der ersten Nebenwelle 1162, die den Kraftfluss dem ersten Abtriebsritzel 1051 zuführt, das mit dem Ringrad des Differentials kämmt.

Zum Einlegen von Gang b wird das erste Betätigungselement 1012 um die Achse 1157 verschwenkt.

Der axial feststehende Schaltwalze 1010 verschiebt den axial beweglichen Schaltpin 1011 und - ausgewählt durch die erste Schaltgabelvorwahl-Betätigungsvorrichtung 1093 - mit einer hier nicht gezeigten Schaltgabel die erste Schaltmuffe 1005 in Pfeilrichtung D, bis die Synchronisierung abgeschlossen ist und die Axialverzahnung der ersten Schaltmuffe 1005 mit der Schaltverzahnung des zweiten Losrads 1032 in Ein griff steht.

Durch Weiterschwenken des ersten Betätigungselements 1012 wird die erste Lamellenkupplung 1016 geschlossen.

Der Kraftfluss verläuft nach dem Schließen der ersten Lamellenkupplung 1016 von der Eingangswelle 1003 über den äußeren Lamellenträger 1017, über das äußere Lammellenpaket 1019 und das innere Lamellenpaket 1020 auf den inneren Lamellenträger 1018 und von dort über die erste Hohlwelle 1029 auf das zweite Festrad 1042. Das zweite Festrad 1042 leitet den Kraftfluss über seine mit dem zweiten Losrad 1032 kämmende Schrägverzahnung zu der ersten Nebenwelle 1162, die den Kraftfluss dem ersten Abtriebsritzel 1051 zuführt, das mit dem Ringrad des Differentials kämmt.

Zum Einlegen von Gang c wird das erste Betätigungselement 1012 um die Achse 1157 verschwenkt.

Die axial feststehende Schaltwalze 1010 verschiebt den axial beweglichen Schaltpin 1011 und - ausgewählt durch die erste Schaltgabelvorwahl-Betätigungsvorrichtung 1093 - mit einer hier nicht gezeigten Schaltgabel die dritte Schaltmuffe 1505 in Pfeilrichtung C, bis die Synchronisierung abgeschlossen ist und die Axialverzahnung der dritten Schaltmuffe 1505 mit der Schaltverzahnung des fünften Losrads 1535 in Eingriff steht.

Durch Weiterschwenken des ersten Betätigungselements 1012 wird die erste Lamellenkupplung 1016 geschlossen.

Der Kraftfluss verläuft nach dem Schließen der ersten Lamellenkupplung 1016 von der Eingangswelle 1003 über den äußeren Lamellenträger 1017, über das äußere Lamellenpaket 1019 und das innere Lamellenpaket 1020 auf den inneren Lamellenträger 1018 und von dort über die erste Hohlwelle 1029 auf das erste Festrad 1041. Das erste Festrad 1041 leitet den Kraftfluss über seine mit dem fünften Losrad 1535 kämmende Schrägverzahnung zu der zweiten Nebenwelle 1167, die den Kraftfluss dem zweiten Abtriebsritzel 1552 zuführt, das mit dem Ringrad des Differentials kämmt.

Zum Einlegen von Gang d wird das erste Betätigungselement 1012 um die Achse 1157 verschwenkt.

Der axial feststehende Schaltwalze 1010 verschiebt den axial beweglichen ersten Schaltpin 1011 und - ausgewählt durch die erste SchaltgabelvorwahlBetätigungsvorrichtung 1093 - mit einer hier nicht gezeigten Schaltgabel die zweite Schaltmuffe 1505 in Pfeilrichtung D, bis die Synchronisierung abgeschlossen ist und die Axialverzahnung der dritten Schaltmuffe 1505 mit der Schaltverzahnung des sechsten Losrads 1536 in Eingriff steht.

Durch Weiterschwenken des ersten Betätigungselements 1012 wird die erste Lamellenkupplung 1016 geschlossen.

Der Kraftfluss verläuft nach dem Schließen der ersten Lamellenkupplung 1016 von der Eingangswelle 1003 über den äußeren Lamellenträger 1017, über das äußere Lamellenpaket 1019 und das innere Lamellenpaket 1020 auf den inneren Lamellenträger 1018 und von dort über die erste Hohlwelle 1029 auf das zweite Festrad 1042. Das zweite Festrad 1042 leitet den Kraftfluss über seine mit dem sechsten Losrad 1536 kämmende Schrägverzahnung zu der zweiten Nebenwelle 1167, die den Kraftfluss dem zweiten Abtriebsritzel 1552 zuführt, das mit dem Ringrad des Differentials kämmt.

Zum Einlegen von Gang e wird das zweite Betätigungselement 2012 um die Achse 1157 verschwenkt. Dazu kämmt die Antriebsverzahnung 2035 des zweiten Betätigungselements 2012 mit dem zweiten Zwischenrad 2030, das von dem zweiten Antrieb 2025 angetrieben wird. Das zweite Zwischenrad 2030 verdreht dazu die zweite Schaltwalze 2010, was aufgrund des Zusammenwirkens der zweiten Steuernut 2009 mit dem zweiten Schaltpin 2011 zu einer axialen Verschiebung des Schaltpins 2011 führt.

Die axial feststehende Schaltwalze 2010 verschiebt also den axial beweglichen Schaltpin 2011 und - ausgewählt durch die zweite SchaltgabelvorwahlBetätigungsvorrichtung 2093 - mit einer hier nicht gezeigten Schaltgabel die zweite Schaltmuffe 2005 in Pfeilrichtung C, bis die Synchronisierung abgeschlossen ist und die Axialverzahnung der zweiten Schaltmuffe 2005 mit der Schaltverzahnung des vierten Losrads 2034 in Eingriff steht.

Durch Weiterschwenken des zweiten Betätigungselements 2012 wird nun die zweite Lamellenkupplung 2016 geschlossen.

Der Kraftfluss verläuft nach dem Schließen der zweiten Lamellenkupplung 2016 von der Eingangswelle 1003 über den äußeren Lamellenträger 2017, über das äußere Lamellenpaket 2019 und das innere Lamellenpaket 2020 auf den inneren Lamellenträger 2018 und von dort über die zweite Hohlwelle 2029 auf das vierte Festrad 2044. Das vierte Festrad 2044 leitet den Kraftfluss über seine mit dem vierten Losrad 2034 kämmende Schrägverzahnung zu der ersten Nebenwelle 1162, die den Kraftfluss dem ersten Abtriebsritzel 1051 zuführt, das mit dem Ringrad des Differentials kämmt.

Zum Einlegen von Gang f wird das zweite Betätigungselement 2012 um die Achse 1157 verschwenkt.

Die axial feststehende Schaltwalze 2010 verschiebt den axial beweglichen Schaltpin 2011 und - ausgewählt durch die zweite Schaltgabelvorwahl-Betätigungsvorrichtung 2093 - mit einer hier nicht gezeigten Schaltgabel die zweite Schaltmuffe 2005 in Pfeilrichtung D, bis die Synchronisierung abgeschlossen ist und die Axialverzahnung der zweiten Schaltmuffe 2005 mit der Schaltverzahnung des dritten Losrads 2033 in Eingriff steht.

Durch Weiterschwenken des zweiten Betätigungselements 2012 wird nun die zweite Lamellenkupplung 2016 geschlossen.

Der Kraftfluss verläuft nach dem Schließen der zweiten Lamellenkupplung 2016 von der Eingangswelle 1003 über den äußeren Lamellenträger 2017, über das äußere Lamellenpaket 2019 und das innere Lamellenpaket 2020 auf den inneren Lamellenträger 2018 und von dort über die zweite Hohlwelle 2029 auf das dritte Festrad 2043. Das dritte Festrad 2043 leitet den Kraftfluss über seine mit dem dritten Losrad 2033 kämmende Schrägverzahnung zu der ersten Nebenwelle 1162, die den Kraftfluss dem ersten Abtriebsritzel 1051 zuführt, das mit dem Ringrad des Differentials kämmt.

Zum Einlegen von Gang g wird das zweite Betätigungselement 2012 um die Achse 1157 verschwenkt.

Die axial feststehende Schaltwalze 2010 verschiebt den axial beweglichen Schaltpin 2011 und - ausgewählt durch die zweite Schaltgabelvorwahl-Betätigungsvorrichtung 2093 - mit einer hier nicht gezeigten Schaltgabel die vierte Schaltmuffe 2505 in Pfeilrichtung C, bis die Synchronisierung abgeschlossen ist und die Axialverzahnung der vierten Schaltmuffe 2505 mit der Schaltverzahnung des achten Losrads 2538 in Eingriff steht.

Durch Weiterschwenken des zweiten Betätigungselements 2012 wird nun die zweite Lamellenkupplung 2016 geschlossen.

Der Kraftfluss verläuft nach dem Schließen der zweiten Lamellenkupplung 2016 von der Eingangswelle 1003 über den äußeren Lamellenträger 2017, über das äußere Lamellenpaket 2019 und das innere Lamellenpaket 2020 auf den inneren Lamellenträger 2018 und von dort über die zweite Hohlwelle 2029 auf das vierte Festrad 2044. Das vierte Festrad 2044 leitet den Kraftfluss über seine mit dem achten Losrad 2538 kämmende Schrägverzahnung zu der zweiten Nebenwelle 1167, die den Kraftfluss dem zweiten Abtriebsritzel 1552 zuführt, das mit dem Ringrad des Differentials kämmt.

Zum Einlegen von Gang h wird das zweite Betätigungselement 2012 um die Achse 1157 verschwenkt.

Die axial feststehende Schaltwalze 2010 verschiebt den axial beweglichen Schaltpin 2011 und - ausgewählt durch die zweite Schaltgabelvorwahl-Betätigungsvorrichtung 2093 - mit einer hier nicht gezeigten Schaltgabel die vierte Schaltmuffe 2505 in Pfeilrichtung D, bis die Synchronisierung abgeschlossen ist und die Axialverzahnung der vierten Schaltmuffe 2505 mit der Schaltverzahnung des siebten Losrads 2537 in Eingriff steht.

Durch Weiterschwenken des zweiten Betätigungselements 2012 wird nun die zweite Lamellenkupplung 2016 geschlossen.

Der Kraftfluss verläuft nach dem Schließen der zweiten Lamellenkupplung 2016 von der Eingangswelle 1003 über den äußeren Lamellenträger 2017, über das äußere Lammellenpaket 2019 und das innere Lamellenpaket 2020 auf den inneren Lamellenträger 2018 und von dort über die zweite Hohlwelle 2029 auf das dritte Festrad 2043. Das dritte Festrad 2043 leitet den Kraftfluss über seine mit dem siebten Losrad 2537 kämmende Schrägverzahnung zu der zweiten Nebenwelle 1167, die den Kraftfluss dem zweiten Abtriebsritzel 1552 zuführt, das mit dem Ringrad des Differentials kämmt.

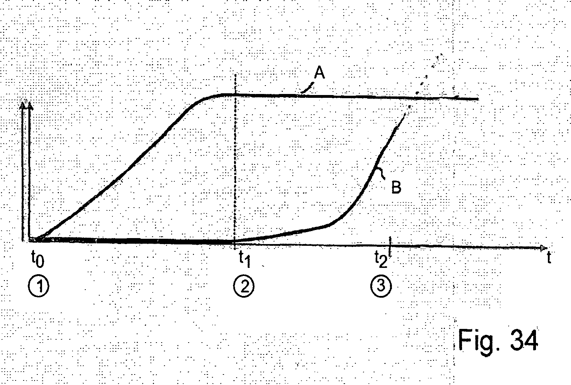

Figur 34 zeigt ein Diagramm mit dem Verlauf der Axialbewegung der zweiten Schaltmuffe 2005 wie es die Figuren 27, 30 und 33 zeigen im Vergleich zum Verlauf einer auf einen Betätigungskörper 2023 des zweiten Betätigungselements 2012 wirkenden Axialkraft beim Schalten eines Gangs. Der Graph A stellt den Ablauf der Axialbewegung der zweiten Schaltmuffe 2005 dar, während der Graph B die Axialkraft auf die Betätigungskörper 2023 zeigt. In Richtung der Ordinate ist die jeweilige Kraft bzw. der jeweilige Weg aufgetragen und in Richtung der Abszisse die Zeit t.

Zum Zeitpunkt t = t₀ befindet sich der Schaltpin 2011 in der neutralen Schaltposition "1". Ab dem Zeitpunkt t₀ nimmt die axiale Verschiebung der zweiten Schaltmuffe 2005 aufgrund der Bewegung des zweiten Schaltpins 2011 zu, wie der Graph A zeigt. Die Axialkraft, die mittels der Betätigungskonturen 2022 auf die Betätigungskugeln 2023 wirken, bleibt in diesem Zeitintervall von t₀ bis t₁ Null, d.h. es gibt keine Krafteinwirkung auf die Betätigungskörper 2023.

Mit Erreichen des Zeitpunktes t₁ in der Schaltposition "2" endet die axiale Verschiebung der zweiten Schaltmuffe 2005, wie es der Graph A zeigt. Die Axialkraft auf die Betätigungskörper 2023 hingegen wächst an, weil mit der Schaltposition "2" im Zeitpunkt t₁ ein Rampenbereich der Betätigungskontur 2022 erreicht wird. Die Axialkraft der Betätigungskörper 2023 auf die Druckplatte 2021 nimmt zu, bis in der Schaltposition "3" zum Zeitpunkt t₂ ein Sollwert erreicht ist.

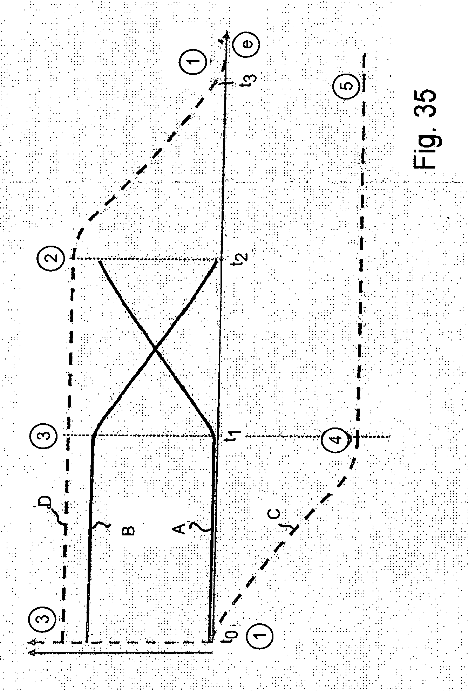

Figur 35 zeigt ein Diagramm der Drehmomentübertragung beim Lastwechseln von der ersten Reibkupplungsbaugruppe 1006 auf die zweite Reibkupplungsbaugruppe 2006 und den Verlauf des Lösens und Einlegens von Gängen "a" und "e", die der ersten und der zweiten Reibkupplungsbaugruppe 1006 bzw. 2006 zugeordnet sind. Die Drehmomentübertragung der ersten Reibkupplungsbaugruppe 1006 wird in Abhängigkeit von der Zeit t mit dem Graphen A mit durchgezogener Linie gezeigt, und die Drehmomentübertragung der zweiten Reibkupplungsbaugruppe 2006 wird in Abhängigkeit von der Zeit t mit dem Graphen B mit durchgezogener Linie gezeigt. Die Bewegung der ersten Schaltmuffe 1005 wird in Abhängigkeit von der Zeit t mit den Graphen C mit gestrichelter Linie gezeigt, und die Bewegung der zweiten Schaltmuffe 2005 wird in Abhängigkeit von der Zeit t mit den Graphen D mit gestrichelter Linie gezeigt.

Im Zeitpunkt t₀ ist die erste Reibkupplungsbaugruppe 1006 gelöst d.h. nicht im Reibschluss, und sie überträgt kein Drehmoment, wie der Graph A zeigt, da keine Kraft durch die Betätigungskörper 1023 auf die erste Druckplatte 1021 ausgeübt wird. Die erste Schaltwalze 1010 mit der ersten Schaltmuffe 1005 befindet sich zu diesem Zeitpunkt t₀ in der neutralen Schaltposition "1 ". Der Vorgang des Einlegens eines Gangs a beginnt im Zeitpunkt to, wie der Graph C zeigt, und er ist zum Zeitpunkt t₁ abgeschlossen, wenn die erste Schaltmuffe 1005 die Schaltposition 'W' erreicht hat.

Zum Zeitpunkt t₀ ist die zweite Reibkupplungsbaugruppe 2006 geschlossen, und sie überträgt das volle Drehmoment, wie Graph B zeigt. Die zweite Schaltmuffe 2005 befindet sich während des gesamten Zeitintervalls von t₀ bis t₁ in der Schaltposition "3", so dass das volle Drehmoment über das vierte Festrad 2044 übertragen wird.

Im Zeitpunkt t₁ beginnt eine Verminderung der Drehmomentübertragung der zweiten Reibkupplungsbaugruppe 2006, während die Drehmomentübertragung der ersten Reibkupplungsbaugruppe 1006 bereits ansteigt, wie es die Graphen A und B im Zeitintervall zwischen t₁ und t₂ zeigen. Nach t₂ geht der zweite Schaltpin 2011 mit der zweiten Schaltmuffe 2005 von der Schaltposition "4" in die Schaltposition "1" über.

Die beschriebene Schaltanordnung funktioniert grundsätzlich auch mit nur einer einzigen Nebenwelle, wenngleich hier ein Getriebe mit zwei Nebenwellen gezeigt ist.

Die Betätigungskugel 2023 in den Figuren 20 bis 34 ist radial und tangential so gut es geht spielfrei im Betätigungselement 2012 zu führen, um eine gute Funktion zu gewährleisten. Die Betätigungskugel 2023 läuft ferner in einer umlaufenden Kontur im Axiallagerring 2036, die als Umfangsnut ausgebildet ist.

Zur rotatorischen Kopplung der Hohlwellen mit dem jeweiligen inneren Lamellenträger kann eine Axialverzahnung verwendet werden.

Die Synchronisierung ist in den vorhergehenden Figuren nur schematisch dargestellt, weil diese für die Funktion der Anordnung nicht im Vordergrund steht. Es kommt darauf an, daß bei eingerasteter Schaltmuffenverzahnung in der Schaltverzahnung das jeweilige Losrad fest mit der Nebenwelle verbunden ist.

Ebenso ist der Momentenverlauf in Fig. 35 nur qualitativ dargestellt.

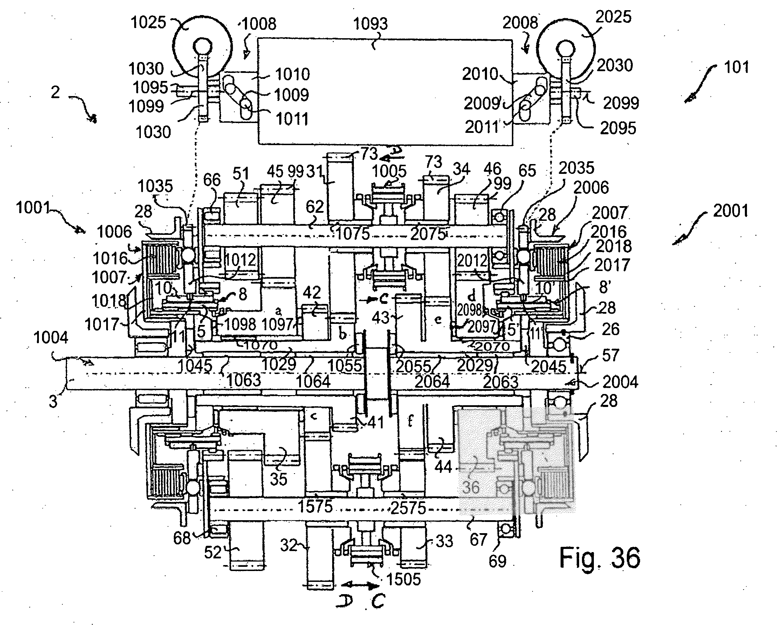

Figur 36 zeigt eine Schaltanordnung 101 für ein Getriebe 2, mit einer ersten mechanisch gekoppelten Kupplungs- und Synchronisierungseinrichtung 1001 und einer zweiten mechanisch gekoppelten Kupplungs- und Synchronisierungseinrichtung 2001.

Die Schaltanordnung 101 ist in einem Getriebegehäuse 28 angeordnet und weist eine Eingangswelle 3 mit einer Symmetrieachse 57 auf. Die Eingangswelle 3 ist in dem Gehäuse 28 in einem Kugelwälzlager 26 als Festlager und einem Rollenwälzlager 27 als Loslager gelagert. Die Eingangswelle 3 weist auf der linken Seite der Zeichnung einen ersten Endbereich 1004 und auf der rechten Seite der Zeichnung einen zweiten Endbereich 2004 auf.

Das Getriebe 2 weist weiterhin eine erste Nebenwelle 62 und eine zweite Nebenwelle 67 auf, die parallel zur Eingangswelle 3 angeordnet sind.

Bezugszeichen von gleichen Komponenten der Figur 1, die im Bereich des ersten Endbereichs 1004 und im Bereich der zweiten Endbereichs 2004 angeordnet sind, unterscheiden sich durch eine Systematik, die einer Symmetrie in der Anordnung folgt. Die erste Stelle des vierstelligen Bezugszeichens weist eine "1" auf, wenn die betreffende Komponente im Bereich des ersten Endbereiches 1004 vorgesehen ist, während die erste Stelle des vierstelligen Bezugszeichens eine "2" aufweist, wenn die betreffende Komponente im Bereich des zweiten Endbereichs 2004 vorgesehen ist. Die dritte und vierte Stelle der Bezugszeichen dieser Komponenten stimmt überein.

Bezugszeichen von gleichen Komponenten der Figur 1, die im Bereich der ersten Nebenwelle 62 und im Bereich der zweiten Nebenwelle 67 angeordnet sind, unterscheiden sich ebenfalls durch eine Systematik, die einer weiteren Symmetrie in der Anordnung folgt. Die zweite Stelle des vierstelligen Bezugszeichens weist eine "0" auf, wenn die betreffende Komponente im Bereich der ersten Nebenwelle 62 vorgesehen ist, während die zweite Stelle des vierstelligen Bezugszeichens eine "5" aufweist, wenn die betreffende Komponente im Bereich der zweiten Nebenwelle 67 vorgesehen ist. Die dritte und vierte Stelle der Bezugszeichen dieser Komponenten stimmt überein.

Gleiche Komponenten der Figur 36, die auf dem ersten Endbereich 1004 und auf dem zweiten Endbereich 2004 angeordnet sind, werden mit gleichen Bezugszeichen gekennzeichnet, jedoch werden in dem zweiten Endbereich 2004 der Eingangswelle 3 die betreffenden Bezugszeichen zusätzlich mit einem Apostroph' versehen.

Die Lagerung der ersten Nebenwelle 62 weist ein Kugelwälzlager 65 als Festlager und ein Rollenwälzlager 66 als Loslager auf. Die Lagerung der zweiten Nebenwelle 67 weist ein Kugelwälzlager 69 als Festlager und ein Rollenwälzlager 68 als Loslager auf.

Auf der Eingangswelle 3 ist in dem ersten Endbereich 1004 eine erste Hohlwelle 1029 vorgesehen. Die erste Hohlwelle 1029 ist auf der Eingangswelle 3 mit Radiallagern 1063 und 1064 sowie zwischen einem ersten Axiallager 1045 und einem zweiten Axiallager 1055 gelagert. Auf der ersten Hohlwelle 1029 sind ein erstes Festrad 41 und ein zweites Festrad 42 angeordnet.

Im zweiten Endbereich 2004 ist eine zweite Hohlwelle 2029 angeordnet. Die zweite Hohlwelle 2029 ist auf der Eingangswelle 3 mit Radiallagern 2063 und 2064 sowie axial zwischen einem dritten Axiallager 2045 und dem vierten Axiallager 2055 gelagert. Auf der zweiten Hohlwelle 2029 sind ein drittes Festrad 43 und ein viertes Festrad 44 angeordnet.

Auf der ersten Hohlwelle 1029 ist weiterhin ein fünftes Losrad 35 angeordnet. Das fünfte Losrad 35 ist auf einem Radiallager 1070 und zwischen Axiallagern 1097 und 1098 gelagert. Entsprechend ist auf der zweiten Hohlwelle 2029 ein sechstes Losrad 36 auf einem Radiallager 2070 und zwischen Axiallagern 2097 und 2098 gelagert.

Auf der ersten Nebenwelle 62 sind ein mit dem ersten Festrad 41 kämmendes erstes Losrad 31 auf einem Radiallager 1075 und ein mit dem vierten Festrad 44 kämmendes viertes Losrad 34 auf einem Radiallager 2075 angeordnet. Zwischen dem ersten Losrad 31 und dem vierten Losrad 34 ist eine beidseitig wirkende erste externe Schaltmuffe 1005 auf der ersten Nebenwelle 62 angeordnet.

Auf der ersten Nebenwelle 62 ist weiter ein mit dem fünften Losrad 35 kämmendes fünftes Festrad 45 und ein mit dem sechsten Losrad 36 kämmendes sechstes Festrad 46 angeordnet. Mit der ersten Nebenwelle 62 ist ein erstes Abtriebsritzel 51 fest verbunden, das mit einem hier nicht gezeigten Ringrad eines Differentials kämmt.

Auf der zweiten Nebenwelle 67 sind ein mit dem zweiten Festrad 42 kämmendes zweites Losrad 32 auf einem Radiallager 1575 und ein mit dem dritten Festrad 43 kämmendes drittes Losrad 33 auf einem Radiallager 1575 angeordnet. Zwischen dem zweiten Losrad 32 und dem dritten Losrad 33 ist eine beidseitig wirkende zweite externe Schaltmuffe 1505 auf der zweiten Nebenwelle 67 angeordnet.

Mit der zweiten Nebenwelle 67 ist weiter ein zweites Abtriebsritzel 52 fest verbunden, das mit dem hier nicht gezeigten Ringrad des Differentials kämmt.

Ein Gang a wird mit dem fünften Losrad 35 und dem fünften Festrad 45 gebildet. Ein Gang b wird mit dem ersten Losrad 31 und dem ersten Festrad 41 gebildet. Ein Gang c wird mit dem zweiten Losrad 32 und dem zweiten Festrad 42 gebildet. Ein Gang d wird mit dem sechsten Losrad 36 und dem sechsten Festrad 46 gebildet. Ein Gang e wird mit dem vierten Losrad 34 und dem vierten Festrad 44 gebildet. Ein Gang f wird mit dem dritten Losrad 33 und dem dritten Festrad 43 gebildet.

Die Losräder weisen Schrägverzahnungen 73 auf, die mit Schrägverzahnungen der Festräder kämmen, wie Figur 2 genauer zeigt.

Im Bereich des ersten Endbereichs 1004 der Eingangswelle 3 ist eine erste Reibkupplungsbaugruppe 1006 mit einer ersten Lamellenkupplung 1016 angeordnet. Ein äußerer Lamellenträger 1017 der ersten Lamellenkupplung 1016 ist mit der Eingangswelle 3 fest verbunden. Ein innerer Lamellenträger 1018 der ersten Lamellenkupplung 1016 ist mit der ersten Hohlwelle 1029 drehfest verbunden.

Zur Betätigung der ersten Reibkupplungsbaugruppe 1006 ist eine erste Kupplungs-Axialbetätigungseinheit 1007 vorgesehen. Die erste Kupplungs-Axialbetätigungseinheit 1007 weist ein erstes Betätigungselement 1012 mit einer ersten Antriebsverzahnung 1035 auf. Die erste Antriebsverzahnung 1035 steht über ein erstes Zwischenrad 1030 einer ersten externen Schaltmuffen-Axialbetätigungseinheit 1008 in Wirkverbindung mit einem ersten Antrieb 1025.

Das erste Zwischenrad 1030 ist auf einer ersten Betätigungswelle 1095 mit einer Symmetrieachse 1099 vorgesehen, auf der eine erste externe Schaltwalze 1010 axial fest aber in Umfangsrichtung über eine hier nicht gezeigte Verzahnung gegenüber dem Gehäuse 28 frei beweglich ist. Die erste externe Schaltwalze 1010 hat eine erste externe Steuernut 1009, in der ein erster externer Schaltpin 1011 gleitverschieblich angeordnet ist. Die erste externe Schaltwalze 1010 ist mit dem rotierenden Zwischenrad 1030 drehfest verbunden.

Der erste externe Schaltpin 1011 steht in Wirkverbindung mit einer SchaltgabelWählbetätigungsvorrichtung 1093, die ihrerseits in selektiver Wirkverbindung mit der ersten externen Schaltmuffe 1005 und der zweiten externen Schaltmuffe 1505 steht.

Im Bereich des zweiten Endbereichs 2004 der Eingangswelle 3 ist eine zweite Reibkupplungsbaugruppe 2006 mit einer zweiten Lamellenkupplung 2016 angeordnet. Ein äußerer Lamellenträger 2017 der zweiten Lamellenkupplung 2016 ist mit der Eingangswelle 3 fest verbunden. Ein innerer Lamellenträger 2018 ist mit der zweiten Hohlwelle 2029 drehfest verbunden.

Zur Betätigung der zweiten Reibkupplungsbaugruppe 2006 ist eine zweite Kupplungs-Axialbetätigungseinheit 2007 vorgesehen. Die zweite Kupplungs-Axialbetätigungseinheit 2007 weist ein zweites Betätigungselement 2012 mit einer zweiten Antriebsverzahnung 2035 auf. Die zweite Antriebsverzahnung 2035 steht über ein zweites Zwischenrad 2030 mit einer zweiten externen Schaltmuffen-Axialbetätigungseinheit 2008 in Wirkverbindung mit einem zweiten Antrieb 2025.

Das zweite Zwischenrad 2030 ist auf einer zweiten Betätigungswelle 2095 mit einer zweiten Symmetrieachse 2099 vorgesehen, auf der eine zweite externe Schaltwalze 2010 axial fest, aber in Umfangsrichtung frei beweglich ist. Die zweite externe Schaltwalze 2010 hat eine zweite externe Steuernut 2009, in der ein rotatorisch festgelegter, aber axial frei beweglicher zweiter externer Schaltpin 2011 gleitverschieblich angeordnet ist.

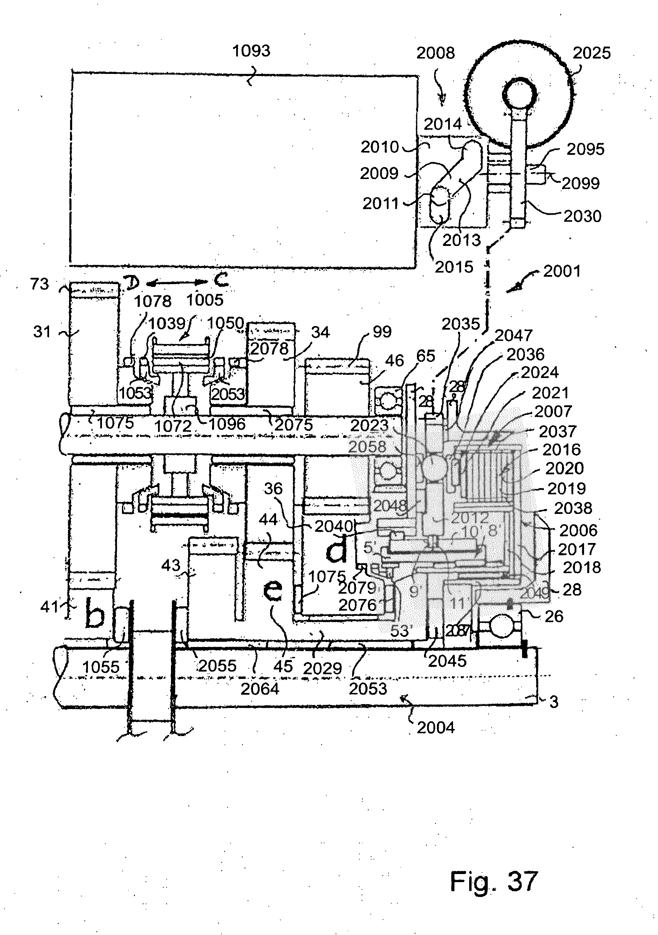

Wie man in Figur 37 gut sieht, fällt die Symmetrieachse der zweiten Schaltwalze 2010 mit der Symmetrieachse 2099 des zweiten Zwischenrads 2030 und der zweiten Betätigungswelle 2095 zusammen. Wie man hier gut sieht, gliedert sich die zweite externe Steuernut 2009 in drei Abschnitte 2013, 2014 und 2015.

Der zweite Schaltpin 2011 steht in Wirkverbindung mit der SchaltgabelWählbetätigungsvorrichtung 1093, die ihrerseits in selektiver Wirkverbindung mit der ersten externen Schaltmuffe 1005 auf der erste Nebenwelle 62 und der zweiten externen Schaltmuffe 1505 auf der zweiten Nebenwelle 67 steht.

Figur 2 zeigt die zweite Kupplungs- und Synchronisierungseinrichtung 2001 aus Figur 36 in vergrößerter Darstellung.

Die zweite Kupplungs- und Synchronisierungseinrichtung 2001 wirkt über die Schaltgabelvorwahl-Betätigungsvorrichtung 1093 mit der ersten externen Schaltmuffe 1005 auf der ersten Nebenwelle 62 und der zweiten externen Schaltmuffe 1505 auf der zweiten Nebenwelle 67 über hier und in Figur 36 nicht gezeigte Schaltgabeln zusammen.

Wie man hier besonders gut sieht, ist die erste externe Schaltmuffe 1005 auf der ersten Nebenwelle 62 als zweiseitig wirkende Schaltmuffe 1005 ausgebildet. Die erste externe Schaltmuffe 1005 hat eine Innenverzahnung 1050, die axial verschieblich mit einer Außenverzahnung 1072 einer ersten Nabe 1096 in Eingriff steht. Die erste Nabe 1096 ist fest mit der ersten Nebenwelle 62 verbunden. Die erste externe Schaltmuffe 1005 kann ausgehend von der hier gezeigten Neutralstellung über einen ersten Synchronring 1053 entweder mit der Synchronisierungsverzahnung 1039 einer ersten Schaltverzahnung 1078 des ersten Losrades 31 oder über einen zweiten Synchronring 2053 mit einer zweiten Schaltverzahnung 2078 des fünften Losrades 35 verbunden werden.

In der hier gezeigten Neutralstellung steht die erste externe Schaltmuffe 1005 weder mit der ersten Schaltverzahnung 1078 des ersten Losrades 31 noch mit der zweiten Schaltverzahnung 2078 des fünften Losrades 35 in Eingriff.

Der zweite Antrieb 2025 ist als Elektromotor mit einem Schneckentrieb ausgebildet.

Wie man in Figur 36 gut sieht, wirkt die erste Reibkupplungsbaugruppe 1006 mit der ersten Kupplungs-Axialbetätigungseinheit 1007 zusammen, die wiederum mechanisch mit einer ersten Schaltmuffen-Axialbetätigungseinheit 8 in Wirkverbindung steht bzw. mit dieser mechanisch gekoppelt ist. Entsprechend ist auf dem zweiten Endbereich 2004 der Eingangswelle 3 eine zweite Kupplungs-Axialbetätigungseinheit 2007 mit einer zweiten Schaltmuffen-Axialbetätigungseinheit 8' angeordnet.

Eine erste interne Schaltmuffe 5 ist in dem ersten Endbereich 1004 der Eingangswelle 3 angeordnet und steht in Figur 36 auf einer neutralen Schaltposition vor einer hier nicht gezeigten Schaltverzahnung des fünften Losrades 31, ohne mit dieser in Eingriff zu treten.

Eine zweite interne Schaltmuffe 5' ist in dem zweiten Endbereich 2004 der Eingangswelle 3 angeordnet und sie steht in Figur 1 auf einer neutralen Schaltposition vor einer am besten in Figur 2 zu sehenden Schaltverzahnung 2079 des sechsten Losrades 36, ohne mit dieser in Eingriff zu treten.

Die in Figur 37 gezeigten Stirnbereiche der internen Schaltwalze 10" und analog auch die Stirnbereiche der anderen internen Schaltwalze 10 werden von der jeweils zugeordneten internen Schaltmuffe 5, 5' seitlich eingefasst, wobei deren Ränder wiederum als axialer Mitnehmer bezüglich der Schaltwalzen 10, 10" fungieren. Die erste Schaltmuffe 5 umschließt dadurch die erste Schaltwalze 10 und die zweite Schaltmuffe 5'umschließt dadurch die zweite Schaltwalze 10', wodurch diese axial gegenüber der jeweiligen Schaltwalze geführt, aber in Umfangsrichtung gegenüber dieser verdrehbar ist.

Aus dem ersten Betätigungselement 1012 ragt radial nach innen ein erster interner Schaltpin 11 heraus, der in einer ersten internen Steuernut 9 der ersten internen Schaltwalze 10 gleitverschieblich angeordnet ist. Die erste interne Schaltwalze 10 ist gegenüber dem Getriebegehäuse 28 axial verschieblich und drehfest zum Gehäuse 28 auf der ersten internen Schaltmuffe 5 angeordnet. Die erste interne Schaltwalze 10 hat dafür eine hier nicht gezeigte Außenverzahnung oder eine andere rotatorische Fixierung zum Gehäuse, die mit einer hier nicht gezeigten Innenverzahnung des Getriebegehäuses 28 oder einer anderen rotatorischen Fixierung zum Getriebegehäuses 28 in Eingriff steht.

Wie man am besten in Figur 37 sieht, ragt aus dem zweiten Betätigungselement 2012 radial nach innen ein zweiter interner Schaltpin 11" heraus, der in einer zweiten internen Steuernut 9" der zweiten internen Schaltwalze 10' gleitverschieblich angeordnet ist. Die zweite interne Schaltwalze 10' ist gegenüber dem Getriebegehäuse 28 axial verschieblich und drehfest zum Gehäuse 28 auf der zweiten internen Schaltmuffe 5' angeordnet. Die zweite interne Schaltwalze 10' hat dafür eine hier nicht gezeigte Außenverzahnung, die mit einer hier nicht gezeigten Innenverzahnung des Getriebegehäuses 28 in Eingriff steht.

Figur 37 zeigt die zweite Lamellenkupplung 2016 in näherem Detail. Der äußere Lamellenträger 2017 ist mit der Eingangswelle 3 fest verbunden. Der innere Lamellenträger 2018 ist auf einem Ringabsatz 2087 des äußeren Lamellenträgers 2017 der Eingangswelle 3 gelagert, und zwar über ein Radiallager 2049.

Lamellen eines äußeren Lamellenpakets 2019 sind in einer äußeren Lamellenverzahnung 2037 im äußeren Lamellenträger 2017 axialverschieblich geführt. Die Lamellen eines inneren Lamellenpakets 2020 sind axialverschieblich in einer inneren Lamellenverzahnung im inneren Lamellenträger 2018 geführt. Die Lamellen des äußeren Lamellenpakets 2019 und die Lamellen des inneren Lamellenpakets 2020 liegen aneinander an und werden in einer Schließposition der zweiten Lamellenkupplung 2016 von einer Druckplatte 2021 axial beaufschlagt.

Die Druckplatte 2021 steht über ein Axiallager 2024 und einen Axiallagerring 2036 mit einem als Betätigungskugel ausgebildeten Betätigungskörper 2023 in Wirkverbindung.

Der Betätigungskörper 2023 ist zwischen einer am Getriebegehäuse 28 angeordneten Rampenstruktur 2058 und einem Axiallagerring 2036 eines Axiallagers 2024 angeordnet.

Wie man hier gut sieht, kämmt die zweite Antriebsverzahnung 2035 des zweiten Betätigungselements 2012 mit der Verzahnung des zweiten Zwischenrades 2030. Dabei ist das zweite Betätigungselement 2012 mittels eines Axiallagers 2048 und eines Axiallagers 2047 in dem Getriebegehäuse 28 verschwenkbar gelagert.

In Figur 37 ist weiterhin gut zu sehen, dass der innere Lamellenträger 2018 der zweiten Lamellenkupplung 2016 ständig fest mit der zweiten Hohlwelle 2029 verbunden ist.

In der in Figur 37 gezeigten neutralen Stellung steht die zweite interne Schaltmuffe 5' über ihre Innenverzahnung mit einer Außenverzahnung des inneren Lamellenträgers 2018 in Eingriff. Die zweite interne Schaltmuffe 5' kann über einen Synchronring 53' mit einer Schaltverzahnung 2079 des Losrades 36 in Eingriff gebracht werden.

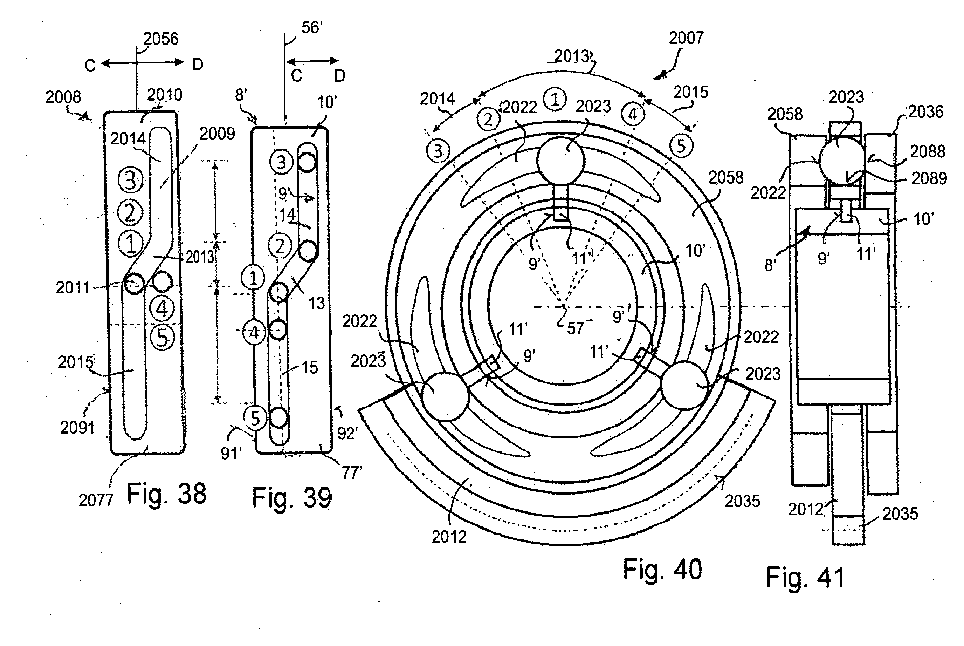

Figur 38 zeigt eine Draufsicht auf einen Umfangsabschnitt 2077 der zweiten externen Schaltwalze 2010 aus den Figuren 36 und 37, mit der zweiten externen Steuernut 2009 der zweiten externen Schaltmuffen-Axialbetätigungseinheit 2008. Die zweite externe Steuernut 2009 weist drei Abschnitte auf, nämlich einen schrägverlaufenden ersten Abschnitt 2013, einen gerade verlaufenden zweiten Abschnitt 2014 sowie einen gerade verlaufenden dritten Abschnitt 2015. Die gerade verlaufenden Abschnitte 2014 und 2015 der zweiten externen Steuernut 2009 haben keine axiale Erstreckung, sie sind parallel zu Rändern 2091 und 2092 des Umfangsabschnitts 2077 angeordnet.

Der zweite externe Schaltpin 2011 folgt der zweiten externen Steuernut 2009 in axialer Richtung den axial festen rotatorischen Bewegungen der zweiten externen Schaltwalze 2010, die auf der zweiten Symmetrieachse 2099 des zweiten Zwischenrades 2030 angeordnet und mit diesem verbunden ist. Dabei nimmt der zweite externe Schaltpin 2011 fünf Schaltpositionen "1", "2","3","4" und "5" ein. Eine erste neutrale Schaltposition "1" ist in einem Übergang von dem schrägverlaufenden ersten Abschnitt 2013 zu dem zweiten gerade verlaufenden zweiten Abschnitt 2014 bereits vorgesehen. Die zweite Schaltposition "2" liegt in dem zweiten Abschnitt 2014. Die dritte Schaltposition "3" liegt am Ende des zweiten Abschnitts 2014. Die vierte Schaltposition "4" ist an einem Übergang von dem ersten Abschnitt 2013 zu dem dritten Abschnitt 2015 vorgesehen, und die fünfte Schaltposition "5" liegt am Ende des dritten Abschnitts 2015. Die zweite externe Schaltpin 2011 kann sich in Abhängigkeit von den umfangsmäßigen Schaltpositionen "1" bis "5" der zweiten externen Schaltwalze 2010 in Pfeilrichtung C oder D hin- und herbewegen.

Diese axiale Bewegung wird über die Schaltgabelvorwahl-Betätigungsvorrichtung 1093 und eine hier nicht gezeigte Schaltgabel auf die vorgewählte erste externe Schaltmuffe 1005 auf der ersten Nebenwelle 62 oder auf die vorgewählte zweite externe Schaltmuffe 1505 auf der zweiten Nebenwelle 67 übertragen.

Figur 39 zeigt eine Draufsicht auf einen Umfangsabschnitt 77' der zweiten internen Schaltwalze 10' aus den Figuren 1 und 2, mit der zweiten internen Steuernut 9' der zweiten internen Schaltmuffen-Axialbetätigungseinheit 8'. Die zweite interne Steuernut 9' weist drei Abschnitte auf, nämlich einen schrägverlaufenden ersten Abschnitt 13, einen gerade verlaufenden zweiten Abschnitt 14 sowie einen gerade verlaufenden dritten Abschnitt 15. Die gerade verlaufenden Abschnitte 14 und 15 der zweiten internen Steuernut 9' sind parallel zu Rändern 91' und 92' des internen Umfangsabschnitts 77' der zweiten internen Schaltwalze 10' angeordnet und haben keine axiale Erstreckung.

Die zweite interne Schaltwalze 10' mit der zweiten internen Steuernut 9' folgt axial den axial festen aber rotatorisch freien Bewegungen des zweiten internen Schaltpins 11'. Dabei nimmt der zweite interne Schaltpin 11' fünf Schaltpositionen "1 ", "2", "3", "4" und "5" ein. Eine erste neutrale Schaltposition "1" ist in einem Übergang von dem schrägverlaufenden ersten Abschnitt 13 zu dem geradeverlaufenden dritten Abschnitt 15 vorgesehen. Die zweite Schaltposition "2" liegt am Übergang des ersten Abschnitts 13 zu dem zweiten Abschnitt 14. Die dritte Schaltposition "3" liegt am Ende des zweiten Abschnitts 14. Die vierte Schaltposition "4" liegt bereits innerhalb des dritten Abschnitts 2015, und die fünfte Schaltposition "5" liegt am Ende des dritten Abschnitts 2015. Die zweite interne Schaltwalze 10' kann sich in Pfeilrichtung C oder D hin und herbewegen.

Die zweite interne Schaltwalze 10' steht mit der nur einseitig wirkenden zweiten internen Schaltmuffe 5' in Eingriff. Dazu korrespondierend ist der dritte gerade verlaufende Abschnitt 15 der zweiten internen Steuernut 9' parallel zu einem Rand 92' ausgerichtet, jedoch nicht in der Nähe des Randes 92", sondern eher in der Mitte der hier gezeigten Umfangsfläche 77'. Die Steuernut hat in diesem Abschnitt keine axiale Erstreckung.

Figur 40 zeigt eine Draufsicht auf eine Rampenstruktur 2058 der zweiten Kupplungs-Axialbetätigungseinheit 2007 und der internen Schaltmuffen-Axialbetätigung. Wie man hier gut sieht, fällt die Symmetrieachse des zweiten Betätigungselements 2012 mit der Symmetrieachse 57 der Eingangswelle 3 zusammen.

Den drei Abschnitten 13, 14 und 15 der zweiten internen Steuernut 9' in Figur 39 entsprechen in dieser Draufsicht auf das zweite Betätigungselement 2012 mit der darunter angeordneten gehäusefesten Rampenstruktur 2058 Schwenkwinkelbereiche des zweiten Betätigungselements 2012. Die fünf Schaltpositionen 'T', "2", "3", "4" und "5" entsprechen fünf Winkelpositionen welche das zweite Betätigungselement 2012 mit den insgesamt drei auf dessen Umfang verteilten Betätigungskörpern 2023 einnehmen kann.

Die Betätigungskörper 2023 sind hier kugelförmig und werden jeweils in zwei Richtungen auf rampenförmigen Betätigungskonturen 2022 der Rampenstruktur 2058 geführt. In der hier gezeigten neutralen Schaltposition 1 " weisen die Betätigungskonturen 2022 jeweils die tiefste Position der jeweiligen Rampenstruktur 2058 in Bezug auf die Zeichenebene auf. Diese tiefste Position erstreckt sich zwischen den Schaltposition "2" und "4" der zweiten internen Schaltwalze 10', wie es Figur 5 zeigt. In Richtung auf die Schaltposition "3" in dem zweiten Abschnitt 14 oder in Richtung auf die Schaltposition "5" in dem dritten Abschnitt 15 werden die Betätigungskörper auf der Rampenstruktur 2058 in Richtung aus der Zeichenebene her aus geführt.

Das zweite Betätigungselement 2012 weist in einem begrenzten Umfangsbereich eine Antriebsverzahnung 2035 auf. Die Antriebsverzahnung 2035 erstreckt sich mindestens über einen Umfangsbereich, der dem Winkel zwischen Schaltposition "3" und "5" entspricht. Wie in Figur 40 gut zu sehen ist, werden beim Verschwenken des zweiten Betätigungselements 2012 zum axialen Verschieben der zweiten internen Schaltwalze 10' aufgrund einer mechanischen Kopplung gleichzeitig die Betätigungskörper 2023 um die Achse 57 bewegt. Dabei rollen die Betätigungskörper 2023 auf der mit dem Getriebegehäuse 28 verbundenen Rampenstruktur 2058 ab. Die drei Betätigungskonturen 2022 weisen dabei zwischen Schaltpositionen "1" und "2" bzw. "1" und "4" eine tiefste Position in der Rampenstruktur 2058 auf, so dass die Betätigungskörper 2023 in diesem Bereich keine oder nur eine geringe gleichbleibende Kraft auf den Axiallagerring 2036 ausüben. Somit sind das innere Lamellenpaket 2020 und das äußere Lamellenpaket 2019, wie in den Figuren 36 und 37 gezeigt, voneinander gelöst.

Der zweite interne Schaltpin 11' bewegt sich dabei von einer mittleren neutralen Schaltposition "1" aus, wie es Figur 4 zeigt, auf einer geraden Spur in der zweiten internen Steuernut 9'. Wenn der zweite interne Schaltpin 11' in dem ersten schrägverlaufenden Abschnitt 2013 in Richtung der Schaltposition "2" bewegt wird, bewegt sich aufgrund der geneigten Ausbildung der zweiten internen Steuernut 9' die zweite interne Schaltwalze 10' axial in Pfeilrichtung C, und sie nimmt die zweite interne Schaltmuffe 5' mit, so dass beispielsweise nach Synchronisieren der Drehzahlen des inneren Lamellenträgers 2018 eine formschlüssige Verbindung zwischen dem inneren Lamellenträger 2018 und dem sechsten Losrad 36 hergestellt ist.

Dabei ist die Innenverzahnung der zweiten internen Schaltmuffe 5' über die Verzahnung des Synchronringes 53' auf die Schaltverzahnung 2079 des sechsten Losrads 36 geschoben.

Eine weitere Verschwenkung des zweiten Betätigungselements 2012 durch die Antriebsverzahnung 2035 in die Stellung "3" in Figur 4 bewirkt aufgrund der Ausgestaltung der zweiten internen Steuernut 9' keine weitere axiale Bewegung der zweiten Schaltwalze 10' mehr, sondern nur noch eine Betätigung der Reibkupplungsbaugruppe 2006.

Die Reibkupplungsbaugruppe 2006 wird dabei wie folgt betätigt. Um ein Drehmoment zu übertragen, werden die Lamellenpakete 2019 und 2020 der zweiten Lamellenkupplung 2016 durch die Druckplatte 2021 zusammengepresst. Dazu wird das zweite Betätigungselement 2012 durch die Antriebsverzahnung 2035 derart in die Stellung "3" verschwenkt, dass der Betätigungskörper 2023 auf der Betätigungskontur 2022 der mit dem Getriebegehäuse 28 fest verbundenen Rampenstruktur 2058 abrollt.

Beim Rollen auf der Betätigungskontur 2022 der Rampenstruktur 2058 wird der Betätigungskörper 2023 derart axial bewegt, dass die Betätigungskörper 2023 über den Axiallagerring 2036, das Axiallager 2024 und über die Druckplatte 2021 eine Anpresskraft auf die inneren Lamellen des inneren Lamellenpakets 2020 und auf die Lamellen des äußeren Lamellenpakets 2019 ausüben. Zum Lösen der Reibschlußverbindung zwischen den Lamellen des inneren Lamellenpakets 2020 und den Lamellen des äußeren Lamellenpakets 2019 wird das zweite Betätigungselement 2012 durch die Antriebsverzahnung 2035 derart zurück in seine Ausgangslage "2" verschwenkt, dass die Betätigungskörper 2023 keine Axialkraft mehr auf die Kupplung ausüben.

In der anderen Richtung funktioniert die Kupplungs- und Synchronisierungseinrichtung 2001 ähnlich. Wird der interne Schaltpin 11' aufgrund einer Betätigung des zweiten Betätigungselements 2012 von seiner Schaltposition "1" in Richtung auf die Schaltposition "4" und dann auf "5" zu bewegt, dann bewegt sich die zweite interne Schaltwalze 10' in axialer Richtung nicht. Ab der Schaltposition "4" beginnt eine Verschwenkung des zweiten Betätigungselements 2012 in die Schaltpositon "5" und bewirkt anschließend ein Schließen der zweiten Reibkupplungsbaugruppe 2006, ähnlich zu der oben beschriebenen Bewegung von der Schaltposition "2" in die Schaltposition "4".

Die fünf in Figur 39 gezeigten Schaltpositionen 'T', "2", "3", "4", und "5" können dadurch erreicht werden, dass ein wie in Figur 37 gezeigtes zweites Zwischenrad 2030, das von einem Elektromotor mit Schneckentrieb angetrieben wird, in die Antriebsverzahnung 2035 eingreift und das zweite Betätigungselement 2012 um die Achse 57 verstellt.

Figur 41 zeigt die zweite Kupplungs-Axialbetätigungseinheit 2007 mit der zweiten internen Schaltmuffen-Axialbetätigungseinheit 8' im Querschnitt, wobei sich der zweite interne Schaltpin 11 " in der Schaltstellung "1" befindet.

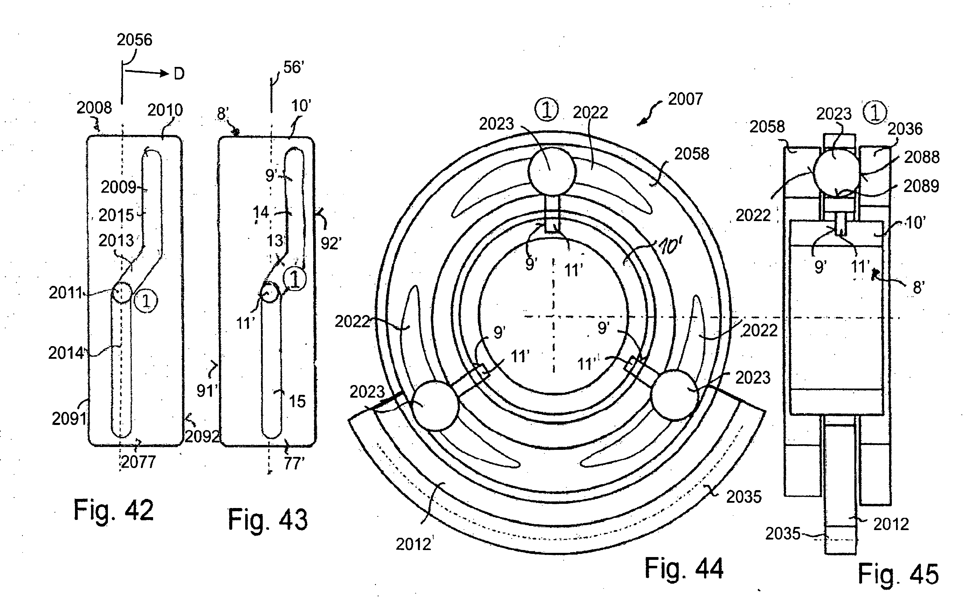

Figur 42, Figur 43, Figur 44 und Figur 45 zeigen korrespondierende Ansichten der zweiten externen Schaltmuffen-Axialbetätigungseinheit 2008 und der zweiten internen Schaltmuffen-Axialbetätigungseinheit 8' sowie der zweiten Kupplungs-Axialbetätigungseinheit 2007 in der neutralen Schaltposition "1". In dieser Schaltposition ist der zweite interne Schaltpin 8" bzw. der zweite externe Schaltpin 2011 in einem Übergang zwischen dem ersten Abschnitt 13 bzw. 2013 und dem zweiten Abschnitt 15 bzw. 2014 der zweiten internen Steuernut 9' bzw. der zweiten externen Steuernut 2009 der zweiten internen Schaltwalze 10' bzw. der zweiten externen Schaltwalzen 2010 angeordnet sind. Die zweite externe Schaltwalze 2010 und die zweite interne Schaltwalze 10' befinden sich dabei in einer Mittelstellung.

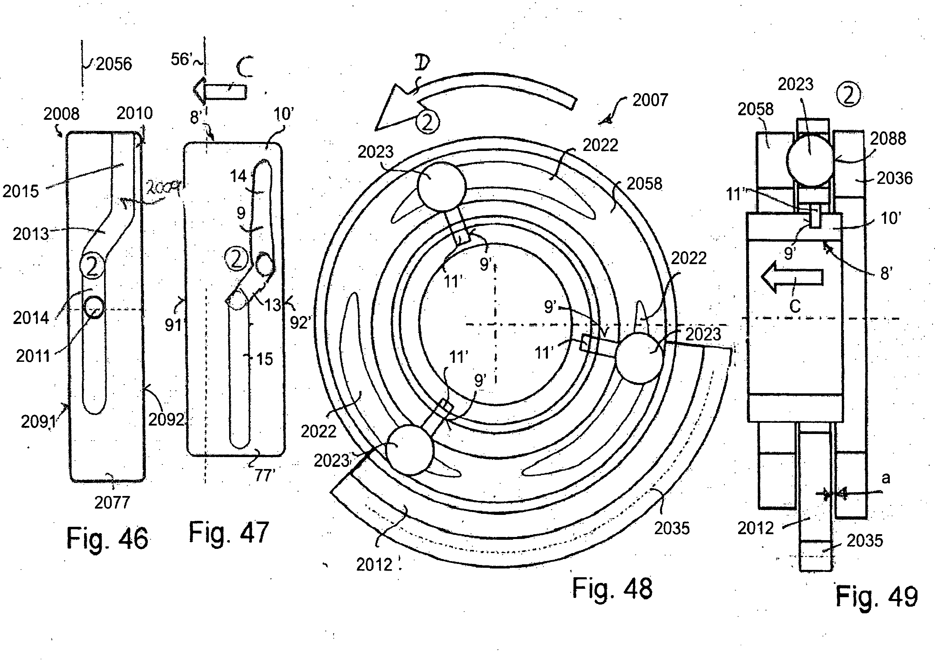

Figur 46, Figur 47, Figur 48 und Figur 49 zeigen korrespondierende Ansichten der zweiten externen Schaltmuffen-Axialbetätigungseinheit 2008 und der zweiten internen Schaltmuffen-Axialbetätigungseinheit 8' sowie der zweiten Kupplungs-Axialbetätigungseinheit 2007 in der Schaltposition "2". In dieser Schaltposition sind der zweite externe Schaltpin 2011 bzw. der zweite interne Schaltpin 11" an dem Übergang von dem schrägverlaufenden ersten Abschnitt 13 und 2013 und in der Mitte des gerade verlaufenden Abschnitt 2014 der zweiten internen Steuernut 9' bzw. der zweiten externen Steuernut 2009 angeordnet. Die zweite interne Schaltwalze 10' ist gegenüber der Mittelstellung nach links in Pfeilrichtung C verschoben, wie Figur 14 zeigt. Die zweite externe Schaltwalze 2010 befindet sich aufgrund der Ausgestaltung der zweiten externen Steuernut 2009 nach wie vor in der Mittelstellung gemäß Figur 42.

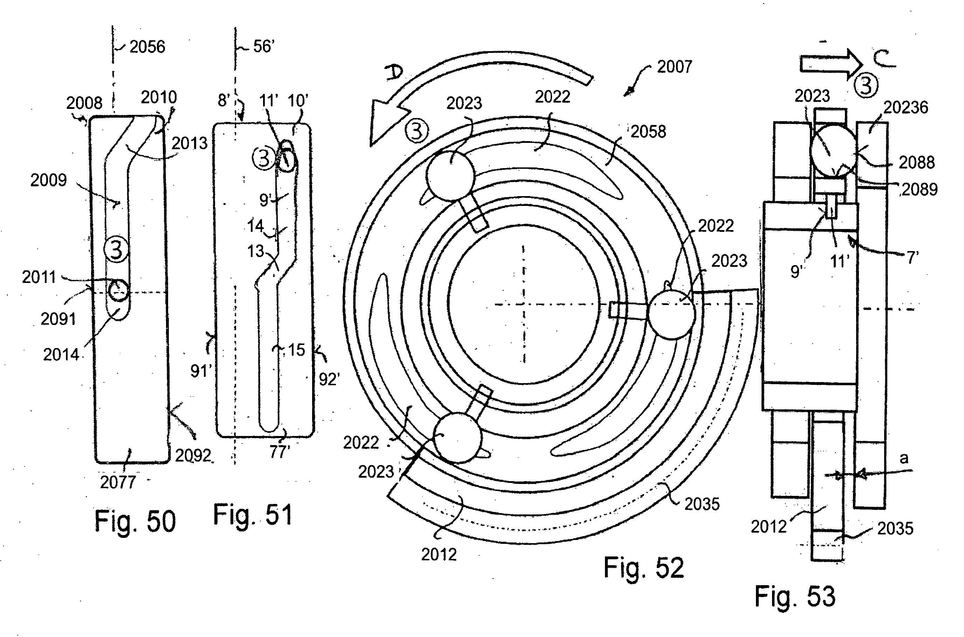

Figur 50, Figur 51, Figur 52 und Figur 53 zeigen korrespondierende Ansichten der zweiten externen Schaltmuffen-Axialbetätigungseinheit 2008 und der zweiten internen Schaltmuffen-Axialbetätigungseinheit 8' sowie der zweiten Kupplungs-Axialbetätigungseinheit 2007 in der Schaltposition "3". In dieser Schaltposition sind die externen Schaltpins 2011 bzw. 11' am Ende des gerade verlaufenden zweiten Abschnitts 14 bzw. 2014 in der zweiten internen Steuernut 9' bzw. der zweiten externen Steuernut 2009 angeordnet. Die Schaltwalze 10' ist gegenüber der Mittelstellung nach links in Pfeilrichtung C verschoben, wie Figur 18 zeigt. Der Axiallagerring ist nach rechts verschoben. Die zweite externe Schaltwalze 2010 befindet sich aufgrund der Ausgestaltung der zweiten externen Steuernut 2009 nach wie vor in der Mittelstellung gemäß Figur 42 und Figur 46.

Die Figuren 50 und 51 zeigen dabei eine Schaltposition "3" des zweiten externen Schaltpins 2011 bzw. des zweiten internen Schaltpins 11' in der zweiten externen Steuernut 2009 bzw. der zweiten internen Steuernut 9' in näherem Detail. In dieser Schaltposition hat der zweite externe Schaltpin 2011 bzw. der zweite interne Schaltpin 11' nahezu das Ende des zweiten Abschnitts 2014 bzw. 14 der zweiten externen Steuernut 2009 bzw. der zweiten internen Steuernut 9' erreicht. Im Abschnitt 2014 bzw. 14' erfolgt gegenüber der Schaltposition "2" keine weitere axiale Verschiebung der zweiten externen Schaltwalze 2010.

Wie in Figur 53 im Vergleich zu der Figur 52 zu sehen ist, sind die Betätigungskörper 2013 in der Schaltposition "3" gegenüber der Schaltposition "2" angehoben. Im Übergang von der der Schaltposition "2" zu der Schaltposition "3" beginnen die Betätigungskugeln 2023 eine Kraft auf die zweite Druckplatte 2021 der zweiten Lamellenkupplung 2016 auszuüben. Die Erhöhung der Kraft setzt dabei erst nach der Schaltposition "2" ein, wenn die Synchronisierungsphase der Innenverzahnung der zweiten internen Schaltmuffe 5' mit der Axialverzahnung 2079 des vierten Losrads 34 abgeschlossen ist.

In der Schaltposition "3" befinden sich die Betätigungskörper 2023 durch die Verdrehung des zweiten Betätigungselements 2012 in Pfeilrichtung D - siehe Fig. 52 - in einer Schaltposition, in der sie eine große Kraft auf die Druckplatte 2021 der zweiten Lamellenkupplung 2016 ausüben. Dies wird auch in Figur 53 gezeigt, in der der Abstand a zwischen dem Axiallagerring 2036 und der an dem Getriebegehäuse 1128 fixierten Rampenstruktur 2058 gegenüber der Darstellung in Figur 49 größer geworden ist.

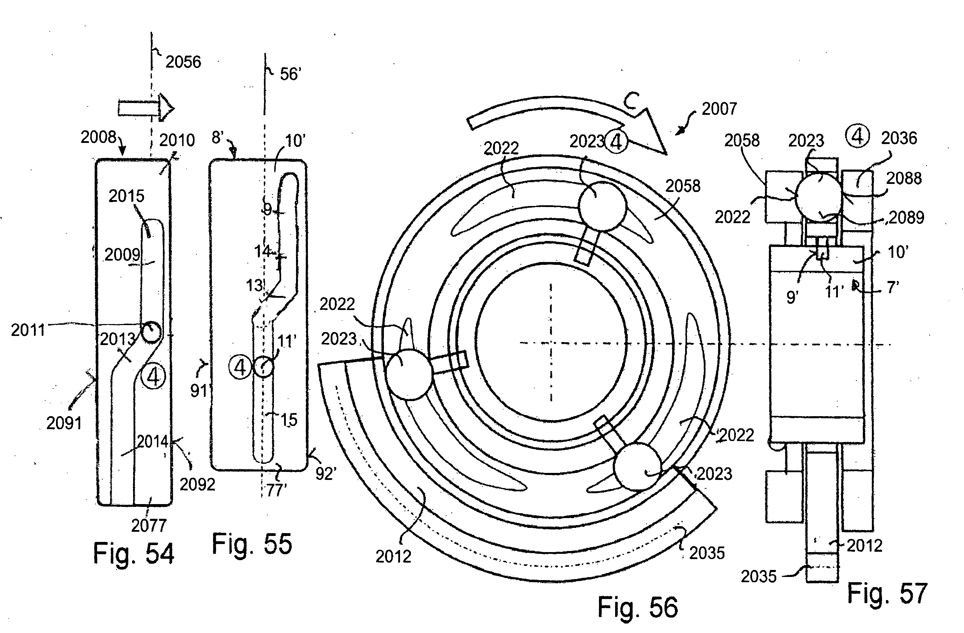

Figur 54, Figur 55, Figur 56 und Figur 57 zeigen korrespondierende Ansichten der zweiten externen Schaltmuffen-Axialbetätigungseinheit 2008 und der zweiten internen Schaltmuffen-Axialbetätigungseinheit 8' sowie der zweiten Kupplungs-Axialbetätigungseinheit 2007 in der Schaltposition "4". In dieser Schaltposition "4" befindet sich der zweite externe Schaltpin 2011 an dem Übergang von dem schrägverlaufenden ersten Abschnitt 2013 zu dem gerade verlaufenden Abschnitt 2015 der zweiten externen Steuernut 2009. Die zweite interne Schaltwalze 10' befindet sich in der Neutralstellung und ist nicht verschoben. Im Abschnitt 2013 bzw. 13 liegt gegenüber der Schaltposition "2" eine axiale Verschiebung der zweiten externen Schaltwalze 2010 nach rechts in Pfeilrichtung "D" vor.

Diese axiale Bewegung des Schaltpins 2011 der externen Schaltmuffen-Axialbetätigung wird über die Schaltgabelvorwahl-Betätigungsvorrichtung 1093 und eine hier nicht gezeigte Schaltgabel auf die vorgewählte erste externe Schaltmuffe 1005 auf der ersten Nebenwelle 62 oder auf die vorgewählte zweite externe Schaltmuffe 1505 auf der zweiten Nebenwelle 67 übertragen.

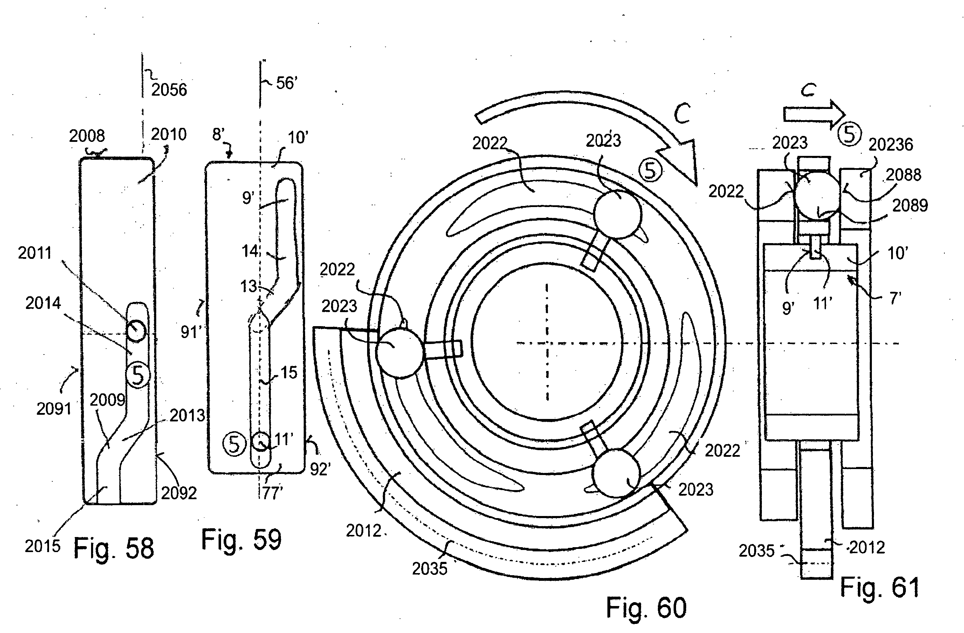

Figur 58, Figur 59, Figur 60 und Figur 61 zeigen korrespondierende Ansichten der zweiten externen Schaltmuffen-Axialbetätigungseinheit 2008 und der zweiten internen Schaltmuffen-Axialbetätigungseinheit 8' sowie der zweiten Kupplungs-Axialbetätigungseinheit 2007 in der Schaltposition "5", in welcher sich der zweite externe Schaltpin 2011 am Ende des dritten Abschnitts 2015 befindet. Die zweite interne Schaltwalze 10' ist in der Mittelstellung verblieben, da die zweite interne Steuernut 9' in der Mitte der internen Schaltwalze 10' in dem dritten Abschnitt 15 mittig und gerade verläuft. Die zweite externe Schaltwalze 2010 befindet sich in derselben axialen Stellung wie in der in Figur 54 gezeigten Schaltstellung "4". Ähnlich zur Figur 53 befinden sich in der Schaltposition "5" die Betätigungskörper 2023 durch die Verdrehung des zweiten Betätigungselements 2012 in Pfeilrichtung C in einer Schaltposition, in der sie eine große Kraft auf die Druckplatte 2021 der zweiten Lamellenkupplung 2016 ausüben. Dies wird auch in Figur 61 gezeigt, in der der Abstand zwischen dem Axiallagerring 2036 und der an dem Getriebegehäuse 1128 fixierten Rampenstruktur 2058 gegenüber der Darstellung in Figur 57 größer geworden ist.

Drehrichtungsabhängig wird entweder die innere Schaltmuffe über die innere Schaltmuffen-Axialbetätigung oder eine äußere Schaltmuffe über die äußere Schaltmuffen-Axialbetätigung betätigt. Die Betätigung der Kupplung erfolgt über die Kupplungs-Axialbetätigung drehrichtungsunabhängig.

In der in den Figuren 36 bis 61 gezeigten Schaltanordnung 101 mit der ersten Reibkupplungsbaugruppe 1006 und der zweiten Reibkupplungsbaugruppe 2006 können über die erste Kupplungs-Axialbetätigungseinheit 1007 und über die zweite Kupplungs-Axialbetätigungseinheit 2007 in Zusammenwirken mit der ersten externen Schaltmuffen-Axialbetätigungseinheit 1008, der ersten internen Schaltmuffen-Axialbetätigungseinheit 8 und mit der zweiten externen Schaltmuffen-Axialbetätigungseinheit 2008 und der zweiten internen Schaltmuffen-Axialbetätigungseinheit 8' sechs Drehmoment-Übersetzungsverhältnisse mit den Gängen a, b, c, d, e und f geschaltet werden. Dies wird nachfolgend jeweils ausgehend von der Neutralposition in den Figuren 36 und 37 beschrieben. Zum Einlegen von Gang a wird zunächst das erste Betätigungselement 1012 um die Achse 57 verschwenkt. Dazu kämmt die Antriebsverzahnung 1035 des ersten Betätigungselements 1012 mit dem ersten Zwischenrad 1030, das von dem ersten Antrieb 1025 angetrieben wird. Dabei wird die erste interne Schaltwalze 10 mit der ersten internen Schaltmuffe 5 von der neutralen Schaltposition "1" in Richtung auf die Schaltverzahnung des fünften Losrades 35 in die Schaltposition "2" verschoben.

Das fünfte Losrad 35 ist in der Schaltposition "2" mit seiner Schaltverzahnung über die erste interne Schaltmuffe 5 formschlüssig mit dem ersten inneren Lamellenträger 1018 verbunden und der Kupplungsvorgang beginnt. Dabei rollen die kugelförmigen Betätigungskörper 1023 auf der Rampenstruktur 1058 in Richtung auf die Schaltposition "3" zu und üben eine zu nehmende Anpresskraft auf die Druckplatte 1021 der ersten Lamellenkupplung 1016 aus, bis ein Reibschluss in der ersten Lamellenkupplung 1016 erreicht ist und das Einlegen des Ganges a zwischen dem fünften Losrad 35 und dem fünften Festrad 45 in der Schaltposition 3 abgeschlossen ist.

Der Kraftfluss für den Gang a verläuft nach dem Schließen der ersten Lamellenkupplung 1016 von der Eingangswelle 3 über den äußeren Lamellenträger 1017, über das äußere Lamellenpaket 1019 und das innere Lamellenpaket 1020, die erste interne Schaltmuffe 5, die Schaltverzahnung des fünften Losrads 35 und über die Schrägverzahnung zu dem fünften Festrad 45 und über die erste Nebenwelle 62 zu dem ersten Abtriebsritzel 51.

Zum Einlegen von Gang b wird zunächst das erste Betätigungselement 1012 um die Achse 57 verschwenkt.

Die axial feststehende externe und verschwenkbare erste externe Schaltwalze 1010 verschiebt den axial beweglichen ersten externen Schaltpin 1011 und somit - ausgewählt durch die erste Schaltgabelvorwahl-Betätigungsvorrichtung 1093 - mit einer hier nicht gezeigten Schaltgabel die erste externe Schaltmuffe 1005 auf der ersten Nebenwelle 62, bis die Synchronisierung abgeschlossen ist und die Axialverzahnung 1050 der ersten externen Schaltmuffe 1005 mit der Schaltverzahnung 1978 des ersten Losrads 31 auf der ersten Nebenwelle 62 in Eingriff steht.

Durch ein Weiterschwenken des ersten Betätigungselements 1012 wird die erste Lamellenkupplung 1016 geschlossen, wie obenstehend beschrieben ist.

Der Kraftfluss verläuft nach dem Schließen der ersten Lamellenkupplung 1016 von der Eingangswelle 3 über den ersten äußeren Lamellenträger 1017, über das erste äußere Lamellenpaket 1019 und das erste innere Lamellenpaket 1020 auf den ersten inneren Lamellenträger 1018 und von dort über die erste Hohlwelle 1029 auf das erste Festrad 41. Das erste Festrad 41 leitet den Kraftfluss über seine mit dem ersten Losrad 31 kämmende Schrägverzahnung zu der ersten Nebenwelle 62, die den Kraftfluss dem ersten Abtriebsritzel 51 zuführt.

Zum Einlegen von Gang c wird das erste Betätigungselement 1012 um die Achse 57 verschwenkt.

Die axial feststehende, verschwenkbare erste externe Schaltwalze 1010 verschiebt den nur axial beweglichen erste Schaltpin 1011 auf der Betätigungswelle 1095 und somit - ausgewählt durch die erste Schaltgabelvorwahl-Betätigungsvorrichtung 1093 - mit einer hier nicht gezeigten Schaltgabel die zweite externe Schaltmuffe 1505 auf der Nebenwelle 67, bis die Synchronisierung abgeschlossen ist und die Axialverzahnung der ersten externen Schaltmuffe 1505 mit der Schaltverzahnung des zweiten Losrads 32 auf der zweiten Nebenwelle 67 in Eingriff steht.

Durch Weiterschwenken des ersten Betätigungselements 1012 wird die erste Lamellenkupplung 1016 geschlossen, wie obenstehend beschrieben ist.

Der Kraftfluss verläuft nach dem Schließen der ersten Lamellenkupplung 1016 von der Eingangswelle 3 über den ersten äußeren Lamellenträger 1017, über das erste äußere Lamellenpaket 1019 und das erste innere Lamellenpaket 1020 auf den ersten inneren Lamellenträger 1018 und von dort über die erste Hohlwelle 1029 auf das zweite Festrad 42. Das zweite Festrad 42 leitet den Kraftfluss über seine mit dem zweiten Losrad 32 kämmende Schrägverzahnung zu der zweiten Nebenwelle 67, die den Kraftfluss dem zweiten Abtriebsritzel 52 zuführt.

Zum Einlegen von Gang d wird das zweite Betätigungselement 2012 um die Achse 57 verschwenkt.

Dabei wird die zweite interne Schaltwalze 10' mit der zweiten internen Schaltmuffe 5' von der in Figur 4 gezeigten neutralen Schaltposition "1" in Richtung auf die Schaltverzahnung des sechsten Losrades 36 in die Schaltposition "2" verschoben.

Das sechste Losrad 36 ist in der Schaltposition "2" mit seiner Schaltverzahnung 2079 über die zweite interne Schaltmuffe 5' formschlüssig mit dem zweiten inneren Lamellenträger 2018 verbunden und der Kupplungsvorgang beginnt. Dabei rollen die kugelförmigen Betätigungskörper 2023 auf der Rampenstruktur 2058 in Richtung auf die Schaltposition "3" zu und üben eine zunehmende Anpresskraft auf die Druckplatte 2021 der zweiten Lamellenkupplung 2016 aus, bis ein Reibschluss in der zweiten Lamellenkupplung 2016 erreicht ist und das Einlegen von Gang d zwischen dem sechsten Losrad 36 und dem sechsten Festrad 46 in der Schaltposition 3 abgeschlossen ist.

Der Kraftfluss verläuft nach dem Schließen der zweiten Lamellenkupplung 2016 von der Eingangswelle 3 über den zweiten äußeren Lamellenträger 2017, über das zweite äußere Lamellenpaket 2019 und das zweite innere Lamellenpaket 2020, die zweite interne Schaltmuffe 5', die Schaltverzahnung 2079 des sechsten Losrads 36 und über die Schrägverzahnung mit dem sechsten Festrad 46 und über die erste Nebenwelle 62 zu dem ersten Abtriebsritzel 51.

Zum Einlegen von Gang e wird das zweite Betätigungselement 2012 um die Achse 57 verschwenkt, indem der zweite Antrieb 2025 das zweite Zwischenrad 2030 antreibt, dessen Verzahnung mit der zweiten Antriebsverzahnung 2035 des zweiten Betätigungselements 2012 in Eingriff steht.

Der axial bewegliche zweite externe Schaltpin 2011 verschiebt aufgrund seiner Rotation der axial feststehenden und rotatorisch frei beweglichen zweiten externen Schaltwalze 2010 und - ausgewählt durch die erste Schaltgabelvorwahl-Betätigungsvorrichtung 1093 - mit einer hier nicht gezeigten Schaltgabel die erste externe Schaltmuffe 1005 in Pfeilrichtung C, bis die Synchronisierung abgeschlossen ist und die Axialverzahnung 1050 der ersten externen Schaltmuffe 1005 mit der Schaltverzahnung des vierten Losrads 34 in Eingriff steht.

Durch Weiterschwenken des zweiten Betätigungselements 2012 wird die zweite Lamellenkupplung 2016 geschlossen.

Der Kraftfluss verläuft nach dem Schließen der zweiten Lamellenkupplung 2016 von der Eingangswelle 3 über den ersten äußeren Lamellenträger 2017, über das erste äußere Lamellenpaket 2019 und das erste innere Lamellenpaket 2020 auf den ersten inneren Lamellenträger 2018 und von dort über die zweite Hohlwelle 2029 auf das vierte Festrad 44. Das vierte Festrad 44 leitet den Kraftfluss über seine mit dem vierten Losrad 34 kämmende Schrägverzahnung zu der ersten Nebenwelle 62, die den Kraftfluss dem ersten Abtriebsritzel 51 zuführt.

Zum Einlegen von Gang f wird das zweite Betätigungselement 2012 um die Achse 57 verschwenkt, indem der zweite Antrieb 2025 das zweite Zwischenrad 2030 antreibt, dessen Verzahnung mit der zweiten Antriebsverzahnung 2035 des zweiten Betätigungselements 2012 in Eingriff steht.

Der axial bewegliche und rotatorisch fixierte zweite externe Schaltpin 2011 verschiebt durch die Rotation der axial festen und rotatorisch beweglichen zweiten externen Schaltwalze 2010 - ausgewählt durch die erste Schaltgabelvorwahl-Betätigungsvorrichtung 1093 - mit einer hier nicht gezeigten Schaltgabel die zweite externe Schaltmuffe 1505 auf der zweiten Nebenwelle 67 in Pfeilrichtung C, bis die Synchronisierung abgeschlossen ist und die Axialverzahnung der zweiten externen Schaltmuffe 1505 auf der zweiten Nebenwelle 67 mit der Schaltverzahnung des dritten Losrads 33 in Eingriff steht.

Durch Weiterschwenken des ersten Betätigungselements 1012 wird die zweite Lamellenkupplung 2016 geschlossen.

Der Kraftfluss verläuft nach dem Schließen der zweiten Lamellenkupplung 2016 von der Eingangswelle 3 über den zweiten äußeren Lamellenträger 2017, über das zweite äußere Lamellenpaket 2019 und das zweite innere Lamellenpaket 2020 auf den zweiten inneren Lamellenträger 2018 und von dort über die zweite Hohlwelle 2029 auf das dritte Festrad 43. Das dritte Festrad 43 leitet den Kraftfluss über seine mit dem dritten Losrad 33 kämmende Schrägverzahnung zu der zweiten Nebenwelle 67, die den Kraftfluss dem zweiten Abtriebsritzel 52 zuführt.

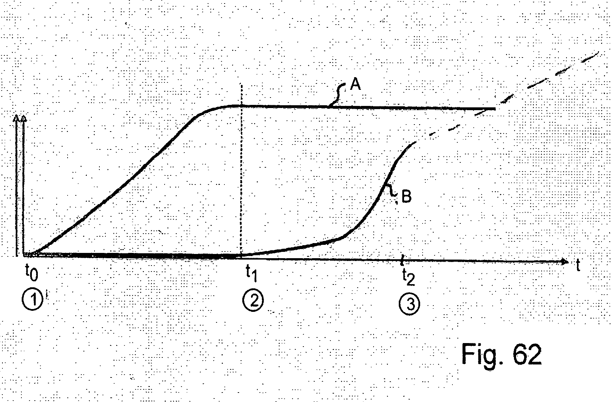

Figur 62 zeigt ein Diagramm mit dem Verlauf der Axialbewegung der zweiten internen Schaltmuffe 5', wie es die Figuren 8, 12 und 16 zeigen, im Vergleich zum Verlauf einer auf einen Betätigungskörper 2023 des zweiten Betätigungselements 2012 wirkenden Axialkraft beim Schalten eines Gangs. Der Graph A stellt den Ablauf der Axialbewegung der zweiten internen Schaltmuffe 5' dar, während der Graph B die Axialkraft auf die Betätigungskörper 2023 zeigt. In Richtung der Ordinate ist die jeweilige Kraft bzw. der jeweilige Weg aufgetragen und in Richtung der Abszisse die Zeit t.

Zum Zeitpunkt t = t₀ befindet sich der zweite interne Schaltpin 11' in der neutralen Schaltposition "1 ". Vom Zeitpunkt t₀ an nimmt die axiale Verschiebung der zweiten internen Schaltmuffe 5' aufgrund der Bewegung der zweiten Schaltwalze 10' zu, wie der Graph A zeigt. Die Axialkraft, die mittels der Betätigungskontur 2022 auf die Betätigungskugel 2023 wirkt, bleibt in diesem Zeitintervall von to bis t₁ Null, d.h. es gibt keine Krafteinwirkung auf den Betätigungskörper 2023.

Mit Erreichen des Zeitpunktes t₁ in der Schaltposition "2" endet die axiale Verschiebung der zweiten internen Schaltmuffe 5', wie es der Graph A zeigt. Die Axialkraft auf die Betätigungskörper 2023 hingegen wächst an, weil mit der Schaltposition "2" im Zeitpunkt t₁ ein Rampenbereich der Betätigungskontur 2022 erreicht wird. Die Axialkraft der Betätigungskörper 2023 auf die Druckplatte 2021 nimmt zu, bis in der Schaltposition "3" zum Zeitpunkt t₂ ein Zielwert erreicht ist.

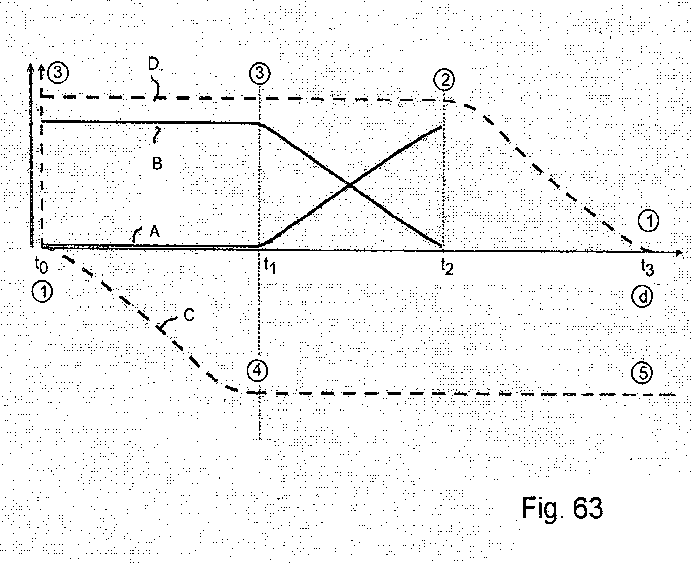

Figur 63 zeigt ein Diagramm der Drehmomentübertragung beim Lastwechsel von der ersten Reibkupplungsbaugruppe 1006 auf die zweite Reibkupplungsbaugruppe 2006 und den Verlauf des Lösens und Einlegens von Gängen "a" und "d", die der ersten und der zweiten Reibkupplungsbaugruppe 1006 bzw. 2006 zugeordnet sind. Die Drehmomentübertragung der ersten Reibkupplungsbaugruppe 2006 wird in Abhängigkeit von der Zeit t mit dem Graphen A mit durchgezogener Linie gezeigt, und die Drehmomentübertragung der zweiten Reibkupplungsbaugruppe 2006 wird in Abhängigkeit von der Zeit t mit dem Graphen B mit durchgezogener Linie gezeigt. Die Bewegung der ersten internen Schaltmuffe 5 wird in Abhängigkeit von der Zeit t mit den Graphen C mit gestrichelter Linie gezeigt, und die Bewegung der zweiten internen Schaltmuffe 5' wird in Abhängigkeit von der Zeit t mit den Graphen D mit gestrichelter Linie gezeigt.

Im Zeitpunkt to ist die erste Reibkupplungsbaugruppe 1006 gelöst d.h. nicht im Reibschluss und sie überträgt kein Drehmoment, wie der Graph A zeigt, da keine nennenswerte Kraft durch die Betätigungskörper 1023 auf die erste Druckplatte 1021 ausgeübt wird. Die erste interne Schaltwalze 10 mit der ersten internen Schaltmuffe 5 befindet sich zu diesem Zeitpunkt to in der neutralen Schaltposition "1". Der Vorgang des Einlegens eines Gangs a beginnt, wie der Graph C zeigt, und er ist zum Zeitpunkt t₁ abgeschlossen, wenn die erste interne Schaltmuffe 5 die Schaltposition "4" erreicht hat.

Zum Zeitpunkt t₀ ist die zweite Reibkupplungsbaugruppe 2006 geschlossen, und sie überträgt das volle Drehmoment, wie Graph D zeigt. Die zweite interne Schaltmuffe 5' befindet sich während des gesamten Zeitintervalls von t₀ bis t₁ in der Schaltposition "3", so dass das volle Drehmoment über das sechste Festrad 46 übertragen wird.

Im Zeitpunkt t₁ beginnt eine Verminderung der Drehmomentübertragung der zweiten Reibkupplungsbaugruppe 2006, während die Drehmomentübertragung der ersten Reibkupplungsbaugruppe 1006 bereits ansteigt, wie es die Graphen A und B im Zeitintervall zwischen t₁ und t₂ zeigen. Gleichzeitig geht die zweite interne Schaltwalze 10' mit der zweiten internen Schaltmuffe 5' von der Schaltposition "3" in die Schaltposition "2" über, allerdings ohne den Gang d auszulegen. Erst wenn die Schaltposition "2" im Zeitpunkt t₂ verlassen wird, beginnt das Auslegen des Gangs d in die Schaltposition 'T'. Dies ermöglicht ein stufenloses Schalten und Kuppeln zwischen den Gängen d und a.

Die beschriebene Schaltanordnung funktioniert grundsätzlich auch mit nur einer einzigen Nebenwelle, wenngleich hier ein Getriebe mit zwei Nebenwellen gezeigt ist.

Die Betätigungskörper 2023 in den Figuren 1 bis 26 ist radial spielfrei im Betätigungselement 2012 zu führen, um eine gute Funktion zu gewährleisten. Die kugelförmigen Betätigungskörper 2023 rollen ferner in einer umlaufenden Kontur im Axiallagerring 2036, die als Umfangsnut ausgebildet ist.

Zur rotatorischen Kopplung der Hohlwellen mit dem jeweiligen inneren Lamellenträger ist eine Axialverzahnung zu bevorzugen.

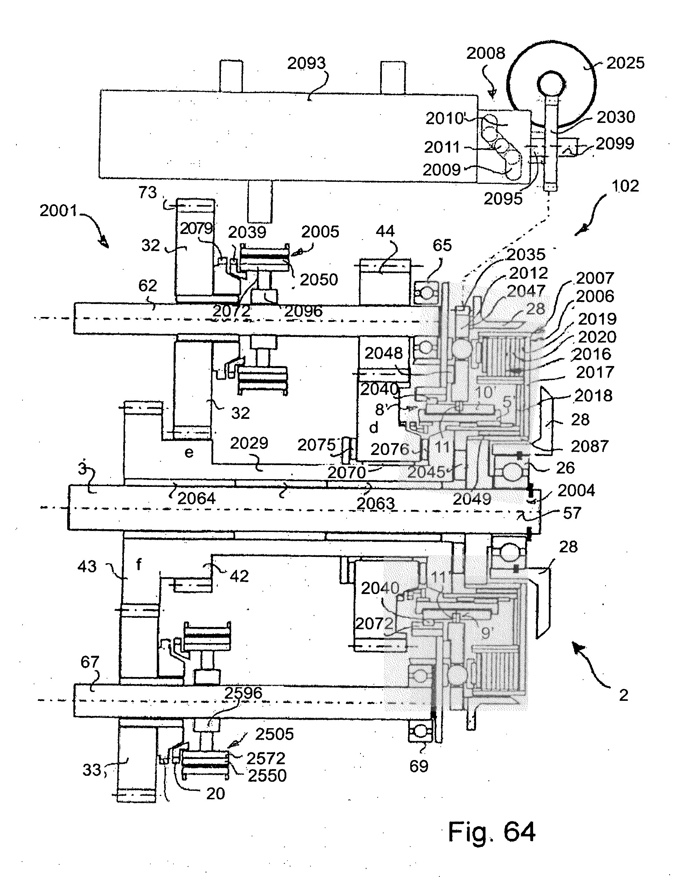

Bei dem vorstehend beschriebenen Ausführungsbeispiel ist hervorzuheben, dass die interne Schaltwalze axial fest bezüglich der Schaltmuffe angeordnet ist, aber zu dieser drehbar. Figur 64 zeigt von einer Schaltanordnung 102 eines Getriebes 2 gemäß einer zweiten Ausführungsform der Erfindung, eine zweite Kupplungs- und Synchronisierungseinricht 2001. Die Schaltanordnung 102 unterscheidet sich von der zweiten Kupplungs- und Synchronisierungseinrichtung 2001 der ersten Ausführungsform der Erfindung, wie sie in den Figuren 36 bis 61 gezeigt wird. Ein Unterschied besteht darin, dass anstelle der beiden zweiseitig wirkenden externen Schaltmuffen 1005 bzw. 1505 eine einseitig wirkende erste externe Schaltmuffe 2005 und eine einseitig wirkende zweite externe Schaltmuffe 2505 auf der ersten Nebenwelle 62 und der zweiten Nebenwelle 67 angeordnet sind.

Die einseitig wirkende erste externe Schaltmuffe 2005 und die einseitig wirkende zweite externe Schaltmuffe 2505 werden über zugehörige externe Schaltwalzen in Zusammenwirken mit Schaltgabelvorwahl-Betätigungsvorrichtungen, von denen in Figur 29 eine zweite Schaltgabelvorwahl-Betätigungsvorrichtungen 2093 gezeigt ist, betätigt.

Die weiteren gezeigten Komponenten haben gleiche Funktionen wie in den vorhergehenden Figuren 36 bis 61 und werden entsprechend mit gleichen Bezugszeichen gekennzeichnet. Die Richtung der Axialverschiebung der Schaltmuffe ist von der Räderanordnung abhängig, prinzipiell kann dies in beiden Richtungen erfolgen.

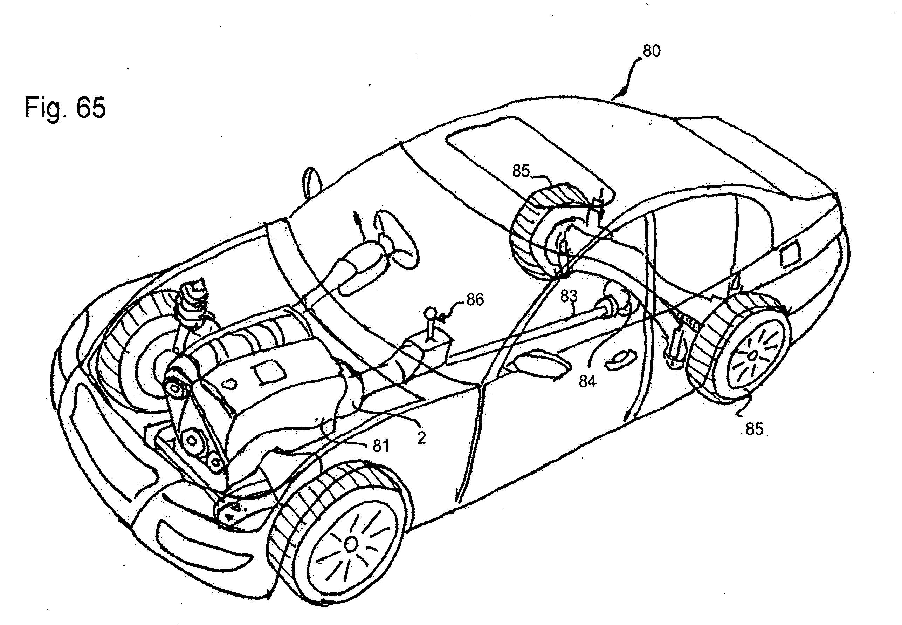

Figur 65 zeigt ein Kraftfahrzeug 80 mit einem Motorblock 81 und einem Antriebsstrang 82. Ein Schaltgetriebe 2 mit einem hier nicht gezeigten Getriebegehäuse und einer Kupplungs- und Synchronisierungseinrichtung 1 gemäß den vorhergehenden Figuren ist in einem hinteren Bereich des Motorblocks 81 angekoppelt. Der Antriebstrang 82 weist eine Kardanwelle 83 und ein Differentialgetriebe 84 zum Antrieb der hinteren Laufräder 85 auf. Ein Motordrehmoment wird mittels des Schaltgetriebes 2 mit mechanisch gekoppelter Kupplung- bund Synchronisierungseinrichtung in ein Antriebsdrehmoment übersetzt und über die Kardanwelle 83 und das Differentialgetriebe 84 den hinteren Laufrädern 85 zugeführt.

Alternativ dazu sind auch die vorderen Laufräder eines - hier nicht dargestellten - Fahrzeugs mittels eines entsprechend ausgestatteten Getriebes antreibbar, welches mit zumindest einer Schaltanordnung der zuvor beschriebenen Art ausgestattet ist. Dabei spielt es grundsätzlich keine Rolle, ob die Getriebewellen längs oder quer zur Fahrtrichtung des Fahrzeugs angeordnet sind.

## Patentansprüche

1. Schaltanordnung für ein schaltbares Getriebe (2), wobei die Schaltanordnung (1) aufweist:
eine Schaltmuffe (5, 5'), die zwischen einer ersten Stellung, in der ein erstes Losrad (31, 32, 33, 34; 35) der Schaltanordnung gegen eine Welle (3) drehbar ist, und einer zweiten Stellung bewegbar ist, in der sie das erste Losrad (31, 32, 33, 34; 35) drehfest mit der Welle (3) verbindet,
eine Reibkupplungsbaugruppe (6, 6'), die zwischen einer ersten Stellung, in der zwei Teile (19, 20) der Reibkupplungsbaugruppe (6, 6') gegeneinander drehbar sind, und einer zweiten Stellung bewegbar ist, in der die zwei Teile (19, 20) reibschlüssig verbunden sind, und
ein Betätigungselement (12), das in einem Freiheitsgrad zwischen einer Neutralstellung und einer ersten Schaltstellung über eine Zwischenstellung bewegbar ist, wobei in der Neutralstellung die Schaltmuffe (5, 5') und die Reibkupplungsbaugruppe (6, 6') jeweils in ihrer ersten Stellung sind,
in der Zwischenstellung die Schaltmuffe (5, 5') in ihrer zweiten Stellung und die Reibkupplungsbaugruppe (6, 6') in ihrer ersten Stellung ist, und
in der ersten Schaltstellung die Schaltmuffe (5, 5') und die Reibkupplungsbaugruppe (6, 6') jeweils in ihrer zweiten Stellung sind, **dadurch gekennzeichnet, dass** eine Schaltmuffen-Axialbetätigungseinheit (8, 8', 1008) eine Schaltwalze (10, 10', 2010) sowie einen in einer Steuernut (9, 2009) der Schaltwalze (10, 10', 2010) geführten Schaltpin (11, 1011) aufweist, und dass wenigstens ein Abschnitt (13, 2013) der Steuernut (9, 2009) sich schraubenlinienförmig um die Schaltwalze (10, 10', 2010) erstreckt.

2. Schaltanordnung nach Anspruch 1, bei der die Welle (3) eine Eingangswelle (3) ist und das eine Teil (19) der Reibkupplungsbaugruppe (6, 6') drehfest mit der Eingangswelle (3) verbunden ist und das andere Teil (20) der Reibkupplungsbaugruppe (6, 6') drehfest mit der Schaltmuffe (5, 5') verbunden ist.

3. Schaltanordnung nach Anspruch 1, bei der die Welle eine Nebenwelle (1062) ist und das erste Losrad (1031) mit einem Rad (1041) einer zweiten Welle (1029) kämmt, die über die Reibkupplungsbaugruppe (1006) lösbar reibschlüssig mit einer Eingangswelle (1003) verbindbar ist.

4. Schaltanordnung nach Anspruch 3, bei der die zweite Welle (1029) eine zur Eingangswelle (1003) konzentrische Hohlwelle (1029) ist.

5. Schaltanordnung nach einem der vorhergehenden Ansprüche, bei der der Schaltpin (11) fest mit dem Betätigungselement (12, 12') verbunden ist.

6. Schaltanordnung nach einem der vorhergehenden Ansprüche, bei der die Schaltmuffen-Axialbetätigungseinheit (1008) und das Betätigungselement (1012) über eine Verzahnung (1212) miteinander im Eingriff stehen.

7. Schaltanordnung nach einem der vorhergehenden Ansprüche, wobei die Schaltwalze (10, 10') relativ zur Schaltmuffe (5, 5') axial fest und in Umfangsrichtung gegenüber der Schaltmuffe (5, 5') drehbar ist.

8. Schaltanordnung nach einem der vorhergehenden Ansprüche, wobei die Schaltwalze (10, 10') gehäuseseitig drehfest fixiert und gleichzeitig axial beweglich ist.

9. Schaltanordnung nach einem der vorhergehenden Ansprüche, wobei das Betätigungselement (12, 12', 1012) aus der Neutralstellung ferner in eine zweite Schaltstellung bewegbar ist, und die Schaltmuffe (5, 5', 1005) zwischen der ersten Stellung und einer dritten Stellung axial bewegbar ist, wobei in der dritten Stellung ein zweites Losrad (32, 1032) formschlüssig mit der Schaltmuffe (5, 5', 1005) verbunden ist.

10. Schaltanordnung nach einem der Ansprüche 1 bis 8, wobei das Betätigungselement (1012) aus der Neutralstellung ferner in eine zweite Schaltstellung bewegbar ist, und eine zweite Schaltmuffe (1005) an das Betätigungselement (1012) gekoppelt ist, um, wenn das Betätigungselement (1012) in der Neutralstellung ist, eine erste Stellung einzunehmen, in der ein zweites Losrad (31) gegen eine Welle (62) drehbar ist, und, wenn es in der zweiten Schaltstellung ist, eine zweite Stellung einzunehmen, in der sie das zweite Losrad (31) drehfest mit der Welle (62) verbindet.

11. Schaltanordnung nach Anspruch 10, bei der die Welle (62), die das zweite Losrad (31) trägt, ferner ein Rad (45) trägt, das mit dem ersten Losrad (35) kämmt.

12. Schaltanordnung nach einem der vorhergehenden Ansprüche, wobei die Reibkupplungsbaugruppe (6, 6', 1006) eine Lamellenkupplung (16, 16', 1016) umfasst, das eine Teil der Reibkupplungsbaugruppe (6, 6', 1016) ein Paket (19, 1019) von in einem ersten Lamellenträger (17, 1017) aufgenommenen ersten Lamellen und das andere Teil ein Paket (20, 1020) von in einem mit der Schaltmuffe (5, 5', 1005) in Verbindung stehenden zweiten Lamellenträger (18, 1018) aufgenommenen zweiten Lamellen umfasst.

13. Schaltanordnung nach einem der vorhergehenden Ansprüche, wobei der Freiheitsgrad des Betätigungselements (12, 12', 2012) ein Drehfreiheitsgrad ist, und ein Betätigungskörper (23, 2023) mit dem Betätigungselement (12, 12', 2012) drehbar und in Kontakt mit einer Betätigungskontur (22, 2022) gekoppelt an die Drehung axial bewegbar ist, um die Bewegung der Reibkupplungsbaugruppe (6, 6', 2006) zwischen der ersten und der zweiten Stellung anzutreiben.

14. Schaltanordnung nach Anspruch 13, wobei die Schaltanordnung mindestens zwei, vorzugsweise drei Betätigungskörper (23, 2023) aufweist.

15. Schaltanordnung nach Anspruch 13 oder 14, wobei die Betätigungskontur (22, 2022) eine Rampe umfasst, entlang derer der Betätigungskörper (23, 2023) bewegbar ist.

16. Schaltanordnung nach einem der Ansprüche 13 bis 15, soweit auf Anspruch 9 rückbezogen, wobei die Betätigungskontur (22, 2022) geformt ist, um eine Bewegung der Reibkupplungsbaugruppe (6, 6', 2006) von der ersten in die zweite Stellung auch dann anzutreiben, wenn das Betätigungselement (12, 12', 2012) aus der Neutralstellung in die zweite Schaltstellung bewegt wird.

17. Schaltanordnung (1) nach einem der vorhergehenden Ansprüche mit einem Stellglied (25, 25', 2025) zum Antreiben der Bewegung des Betätigungselements (12, 2012) in dem einem Freiheitsgrad.

18. Getriebe mit einer ersten und einer zweiten Schaltanordnung (101, 102, 103), jeweils gemäß einem der vorhergehenden Ansprüche, wobei die Welle (3) beiden Schaltanordnungen (101, 102, 103) gemeinsam ist, und wobei eine Nebenwelle (62) des Getriebes (2) ferner
- ein erstes Festrad (41), das mit einem ersten Losrad (31) der ersten Schaltanordnung (1) in Eingriff steht, und
- ein zweites Festrad (43), das mit einem zweiten Losrad (33) der zweiten Schaltanordnung (1') in Eingriff steht,
trägt.

19. Getriebe mit einer ersten und einer zweiten Schaltanordnung (101, 102), jeweils gemäß einem der Ansprüche 1 bis 17, wobei die Welle (1162) beiden Schaltanordnungen (101, 102) gemeinsam ist, eine Eingangswelle (1003) zwei zu ihr konzentrische Hohlwellen (1029, 2029) trägt und die ersten Losräder (1031, 2033) der beiden Schaltanordnungen (101, 102) mit jeweils einem Rad (1041, 2043) einer der Hohlwellen (1029, 2029) kämmen.

## Claims

1. A shifting arrangement for a shiftable transmission (2), wherein the shifting arrangement (1) comprises:
a selector sleeve (5, 5') which is movable between a first position in which a first idler gear (31, 32, 33, 34; 35) of the shifting arrangement is rotatable relative to a shaft (3) and a second position in which it connects the first idler gear (31, 32, 33, 34; 35) in a torsion-proof manner to the shaft (3),
a friction-clutch assembly (6, 6') which is movable between a first position in which two parts (19, 20) of the frictional-clutch assembly (6, 6') are rotatable relative to one another and a second position in which the two parts (19, 20) are connected in a frictionally engaged manner, and
an actuating element (12) which is movable between a neutral position and a first shifting position through an intermediate position in one degree of freedom,
wherein in the neutral position the selector sleeve (5, 5') and the friction-clutch assembly (6, 6') are in their respective first position,
in the intermediate position the selector sleeve (5, 5') is in its second position and the friction-clutch assembly (6, 6') in its first position, and
in the first shifting position the selector sleeve (5, 5') and the friction-clutch assembly (6, 6') are in their respective second position, **characterized in that** a selector-sleeve axial actuating unit (8, 8', 1008) comprises a selector drum (10, 10', 2010) and a shifting pin (11, 1011) guided in a control groove (9, 2009) of the selector drum (10, 10', 2010), and at least one section (13, 2013) of the control groove (9, 2009) extends helically about the selector drum (10, 10', 2010).

2. A shifting arrangement according to claim 1, wherein the shaft (3) is an input shaft (3) and the one part (19) of the friction-clutch assembly (6, 6') is connected in a torsion-proof manner to the input shaft (3) and the other part (20) of the frictional 11 clutch assembly (6, 6') is connected in a torsion-proof manner to the selector sleeve (5, 5').

3. A shifting arrangement according to claim 1, wherein the shaft is an auxiliary shaft (1062) and the first idler gear (1031) meshes with a gear (1041) of a second shaft (1029), which can be connected via the friction-clutch assembly (1006) in a detachably frictionally engaged manner to an input shaft (1003).

4. A shifting arrangement according to claim 3, wherein the second shaft (1029) is a hollow shaft (1029) which is concentric in relation to the input shaft (1003).

5. A shifting arrangement according to one of the preceding claims, wherein the shifting pin (11) is fixedly connected to the actuating element (12, 12').

6. A shifting arrangement according to one of the preceding claims, wherein the selector-sleeve axial actuating unit (1008) and the actuating element (1012) are in engagement with each other via a toothing (1212).

7. A shifting arrangement according to one of the preceding claims, wherein the selector drum (10, 10') is axially fixed relative to the selector sleeve (5, 5') and is rotatable in the circumferential direction relative to the selector sleeve (5, 5').

8. A shifting arrangement according to one of the preceding claims, wherein the selector drum (10, 10') is rotationally fixed on the housing side and is at the same time axially movable.

9. A shifting arrangement according to one of the preceding claims, wherein the actuating element (12, 12', 1012) is movable into a second shifting position from the neutral position, and the selector sleeve (5, 5', 1005) is axially movable between the first position and a third position, wherein a second idler gear (32, 1032) is connected in the third position in an interlocking manner to the selector sleeve (5, 5', 1005).

10. A shifting arrangement according to one of the claims 1 to 8 wherein the actuating element (1012) is further movable into a second shifting position from the neutral position, and a second selector sleeve (1005) is coupled to the actuating element (1012) in order to assume a first position in which a second idler gear (31) is rotatable relative to a shaft (62) when the actuating element (1012) is in the neutral position, and to assume a second position when it is in the second shifting position in which it connects the second idler gear (31) in a torsion-proof manner to the shaft (62).

11. A shifting arrangement according to claim 10, wherein the shaft (62) which carries the second idler gear (31) further carries a gear (45) which meshes with the first idler gear (35).

12. A shifting arrangement according to one of the preceding claims, wherein the friction-clutch assembly (6, 6', 1006) comprises a disc clutch (16, 16', 1016), which one part of the frictional-clutch assembly (6, 6', 1006) comprises a stack (19, 1019) of the first discs accommodated in a first disc carrier (17, 1017) and the other part comprises a stack (20, 1020) of second discs accommodated in a second disc carrier (18, 1018) which is in connection with the selector sleeve (5, 5', 1005).

13. A shifting arrangement according to one of the preceding claims, wherein the degree of freedom of the actuating element (12, 12', 2012) is a rotary degree of freedom, and an actuating body (23, 2023) is rotatable with the actuating element (12, 12', 2012) and in contact with an actuating contour (22, 2022) which is axially movable coupled to the rotation in order to drive the movement of the friction-clutch assembly (6, 6', 2006) between the first and the second position.

14. A shifting arrangement according to claim 13, wherein the shifting arrangement comprises at least two, preferably three actuating bodies (23, 2023).

15. A shifting arrangement according to claim 13 or 14, wherein the actuating contour (22, 2022) comprises a ramp, along which the actuating body (23, 2023) is movable.

16. A shifting arrangement according to one of the claims 13 to 15, in so far as it refers back to claim 9, wherein the actuating contour (22, 2022) is shaped in order to drive a movement of the friction-clutch assembly (6, 6', 2006) from the first of the second position also when the actuating element (12, 12', 2012) is moved from the neutral position to the second shifting position.

17. A shifting arrangement (1) according to one of the preceding claims, comprising an actuator (25, 25', 2025) for driving the movement of the actuating element (12, 2012) in the one degree of freedom.

18. A transmission with a first and a second shifting arrangement (101, 102, 103), each according to one of the preceding claims, wherein the shaft (3) is common to both shifting arrangements (101, 102, 103), and wherein an auxiliary shaft (62) of the transmission (2) further carries
- a first fixed gear (41) which is in engagement with a first idler gear (31) of the first shifting arrangement (1), and
- a second fixed gear (43) which is in engagement with a second idler gear (33) of the second shifting arrangement (1').

19. A transmission with a first and a second shifting arrangement (101, 102), each according to one of the claims 1 to 17, wherein the shaft (1162) is common to both shifting arrangements (101, 102), an input shaft (1003) carries two hollow shafts (1029, 2029) which are concentric thereto, and the first idler gears (1031, 2033) of the two shifting arrangements (101, 102) mesh with one gear (1041, 2043) each of one of the hollow shafts (1029, 2029).

## Revendications

1. Dispositif de changement de rapport pour une boîte de vitesses débrayable (2), dans lequel le dispositif de changement de rapport (1) présente :
un baladeur (5, 5') qui peut se déplacer entre une première position dans laquelle un premier pignon fou (31, 32, 33, 34 ; 35) du dispositif de changement de rapport peut être tourné contre un arbre (3) et une deuxième position dans laquelle il relie le premier pignon fou (31, 32, 33, 34 ; 35) à l'arbre (3) de manière solidaire en rotation,
un sous-ensemble d'accouplement à friction (6,6') qui peut être déplacé entre une première position dans laquelle deux parties (19, 20) du sous-ensemble d'accouplement à friction (6, 6') peuvent tourner l'une vers l'autre et une deuxième position dans laquelle les deux parties (19, 20) sont reliées par friction, et
un élément d'actionnement (12) qui peut être déplacé selon un degré de liberté entre une position au point mort et une première position de rapport en passant par une position intermédiaire, le baladeur (5, 5') et le sous-ensemble d'accouplement à friction (6, 6') se trouvant dans leur première position dans la position au point mort,
le baladeur (5, 5') étant dans sa deuxième position et le sous-ensemble d'accouplement à friction (6, 6') dans sa première position dans la position intermédiaire et
le baladeur (5, 5') et le sous-ensemble d'accouplement à friction (6, 6') se trouvant dans leur deuxième position dans la première position de rapport,
**caractérisé en ce qu'**une unité d'actionnement axial du baladeur (8, 8', 1008) comprend un tambour de changement de rapport (10, 10', 2010) ainsi qu'une goupille de changement de rapport (11, 1011) guidée dans une gorge de commande (9, 2009) du tambour de changement de rapport (10, 10', 2010), et **en ce qu'**au moins une partie (13, 2013) de la gorge de commande (9, 2009) s'étend en spirale autour du tambour de changement de rapport (10, 10', 2010).

2. Dispositif de changement de rapport selon la revendication 1, dans lequel l'arbre (3) est un arbre d'entrée (3) et une partie (19) du sous-ensemble d'accouplement à friction (6, 6') est reliée de façon solidaire en rotation à l'arbre d'entrée (3) et l'autre partie (20) du sous-ensemble d'accouplement à friction (6, 6') est reliée de façon solidaire en rotation au baladeur (5, 5').

3. Dispositif de changement de rapport selon la revendication 1, dans lequel l'arbre est un arbre secondaire (1062) et le premier pignon fou (1031) engrène avec une roue (1041) d'un deuxième arbre (1029) qui peut être relié par friction de manière amovible avec un arbre d'entrée (1003) par l'intermédiaire du sous-ensemble d'accouplement à friction (1006).

4. Dispositif de changement de rapport selon la revendication 3, dans lequel le deuxième arbre (1029) est un arbre creux (1029) concentrique de l'arbre d'entrée (1003).

5. Dispositif de changement de rapport selon l'une des revendications précédentes, dans lequel la goupille de changement de rapport (11) est reliée à demeure à l'élément d'actionnement (12, 12').

6. Dispositif de changement de rapport selon l'une des revendications précédentes, dans lequel l'unité d'actionnement axial du baladeur (1008) et l'élément d'actionnement (1012) sont en prise l'une avec l'autre par l'intermédiaire d'une denture (1212).

7. Dispositif de changement de rapport selon l'une des revendications précédentes, dans lequel le tambour de changement de rapport (10, 10') est fixe dans le sens axial par rapport au baladeur (5, 5') et peut tourner dans le sens de la circonférence par rapport au baladeur (5, 5').

8. Dispositif de changement de rapport selon l'une des revendications précédentes, dans lequel le tambour de changement de rapport (10, 10') est fixé de façon solidaire en rotation du côté du carter tout en étant mobile dans le sens axial.

9. Dispositif de changement de rapport selon l'une des revendications précédentes, dans lequel l'élément d'actionnement (12, 12', 1012) peut en outre être éloigné de la position de point mort vers une deuxième position de rapport et le baladeur (5, 5', 1005) est mobile dans le sens axial entre la première position et une troisième position, un deuxième pignon fou (32, 1032) étant relié en correspondance de forme au baladeur (5, 5', 1005) dans la troisième position.

10. Dispositif de changement de rapport selon l'une des revendications 1 à 8, dans lequel l'élément d'actionnement (1012) peut être déplacé plus loin de la position de point mort vers une deuxième position de rapport, et un deuxième baladeur (1005) est couplé à l'élément d'actionnement (1012) afin de prendre, quand l'élément d'actionnement (1012) est dans la position de point mort, une première position dans laquelle un deuxième pignon fou (31) peut être tourné vers l'arbre (62) et, quand il est dans la deuxième position de rapport, une deuxième position dans laquelle il relie le pignon fou (31) à l'arbre (62) de façon solidaire en rotation.

11. Dispositif de changement de rapport selon la revendication 10, dans lequel l'arbre (62) qui porte le deuxième pignon fou (31) porte en outre une roue (45) qui engrène avec le premier pignon fou (35).

12. Dispositif de changement de rapport selon l'une des revendications précédentes, dans lequel le sous-ensemble d'accouplement à friction (6,6', 1006) comprend un accouplement à lamelles (16, 16', 1016), la partie du sous-ensemble d'accouplement à friction (6, 6', 1016) comprend un paquet (19, 1019) de premières lamelles logées dans un premier support de lamelles (17, 1017) et l'autre partie un paquet (20, 1020) de deuxièmes lamelles logées dans un support de lamelles (18, 1018) relié au baladeur (5, 5', 1005).

13. Dispositif de changement de rapport selon l'une des revendications précédentes, dans lequel le degré de liberté de l'élément d'actionnement (12, 12', 2012) est un degré de liberté en rotation et un organe d'actionnement (23, 2023) peut tourner avec l'élément d'actionnement (12, 12', 2012) et se déplacer dans le sens axial en même temps que la rotation en étant couplé en contact avec un contour d'actionnement (22, 2022) afin d'entraîner le mouvement du sous-ensemble d'accouplement à friction (6, 6', 2006) entre la première position et la deuxième.

14. Dispositif de changement de rapport selon la revendication 13, dans lequel le dispositif de changement de rapport présente au moins deux organes d'actionnement (23, 2023), de préférence trois.

15. Dispositif de changement de rapport selon la revendication 13 ou 14, dans lequel le contour d'actionnement (22, 2022) comprend une rampe le long de laquelle l'organe d'actionnement (23, 2023) peut être déplacé.

16. Dispositif de changement de rapport selon l'une des revendications 13 à 15, en relation avec la revendication 9, dans lequel le contour d'actionnement (22, 2022) est conformé afin d'entraîner un mouvement du sous-ensemble d'accouplement à friction (6, 6', 2006) de la première position à la deuxième même quand l'élément d'actionnement (12, 12', 2012) est déplacé de la position de point mort à la deuxième position de rapport.

17. Dispositif de changement de rapport (1) selon l'une des revendications précédentes avec un organe de réglage (25, 25', 2025) pour entraîner le mouvement de l'élément d'actionnement (12, 2012) dans le degré de liberté.

18. Boîte de vitesses avec un premier dispositif de changement de rapport et un deuxième (101, 102, 103), selon l'une des revendications précédentes, dans lequel l'arbre (3) est commun aux deux dispositifs de changement de rapport (101, 102, 103), et dans lequel un arbre secondaire (62) de la boîte de vitesses (2) porte en outre
- une première roue fixe (41) qui est en prise avec un premier pignon fou (31) du premier dispositif de changement de rapport (1) et
- une deuxième roue fixe (43) qui est en prise avec un deuxième pignon fou (33) du deuxième dispositif de changement de rapport (1').

19. Boîte de vitesses avec un premier dispositif de changement de rapport et un deuxième (101, 102) selon l'une des revendications 1 à 7, dans lequel l'arbre (1162) est commun aux deux dispositifs de changement de rapport (101, 102), un arbre d'entrée (1003) porte deux arbres creux (1029, 2029) qui lui sont concentriques et les premiers pignons fous (1031, 2033) des deux dispositifs de changement de rapport (101, 102) engrènent chacun avec une roue (1041, 2043) de l'un des arbres creux (1029, 2029).
